(19) Europäisches Patentamt
European Patent Office
Office européen des brevets

(11) Veröffentlichungsnummer: **0 438 375 B1**

# (12) EUROPÄISCHE PATENTSCHRIFT

(45) Veröffentlichungstag der Patentschrift: **27.12.95**

(51) Int. Cl.6: **C07F 9/40**, C07F 9/6518, C07F 9/6539, C07F 9/6541, C07F 9/6571, C07F 9/44

(21) Anmeldenummer: **91810008.2**

(22) Anmeldetag: **09.01.91**

## (54) Phoshponsäure- und Thionophosphonsäure-Derivate

(30) Priorität: **18.01.90 CH 162/90**

(43) Veröffentlichungstag der Anmeldung:
**24.07.91 Patentblatt 91/30**

(45) Bekanntmachung des Hinweises auf die Patenterteilung:
**27.12.95 Patentblatt 95/52**

(84) Benannte Vertragsstaaten:
**DE FR GB IT**

(56) Entgegenhaltungen:
**EP-A- 0 100 718**
**EP-A- 0 328 488**
**GB-A- 967 627**

**MONATSHEFTE FÜR CHEMIE, Band 111, 1980, Seiten 1015-1023, Springer-Verlag; F. HAMMERSCHMIDT et al.: "Neuartige synthetische Aspekte der Phosphonat-Phosphat- Umlagerung, 2. Mitt."**

(73) Patentinhaber: **CIBA-GEIGY AG**
**Klybeckstrasse 141**
**CH-4002 Basel (CH)**

(72) Erfinder: **Wirth, Hermann O., Dr.**
**Lessingstrasse 24**
**W-6140 Bensheim 3 (DE)**
Erfinder: **Friedrich, Hans-Helmut**
**Am Rauhenstein 8**
**W-6147 Lautertal 2 (DE)**
Erfinder: **Gröninger, Kay Stefan, Dr.**
**Friedrichstrasse 38**
**W-6100 Darmstadt (DE)**

EP 0 438 375 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Verbindungen aus der Reihe der Phosphonsäuren und Thionophosphonsäure-Derivate, neue Zusammensetzungen, enthaltend diese Phosphonsäuren und Thionophosphonsäure-Derivate, neue Herstellungsverfahren, sowie die Verwendung der schwefelhaltigen Phosphonsäuren und Thionophosphonsäure-Derivate in organischen Materialien, die dem chemischen, oxidativen oder actinischen Abbau unterworfen sind.

Aus S. Z. Ivin und V.K. Promonenkov, Za. Obshch. Khim. 37(2), 489-92 (1967) ist beispielsweise die Verbindung der Formel $EtSCH_2CH(OH)PO(OEt)_2$, hergestellt aus einer molaren Mischung von $EtSCH_2CHO$ und $(EtO)_2PHO$ durch Behandlung mit EtONa/EtOH, bekannt geworden. Die Verbindung soll eine insektizide Wirkung auf Fliegen aufweisen.

Ein Verfahren zur Herstellung von phosphorhaltigen Reaktionsprodukten, die als Schmierstoff-Additive eingesetzt werden können, ist aus der US 4,186,157 bekannt geworden.

F. Hammerschmidt und E. Zbiral beschreiben in den Monatsheftenfür Chemie **111**, 1015-23 (1980) die Verbindung Ph-C(OH) $(CH_2SCH_3)$-$PO(OC_2H_5)_2$ [Ph = Phenyl, S.1018, Formel 6:

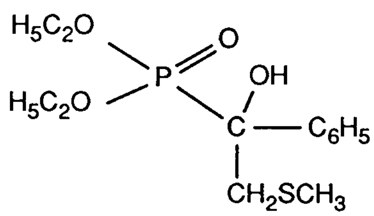

].

In EP 0 328 488 werden Dithiophosphate als Schmierstoffadditive beschrieben, welche der Strukturformel

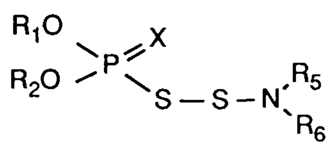

entsprechen. Dabei sind $R_1$ und $R_2$ im wesentlichen Kohlenwasserstoffreste und $R_5$ und $R_6$ Alkylreste.

Es wurden nun neue Verbindungen, ein neues Verfahren zu deren Herstellung, neue Zusammensetzungen und neue Verwendungen gefunden.

Die erfindungsgemässen Verbindungen weisen die allgemeine Formel I auf

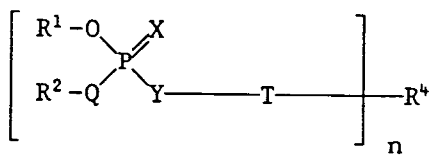

(I) ,

wobei n = 1, 2 oder 3 ist und worin

X Sauerstoff oder Schwefel darstellt, T die Bedeutung von -S-, -S-S-, -S-S-S-, -S-S-S-S-, -S-S-S-S-S-,

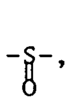 , 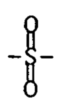 oder 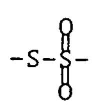

hat und

Y die Bedeutung von

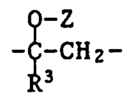

hat,
wobei
Z die Bedeutung von -H, $-COR^{13}$, $-COOR^{13}$ oder $-CONHR^{13}$ hat, und
Q die Bedeutung von Sauerstoff oder $-NR^{o}-$ hat, und
$R^1$, $R^2$, $R^o$ und $R^{13}$ gleich oder verschieden sind und eine Alkylgruppe mit 1 bis 18 C-Atomen, eine Alkenylgruppe mit 2 bis 18 C-Atomen, eine Phenyl-oder Naphthylgruppe, eine mit wenigstens einer $C_1$-$C_4$-Alkylgruppe substituierte Phenyl- oder Naphthylgruppe, eine Phenylalkylgruppe mit 7 bis 9 C-Atomen, eine Cycloalkylgruppe mit 5 bis 12 Ring-C-Atomen oder eine Cycloalkylgruppe mit 5 bis 12 Ring-C-Atomen, die mit wenigstens einer Alkylgruppe mit 1 bis 4 C-Atomen substituiert ist, darstellen, oder $R^o$ -H ist, oder
$R^1$ und $R^2$ zusammen eine geradkettige Alkylengruppe mit 2 bis 5 C-Atomen, eine geradkettige Alkylengruppe mit 2 bis 5 C-Atomen, die durch wenigstens eine Alkylgruppe mit 1 bis 8 C-Atomen oder durch wenigstens eine Gruppe $-CH_2-O-C_1-C_{12}$-Alkyl oder $-CH_2-S-C_1-C_{12}$-Alkyl substituiert ist, oder
$R^1$ und $R^2$ zusammen eine Gruppe der Formel

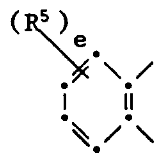

,

wobei $R^5$ eine Alkylgruppe mit 1 bis 4 C-Atomen und e eine Zahl von 0, 1 oder 2 darstellt, oder
$R^1$ und $R^2$ zusammen eine Gruppe der Formel

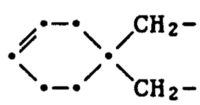

darstellen,
$R^3$ die Bedeutung von -H, von Alkyl mit 1 bis 4 C-Atomen, von Phenyl, von $-CH_2-S-R^{4\prime}$, wobei $R^{4\prime}$ nachstehende Bedeutung hat, von Phenyl oder Phenyl, substituiert mit mindestens einer Alkylgruppe mit 1 bis 4 C-Atomen, hat, und,
wenn n = 1 ist,
$R^4$ die Bedeutung von $R^{4\prime}$ hat, wobei
$R^{4\prime}$ -H, eine Alkylgruppe mit 1 bis 18 C-Atomen, eine Alkenylgruppe mit 2-18 C-Atomen, eine Phenyl- oder Naphthylgruppe, eine mit wenigstens einer $C_1$-$C_9$-Alkylgruppe substituierte Phenyl- oder Naphthylgruppe, eine Phenylalkylgruppe mit 7 bis 9 C-Atomen, Pinan-10-yl, eine Alkylgruppe mit 1 bis 18 C-Atomen, die mit wenigstens einer OH-Gruppe substituiert ist, eine Alkylgruppe mit 2 bis 18 C-Atomen, die von wenigstens einem -S- oder -O- unterbrochen ist, eine Alkylgruppe mit 3 bis 18 C-Atomen, die mit wenigstens einer OH-Gruppe substituiert und von wenigstens einem -S- oder -O- unterbrochen ist, eine Gruppe der Formel $-R^6-COOR^7$, wobei $R^6$ eine Alkylengruppe mit 1 bis 6 C-Atomen und $R^7$ eine Alkylgruppe mit 1 bis 12 C-Atomen darstellt; eine Cycloalkylgruppe mit 5 bis 12 Ring-C-Atomen, eine Cycloalkylgruppe mit 5 bis 12 Ring-C-Atomen, die mit wenigstens einer Alkylgruppe mit 1 bis 4 C-Atomen substituiert ist oder eine Cycloalkylgruppe mit 5 bis 12 Ring-C-Atomen, die durch mindestens ein -O-oder -S- unterbrochen ist oder eine Cycloalkylgruppe mit 5 bis 12 Ring-C-Atomen, die mit wenigstens einer Alkylgruppe mit 1 bis 4 C-Atomen substituiert ist und die durch mindestens ein -O- oder -S- unterbrochen ist, oder
$R^{4\prime}$ eine Gruppe der Formel

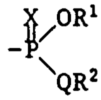 , 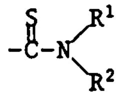 , 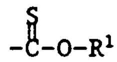 oder 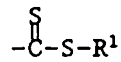 ,

worin X Sauerstoff oder Schwefel bedeutet und Q, $R^1$ und $R^2$ die genannte Bedeutung haben, darstellt, oder $R^{4'}$ bedeutet einen Heterocyclus mit 5 bis 6 Ring-Gliedern mit 1 bis 4 Gliedern aus der Reihe von -NH-,

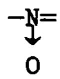,

-N= oder -N($C_1$-$C_4$-Alkyl)- oder eines Heterocyclus mit 5 bis 6 Ring-Gliedern mit einem oder zwei Gliedern aus der Reihe von -NH-, -N=,

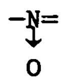

oder -N($C_1$-$C_4$-Alkyl)- und einem weiteren Heteroatom aus der Reihe von O oder S, oder der genannten Heterocyclen, die mit einem Benzolrest anelliert sind, oder der genannten Heterocyclen, die an einem oder zwei der C-Atome mit =S und/oder $C_1$-$C_4$-Alkyl substituiert sind, oder
$R^{4'}$ hat die Bedeutung von

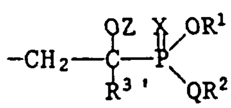 oder von 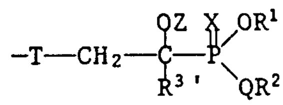

wobei T und Z die angegebenen Bedeutungen haben, X Sauerstoff oder Schwefel bedeutet, $R^{3'}$ -H, Alkyl mit 1 bis 4 C-Atomen, Phenyl oder Phenyl substituiert mit mindestens einer Alkylgruppe mit 1 bis 9 C-Atomen ist, und Q, $R^1$ und $R^2$ die genannte Bedeutung haben, oder $R^4$ die Bedeutung von

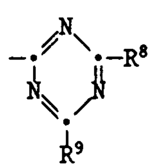

hat, wobei
$R^8$ und $R^9$, unabhängig voneinander, $C_1$-$C_{18}$-Alkyl, Phenyl, mono-, di- oder tri-$C_1$-$C_4$-alkylsubstituiertes Phenyl, eine Gruppe -$OR^{10}$, -$SR^{10}$ oder bedeuten, wobei $R^{10}$ $C_1$-$C_{18}$-Alkyl, $C_5$-$C_{12}$-Cycloalkyl, mono-,

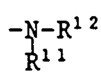

di- oder tri-$C_1$-$C_4$-alkylsubstituiertes $C_5$-$C_{12}$-Cycloalkyl, $C_3$-$C_6$-Alkenyl, Phenyl, mono- di- oder tri-$C_1$-$C_9$-alkylsubstituiertes Phenyl, $C_7$-$C_9$-Phenylalkyl oder am Phenyl mono-, di- oder tri-$C_1$-$C_4$-alkylsubstituiertes $C_7$-$C_9$-Phenylalkyl bedeutet, und $R^{11}$ und $R^{12}$, die gleich oder verschieden sind, bedeuten -H, $C_1$-$C_{18}$-Alkyl, $C_5$-$C_{12}$-Cycloalkyl, mono-, di- oder tri-$C_1$-$C_4$-alkylsubstituiertes $C_5$-$C_{12}$-Cycloalkyl, $C_3$-$C_6$-Alkenyl, $C_7$-$C_9$-Phenylalkyl, am Phenyl mono-, di- oder tri-$C_1$-$C_4$-alkylsubstituiertes $C_7$-$C_9$-Phenylalkyl, $C_2$-$C_4$-Alkyl, das durch -OH, durch $C_1$-$C_8$-Alkoxy oder durch Di-($C_1$-$C_4$-alkyl)amino substituiert ist oder $R^{11}$ und $R^{12}$ bedeuten, zusammen mit dem sie verknüpfenden Stickstoffatom, einen 5- bis 7-gliedrigen Heterocyclus, oder,

wenn n = 2 ist, bedeutet
$R^4$ geradkettiges Alkylen mit 1 bis 12 C-Atomen oder Alkenylen mit 2 bis 10 C-Atomen oder geradkettiges Alkylen mit 1 bis 10 C-Atomen, das mit wenigstens einer Alkylgruppe mit 1 bis 4 C-Atomen substituiert ist, oder geradkettiges Alkylen mit 2 bis 10 C-Atomen, das durch mindestens ein -S- oder -O- unterbrochen ist oder geradkettiges Alkylen mit 2 bis 10 C-Atomen, das mit wenigstens einer Alkylgruppe mit 1 bis 4 C-Atomen substituiert und durch mindestens ein -S- oder -O- unterbrochen ist, oder $R^4$ hat die Bedeutung eines bivalenten Heterocyclus mit 5 bis 6 Ring-Gliedern mit 1 bis 4 Stickstoffatomen oder eines bivalenten Heterocyclus mit 5 bis 6 Ring-Gliedern mit einem oder zwei Stickstoffatomen und einem weiteren Heteroatom aus der Reihe von O oder S, oder der genannten bivalenten Heterocyclen, die mit einem Benzorest anelliert sind, oder der genannten bivalenten Heterocyclen, die an einem oder zwei der C-Atome mit =S und/oder $C_1$-$C_4$-Alkyl substituiert sind, oder
$R^4$ hat die Bedeutung von

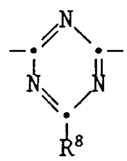 ,

wobei $R^8$ die genannte Bedeutung aufweist, oder,
wenn n = 3 ist, bedeutet
$R^4$ eine Gruppe der Formel

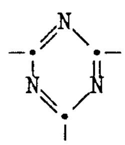 ,

mit der Massgabe, dass die Verbindungen der Formeln $C_2H_5$-S-$CH_2CH(OH)$-$PO(OC_2H_5)_2$ und Ph-C-($CH_2SCH_3$) (OH)-$PO(OC_2H_5)_2$ [Ph = Phenyl] ausgenommen sind.

In den Verbindungen der Formel I hat T zweckmässig die Bedeutung von -S-, -S-S-,

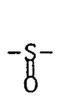 , 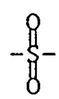 oder 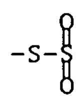 ,

bevorzugt sind -S-, -S-S,

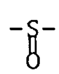 oder 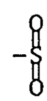

und besonders bevorzugt -S oder

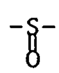 .

Zweckmässig sind Verbindungen der Formel I,
wobei n = 1, 2 oder 3 ist, und worin
$R^1$ und $R^2$ gleich oder verschieden sind und eine Alkylgruppe mit 1 bis 18 C-Atomen, eine Alkenylgruppe mit 2 bis 18 C-Atomen, eine Phenyl-, eine mit einer oder zwei $C_1$-$C_9$-Alkylgruppen substituierte Phenylgruppe, eine Phenylalkylgruppe mit 7 bis 9 C-Atomen, eine Cycloalkylgruppe mit 5 bis 12 Ring-C-Atomen oder

eine Cycloalkylgruppe mit 5 bis 12 Ring-C-Atomen, die mit einer Alkylgruppe mit 1 bis 4 C-Atomen substituiert ist, darstellen, oder worin
$R^1$ und $R^2$ zusammen eine geradkettige Alkylengruppe mit 2 bis 5 C-Atomen, eine geradkettige Alkylengruppe mit 2 bis 5 C-Atomen, die durch eine oder zwei Alkylgruppen mit 1 bis 4 C-Atomen oder durch eine Gruppe $-CH_2-O-C_1-C_9$-Alkyl oder $-CH_2-S-C_1-C_9$-Alkyl substituiert ist, oder
$R^1$ und $R^2$ zusammen eine Gruppe der Formel

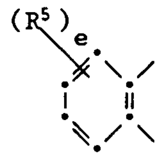

,

wobei $R^5$ eine Alkylgruppe mit 1 bis 4 C-Atomen und e eine Zahl von 0, 1 oder 2 darstellt, oder
$R^1$ und $R^2$ zusammen eine Gruppe der Formel

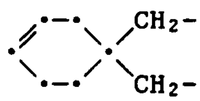

darstellen,
$R^3$ die Bedeutung von -H, Alkyl mit 1 bis 4 C-Atomen, $-CH_2-S-R^{4'}$, wobei
$R^{4'}$ nachstehende Bedeutung hat, Phenyl, oder Phenyl substituiert mit einer Alkylgruppe mit 1 bis 9 C-Atomen, hat, und,
wenn n = 1 ist,
$R^4$ die Bedeutung von $R^{4'}$ hat, wobei
$R^{4'}$ -H, eine Alkylgruppe mit 1 bis 18 C-Atomen, eine Alkenylgruppe mit 2 bis 18 C-Atomen, eine Phenylgruppe, eine mit wenigstens einer $C_1-C_9$-Alkylgruppe substituierte Phenylgruppe, eine Phenylalkylgruppe mit 7 bis 9 C-Atomen, eine Alkylgruppe mit 1 bis 18 C-Atomen, die mit 1 bis 5 OH-Gruppen substituiert ist, eine Alkylgruppe mit 2 bis 18 C-Atomen, die von 1 bis 5 -S- oder -O- unterbrochen ist, eine Alkylgruppe mit 3 bis 18 C-Atomen, die mit 1 bis 5 OH-Gruppen substituiert und von 1 bis 5 -S- oder -O- unterbrochen ist, eine Cycloalkylgruppe mit 5 bis 12 Ring-C-Atomen, eine Cycloalkylgruppe mit 5 bis 12 Ring-C-Atomen, die mit einer Alkylgruppe mit 1 bis 4 C-Atomen substituiert ist, oder
$R^{4'}$ eine Gruppe der Formel

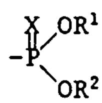

,

worin
X Sauerstoff oder Schwefel bedeutet und $R^1$ und $R^2$ genannte Bedeutung haben, darstellt, oder
$R^{4'}$ hat die Bedeutung eines Heterocyclus mit 5 bis 6 Ring-Gliedern mit 1 bis 3 Gliedern aus der Reihe von -NH-, -N=,

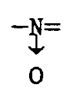

oder $-N(CH_3)-$ oder eines Heterocyclus mit 5 bis 6 Ring-Gliedern mit einem Glied aus der Reihe von -NH-, -N=,

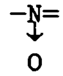

oder -N($CH_3$)- und einem weiteren Heteroatom aus der Reihe von O oder S oder der genannten Heterocyclen, die mit einem Benzorest anelliert sind, oder der genannten Heterocyclen, die an einem oder zwei der C-Atome mit =S und/oder $C_1$-$C_4$-Alkyl substituiert sind,
oder,
wenn n = 2 ist, bedeutet
$R^4$ geradkettiges Alkylen mit 1 bis 10 C-Atomen oder geradkettiges Alkylen mit 1 bis 10 C-Atomen, das mit einer oder zwei Alkylgruppen mit 1 bis 4 C-Atomen substituiert ist, oder geradkettiges Alkylen mit 2 bis 10 C-Atomen, das durch 1 bis 5 -S- oder -O- unterbrochen ist oder Alkylen mit 2 bis 10 C-Atomen, das mit einer oder zwei Alkylgruppen mit 1 bis 4 C-Atomen substituiert und durch 1 bis 5 -S- oder -O- unterbrochen ist, oder $R^4$ hat die Bedeutung eines bivalenten Heterocyclus mit 5 bis 6 Ring-Gliedern mit 1 bis 3 Stickstoffatomen oder eines bivalenten Heterocyclus mit 5 bis 6 Ring-Gliedern mit einem oder zwei Stickstoffatomen und einem weiteren Heteroatom aus der Reihe von O oder S, oder der genannten bivalenten Heterocyclen, die mit einem Benzorest anelliert sind, oder der genannten bivalenten Heterocyclen, die an einem oder zwei der C-Atome mit =S und/oder $C_1$-$C_4$-Alkyl substituiert sind, oder,
wenn n = 3 ist, bedeutet
$R^4$ eine Gruppe der Formel

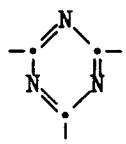 .

Zweckmässig sind auch Verbindungen der Formel I, worin $R^1$ und $R^2$ gleich oder verschieden sind und eine Alkylgruppe mit 2 bis 12 C-Atomen, Phenyl, mit einer $C_1$-$C_9$-Alkylgruppe substituiertes Phenyl, Benzyl oder eine Cycloalkylgruppe mit 5 bis 10 Ring-C-Atomen darstellen, oder worin $R^1$ und $R^2$ zusammen eine geradkettige Alkylengruppe mit 2 bis 4 C-Atomen oder eine geradkettige Alkylengruppe mit 2 bis 4 C-Atomen, die durch eine oder zwei Alkylgruppen mit jeweils 1 bis 4 C-Atomen substituiert ist oder die mit einer Gruppe der Formel -$CH_2$-S-$C_4H_9$ substituiert ist, oder eine Gruppe der Formel

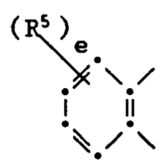 ,

wobei e = O oder 1 ist und wenn e = 1 ist, $R^5$ tert.-Butyl ist, darstellen.

Bevorzugt sind Verbindungen der Formel I, worin $R^1$ und $R^2$ gleich oder verschieden sind und eine geradkettige oder verzweigkettige Alkylgruppe mit 2 bis 12 C-Atomen, Phenyl oder Cyclohexyl darstellen oder $R^1$ und $R^2$ zusammen eine geradkettige $C_2$- oder $C_3$-Alkylengruppe oder mit einer $C_1$-$C_4$-Alkylgruppe substituierte Dimethylen- oder Trimethylengruppe, eine di-$C_1$-$C_4$-alkylsubstituierte Dimethylen- oder Trimethylengruppe oder eine mit -$CH_2$-S-t-$C_4H_9$ substituierte Dimethylen- oder Trimethylengruppe oder eine Gruppe der Formel

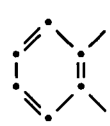 oder 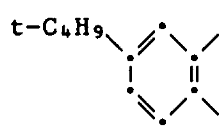

darstellen.

Besonders bevorzugt sind Verbindungen der Formel I, worin $R^1$ und $R^2$ gleich oder verschieden sind und $C_2$-$C_8$-Alkyl und insbesondere Ethyl, i-Propyl, n-Butyl, t-Butyl, 2-Ethylhexyl oder n-Octyl darstellen, oder $R^1$ und $R^2$ zusammen Dimethylen, 1-Methyldimethylen, 1-Ethyldimethylen, 2,2-Dimethyltrimethylen oder 2-Ethyl-2-n-butyltrimethylen darstellen.

Auch zu den besonders bevorzugten Verbindungen der Formel I gehören solche, worin $R^1$ und $R^2$ gleich sind.

Zweckmässig sind Verbindungen der Formel I, worin $R^3$ Methyl, Phenyl oder $-CH_2-S-R^{4''}$ darstellt, wobei $R^{4''}$ eine Alkylgruppe mit 2 bis 12 C-Atomen oder

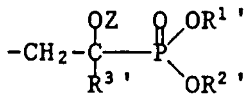

ist, worin Z die angegebene Bedeutung hat und $R^{3'}$ -H, Alkyl mit 1 bis 4 C-Atomen oder Phenyl ist und $R^{1'}$ und $R^{2'}$ gleich sind und eine Alkylgruppe mit 1 bis 8 C-Atomen, Phenyl oder Cyclohexyl darstellen oder $R^{1'}$ und $R^{2'}$ zusammen eine geradkettige $C_2$-oder $C_3$-Alkylengruppe oder eine $C_1$-$C_4$-alkylsubstituierte Dimethylen- oder Trimethylengruppe, eine di-$C_1$-$C_4$-alkylsubstituierte Dimethylen- oder Trimethylengruppe oder eine mit $-CH_2-S-t-C_4H_9$ oder mit $-CH_2-O-iC_8H_{17}$ substituierte Dimethylen- oder Trimethylengruppe darstellen.

Zweckmässig sind Verbindungen der Formel I, worin $R^{4'}$ eine Alkylgruppe mit 1 bis 12 C-Atomen, eine Phenylgruppe, eine Benzylgruppe oder eine Alkylgruppe mit 2 bis 8 C-Atomen, die durch eine OH-Gruppe substituiert ist oder eine Alkylgruppe mit 2 bis 12 C-Atomen, die durch ein -O- oder -S- unterbrochen ist, oder eine Alkylgruppe mit 2 bis 18 C-Atomen, die durch ein -O- oder -S- unterbrochen und durch eine -OH Gruppe substituiert ist oder eine Gruppe der Formel $-R^6-COOR^7$, wobei $R^6$ eine geradkettige Alkylengruppe mit 1 bis 3 C-Atomen und $R^7$ eine Alkylgruppe mit 4 bis 8 C-Atomen darstellt, oder eine Cyclohexylgruppe bedeutet, oder $R^{4'}$ stellt eine Gruppe der Formel

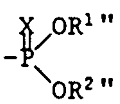

dar, worin X Sauerstoff oder Schwefel bedeutet und $R^{1''}$ und $R^{2''}$ gleich sind und Alkyl mit 1 bis 8 C-Atomen oder $R^{1''}$ und $R^{2''}$ zusammen geradkettiges Alkylen mit 2 oder 3 C-Atomen oder geradkettiges Alkylen mit 2 oder 3 C-Atomen, das mit einer oder zwei Alkylgruppen mit 1 bis 4 C-Atomen substituiert ist, bedeuten, oder

$R^{4'}$ hat die Bedeutung eines Heterocyclus mit 5 bis 6 Ring-Gliedern mit 1 bis 3 Stickstoffatomen oder eines Heterocyclus mit 5 bis 6 Ring-Gliedern mit einem Stickstoffatom und einem weiteren Heteroatom aus der Reihe von O oder S oder der genannten Heterocyclen, die mit einem Benzorest anelliert sind, oder der genannten Heterocyclen, die an einem oder zwei der C-Atome mit =S oder mit $C_1$-$C_4$-Alkyl substituiert sind, oder

$R^{4'}$ hat die Bedeutung von

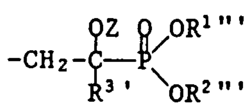 oder von 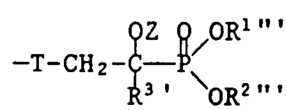

wobei T und Z die angegebenen Bedeutungen haben, $R^{3'}$ Methyl ist und $R^{1'''}$ und $R^{2'''}$ gleich sind und Alkyl mit 1 bis 8 C-Atomen bedeuten.

Hat $R^{4'}$ die Bedeutung eines Heterocyclus mit 5 bis 6 Ringgliedern mit 1 bis 3 Stickstoffatomen oder eines Heterocyclus mit 5 bis 6 Ringgliedern mit einem oder zwei Stickstoffatomen und einem weiteren Heteroatom, so können die Stickstoffatome beispielsweise -NH- oder -N= bedeuten.

Bevorzugt sind Verbindungen der Formel I, wobei n = 2 ist und worin $R^4$ geradkettiges Alkylen mit 2 bis 4 C-Atomen ist oder $R^4$ hat die Bedeutung eines divalenten Heterocyclus mit 5 bis 6 Ring-Gliedern mit einem oder zwei Stickstoffatomen und einem weiteren Heteroatom aus der Reihe von O oder S.

Ganz besonders bevorzugt sind Verbindungen der Formel I, worin n = 1 ist, $R^1$ und $R^2$ gleich sind und $C_1$-$C_{12}$-Alkyl sind oder $R^1$ und $R^2$ zusammen

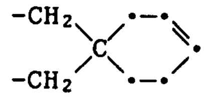

bedeuten, $R^3$ die Bedeutung von $C_1$-$C_4$-Alkyl oder Phenyl hat und $R^4$ die Bedeutung von $R^{4'}$ hat, wobei $R^{4'}$ $C_1$-$C_4$-Alkyl, einen Heterocyclus mit 5 Ring-Gliedern und einem oder zwei Stickstoffatomen, einen Heterocyclus mit 5-Ring-Gliedern und einem Stickstoffatom und mit einem oder zwei zusätzlichen Heteroatomen aus der Reihe von S oder O, einen der vorstehenden Heterocyclen mit anelliertem Benzoring oder $C_3$-$C_{12}$-Alkyl, substituiert mit einem -OH und unterbrochen mit 1 oder 2 O oder S, darstellt.

Bedeutet $R^o$, $R^1$, $R^2$, $R^8$, $R^9$, $R^{10}$, $R^{11}$, $R^{12}$ und $R^{13}$ in Verbindungen der Formel I Alkyl mit 1 bis 18 C-Atomen, so sind Beispiele dafür Methyl, Ethyl, Propyl, Isopropyl, n-Butyl, Isobutyl, t-Butyl, Pentyl, Isopentyl, Hexyl, Heptyl, 3-Heptyl, 1-Octyl, 2-Octyl, 2-Ethylhexyl, Nonyl, Decyl, Undecyl, Dodecyl, Tridecyl, Tetradecyl, Pentadecyl, Hexadecyl, Heptadecyl, Octadecyl, 2-Ethylbutyl, 1-Methylpentyl, 1,3-Dimethylbutyl, 1,1,3,3-Tetramethylbutyl, 1-Methylhexyl, Isoheptyl, 1-Methylheptyl, 1,1,3-Trimethylhexyl, 3,5,5-Trimethylhexyl, 1,1,3,3-Tetramethylhexyl und 1-Methylundecyl. Zweckmässig sind Alkylreste mit 1 bis 12 C-Atomen, die sich sinngemäss obengenannten Beispielen entnehmen lassen. Bevorzugt sind Alkylgruppen mit 1 bis 12 C-Atomen, wofür sich Beispiele wiederum obiger Aufzahlung sinngemäss entnehmen lassen. Besonders bevorzugt sind Ethyl, i-Propyl, n-Butyl, t-Butyl, 2-Ethylhexyl, n-Octyl und Dodecyl für $R^1$ und $R^2$.

Beispiele für mit wenigstens einer $C_1$-$C_9$ substituierten Phenyl- oder Naphthylgruppe als Reste $R^o$, $R^1$ oder $R^2$ oder für $R^8$, $R^9$, $R^{10}$, $R^{11}$, $R^{12}$ und $R^{13}$ als mono-, di- oder tri-$C_1$-$C_9$-alkylsubstituiertes Phenyl sind Methylphenyl, Dimethylphenyl, Trimethylphenyl, Ethylphenyl, Isopropylphenyl, t-Butylphenyl, Di-t-butylphenyl, 2,6-Di-t-butyl-4-methylphenyl oder Nonylphenyl.

Beispiele für eine Phenylalkylgruppe mit 7 bis 9 C-Atomen für $R^o$, $R^1$, $R^2$, $R^{10}$, $R^{11}$, $R^{12}$ und $R^{13}$ sind Benzyl und 2-phenylethyl, wobei Benzyl bevorzugt wird. Beispiele für $R^{10}$, $R^{11}$ und $R^{12}$ als am Phenyl mono-, di-oder tri-$C_1$-$C_4$-alkylsubstituiertes $C_7$-$C_9$-Phenylalkyl sind Methylbenzyl, Dimethylbenzyl und t-Butylbenzyl.

Bedeutet $R^o$, $R^1$, $R^2$, $R^{10}$, $R^{11}$, $R^{12}$ und $R^{13}$ eine Cycloalkylgruppe mit 5 bis 12 Ring-C-Atomen, so sind Beispiele dafür Cyclopentyl, Cyclohexyl, Cyclooctyl, Cyclononyl, Cyclodecyl, Cycloundecyl, Cyclododecyl, wobei Cyclohexyl bevorzugt ist.

Bedeuten $R^o$, $R^1$, $R^2$ und $R^{13}$ eine Cycloalkylgruppe mit 5 bis 12 Ring-C-Atomen, die mit wenigstens einer, zweckmässig 1 bis 3, vorzugsweise 1 oder 2, Alkylgruppen mit 1 bis 4 C-Atomen substituiert ist, oder bedeuten $R^{10}$, $R^{11}$ oder $R^{12}$ mono-, di- oder tri-$C_1$-$C_4$-alkylsubstituierte $C_5$-$C_{12}$-Cycloalkylgruppen, so sind Beispiele dafür Methylcyclopentyl, Dimethylcyclopentyl, 2- oder 4-Methylcyclohexyl, Dimethylcyclohexyl, Trimethylcyclohexyl oder t-Butylcyclohexyl. Bevorzugt ist mit einer Alkylgruppe substituiertes Cyclohexyl, z.B. Methylcyclohexyl.

Zusätzlich zu den genannten Bedeutungen von $R^o$ kann $R^o$ auch -H darstellen.

Bilden $R^1$ und $R^2$ zusammen eine geradkettige Alkylengruppe mit 2 bis 5 C-Atomen, so sind entsprechende Beispiele Ethylen, Trimethylen, Tetramethylen oder Pentamethylen. Ethylen und Trimethylen werden bevorzugt.

Bilden $R^1$ und $R^2$ zusammen eine geradkettige Alkylengruppe mit 2 bis 5 C-Atomen die durch wenigstens eine Alkylgruppe mit 1 bis 8 C-Atomen substituiert ist, so sind Beispiele dafür 1-Methyl-1,2-ethandiyl, 1-Ethyl-1,2-ethandiyl, 2,2-Dimethyl-1,3-propandiyl oder 2-Ethyl-2-n-butyl-1,3-propandiyl.

$R^1$ und $R^2$ zusammen bilden beispielsweise auch eine geradkettige Alkylengruppe mit 2 bis 5 C-Atomen, die durch eine Gruppe -$CH_2$-S-$C_1$-$C_9$-Alkyl substituiert ist. Vorzugsweise handelt es sich dabei um eine Gruppe der Formel

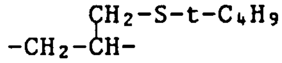

.

Bilden $R^1$ und $R^2$ zusammen eine Gruppe der Formel

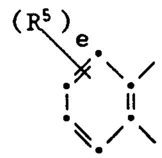

,

wobei $R^5$ eine Alkylgruppe mit 1 bis 4 C-Atomen und e eine Zahl von O, 1 oder 2 darstellt, so sind bevorzugte Beispiele dafür o-Phenylen, 4-Methyl-o-phenylen oder 4-t-Butyl-o-phenylen.

Q bedeutet -O- oder -$NR^o$-, wobei -O- bevorzugt ist. Bevorzugt für $R^o$ ist -H oder $C_1$-$C_4$-Alkyl, vorzugsweise t-Butyl.

Stellt Q einen Rest -$NR^o$- dar, so bilden $R^1$ und $R^2$ zusammen vorzugsweise einen Dimethylenrest.

Die Bedeutungen für $R^{1'}$, $R^{1''}$, $R^{1'''}$, $R^{2'}$, $R^{2''}$ und $R^{2'''}$ lassen sich sinngemäss jeweils den genannten Auflistungen entnehmen. Zweckmässig sind im gleichen Molekül die Bedeutungen von $R^1$ gleich wie für $R^{1'}$, $R^{1''}$ oder $R^{1'''}$ resp. für $R^2$ gleich wie für $R^{2'}$, $R^{2''}$ oder $R^{2'''}$.

Stellen $R^{4'}$, $R^1$, $R^2$, $R^o$ oder $R^{13}$ eine Alkenylgruppe mit 2 bis 18 C-Atomen dar, so sind Beispiele dafür Vinyl, Allyl, 2-Methallyl, 2-Butenyl, trans-2-Butenyl, 2-Hexenyl, trans-2,4-Hexadienyl, resp. Hexenyl, Decenyl, Undecenyl, Heptadecenyl, Oleyl, cis-9-Octadecenyl, trans-9-Octadecenyl, cis,cis-9,12-Octadecadienyl oder cis,cis,cis-9,12,15-Octadecatrienyl.

Beispiele für $C_3$-$C_6$-Alkenyl für $R^{10}$ sind Allyl und 2-Methylallyl.

Beispiele für $R^{11}$ und $R^{12}$ als -OH -substituiertes $C_2$-$C_4$-Alkyl sind 2-Hydroxyethyl, 2-Hydroxypropyl, 3-Hydroxypropyl, 2-Hydroxybutyl und 4-Hydroxybutyl, bevorzugt ist 2-Hydroxyethyl.

Beispiele für $R^{11}$ und $R^{12}$ als $C_1$-$C_8$-alkoxysubstituiertes $C_2$-$C_4$-Alkyl sind 2-Methoxyethyl, 2-Ethoxyethyl, 3-Methoxypropyl, 3-Ethoxypropyl, 3-Butoxypropyl, 3-Octoxypropyl und 4-Methoxybutyl. Als Alkoxygruppe ist die Methoxygruppe bevorzugt.

Beispiele für $R^{11}$ und $R^{12}$ als $C_2$-$C_4$-Alkyl, substituiert durch Di-($C_1$-$C_4$-alkyl)amino, bevorzugt durch Dimethylamino oder Diethylamino, sind 2-Dimethylaminoethyl, 2-Diethylaminoethyl, 3-Dimethylaminopropyl, 3-Diethylaminopropyl, 3-Dibutylaminopropyl und 4-Diethylaminobutyl.

Bilden $R^{11}$ und $R^{12}$ zusammen mit dem sie verknüpfenden Stickstoffatom einen 5- bis 7-gliedrigen Heterocyclus, der gegebenenfalls noch weitere Heteroatome aus der Reihe von N und O enthalten kann, so sind Beispiele dafür Pyrrolidyl, Piperidyl, Piperazinyl, Morpholinyl, N-Methylpiperazinyl, Hexahydroazepinyl und Perhydroazepinyl.

Der Substituent $R^3$ in der Formel I bedeutet u.a. Alkyl mit 1 bis 4 C-Atomen. Beispiele sind Methyl, Ethyl, n-Propyl, i-Propyl, n-Butyl, 2-Butyl oder tert.-Butyl. Bevorzugt ist Methyl.

Der Substituent $R^4$ in der Formel I hat z.B., wenn n = 1 ist, die Bedeutung von $R^{4'}$, das Alkyl mit 1 bis 18 C-Atomen bedeuten kann. Beispiele für solche Alkylgruppen lassen sich der entsprechenden Aufzählung für $R^1$ und $R^2$ entnehmen. Bevorzugt sind n-Butyl, t-Butyl, i-Butyl, n-Octyl, sec.-Octyl, t-Nonyl, sec.-Dodecyl oder t-Dodecyl.

Beispiele und Bevorzugungen für Phenyl oder Naphthyl mit wenigstens einer $C_1$-$C_4$-Alkylgruppe oder für eine Aralkylgruppe mit 7 bis 9 C-Atomen als Substituenten $R^{4'}$ lassen sich aus obengenannten Aufzählungen für $R^1$ und $R^2$ entnehmen.

Beispiele für $R^{4'}$, wenn dieses eine Alkylgruppe mit 1 bis 18 C-Atomen, die wenigstens mit einer, zweckmässig 1 bis 5, OH-Gruppe substituiert ist, oder eine Alkylgruppe mit 2 bis 18 C-Atomen, die von wenigstens einem, zweckmässig 1 bis 5, -S- oder -O- unterbrochen ist, oder eine Alkylgruppe mit 3 bis 18 C-Atomen, die mit wenigstens einer, zweckmässig 1 bis 5, OH-Gruppen substituiert ist und von wenigstens einem, zweckmässig 1 bis 5 -S- oder -O-unterbrochen ist, darstellt, sind 2-Hydroxyethyl, 2-Hydroxy-n-propyl, $-CH_2-CH_2-CH_2-S-tC_4H_9$, $-CH_2-CH_2-CH_2-O-iC_8H_{17}$,

$$CH_2-\underset{OH}{CH}-CH_2-S-tC_4H_9 \text{ oder } -CH_2-\underset{OH}{CH}-CH_2-O-iC_8H_{17}.$$

Stellt $R^{4'}$ eine Gruppe der Formel $-R^6COOR^7$ dar, so sind $R^6$ eine Alkylengruppe mit 1 bis 6 C-Atomen und $R^7$ eine Alkylgruppe mit 1 bis 12 C-Atomen. Beispiele für $R^6$ sind Methylen, Ethylen, Trimethylen, Tetramethylen oder Hexamethylen, für $R^7$ Methyl, Ethyl, n-Propyl, i-Propyl, n-Butyl, sec.-Butyl, tert.-Butyl,

Pentyl, Hexyl, Octyl, 2-Ethylhexyl usw.. Bevorzugt für eine Gruppe der Formel $-R^6COOR^7$ sind beispielsweise $-CH_2-COO-t-C_4H_9$ oder $-CH_2COO-iC_8H_{17}$.

Stellt $R^{4'}$ eine Cycloalkylgruppe mit 5 bis 12 Ring-C-Atomen oder eine Cycloalkylgruppe mit 5 bis 12 Ring-C-Atomen, die mit wenigstens einer Alkylgruppe mit 1 bis 4 C-Atomen substituiert ist, dar, so finden sich entsprechende Beispiele und Bevorzugungen vorstehend, wie für $R^1$ und $R^2$ beispielhaft genannt.

Weist ein Substituent $R^{4'}$ die Formel

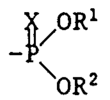

auf, so kann X = Schwefel oder Sauerstoff bedeuten, bevorzugt ist Sauerstoff. $R^1$ und $R^2$ in solchen Substituenten können die eingangs genannten Bedeutungen und Bevorzugungen haben. Bevorzugt sind Substituenten obiger Art, worin $R^1$ und $R^2$ gleich sind. Bevorzugtes $R^1$ und $R^2$ in solchen Substituenten sind $C_1$-$C_8$-Alkyl und insbesondere Ethyl, n-Butyl, i-Butyl, n-Octyl und 2-Ethylhexyl. Weiter bevorzugt sind für $R^1$ und $R^2$ zusammen Alkylenreste und substituierte Alkylenreste, wobei Ethylen und Trimethylen sowie 2,2-Dimethyl-1,3-propandiyl zu nennen sind.

Beispiele für die Substituenten mit der obigen Formel sind demnach:

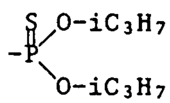 , 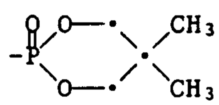 , 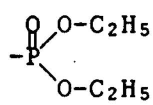 oder 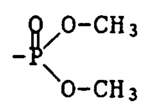 .

Hat $R^{4'}$ die Bedeutung eines Heterocyclus mit 5 bis 6 Ring-Gliedern mit 1 bis 4 Gliedern aus der Reihe von -NH-, -N=,

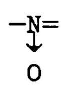

oder -N($C_1$-$C_4$-Alkyl)- oder eines Heterocyclus mit 5 bis 6 Ring-Gliedern mit einem oder zwei Gliedern aus der Reihe von -NH-, -N=,

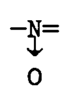

oder -N($C_1$-$C_4$-Alkyl)- und einem weiteren Heteroatom aus der Reihe von O oder S, oder der genannten Heterocyclen, die mit einem Benzorest anelliert sind, oder der genannten Heterocyclen, die an einem oder zwei der C-Atome mit =S oder $C_1$-$C_4$-Alkyl substituiert sind, so sind Beispiele dafür

1) 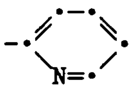 , 2) 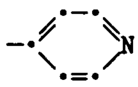 , 3) 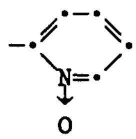 , 4) 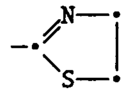 ,

5) 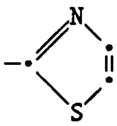 , 6) 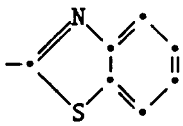 , 7) 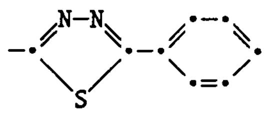 ,

8) 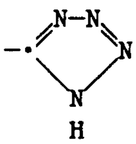 , 9) 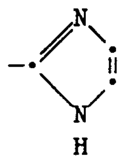 ,

10) 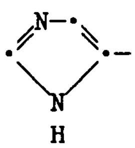 , 11) 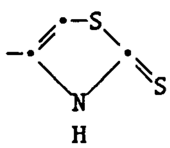 , 12) 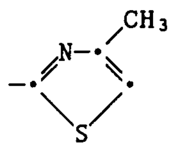 ,

13) 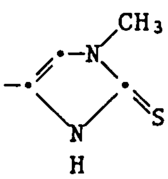 , 14) 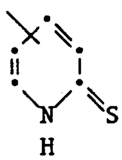 , 15) 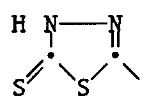 ,

16) 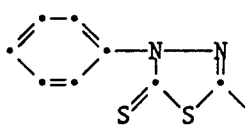 , 17) 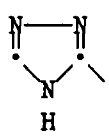 , 18) 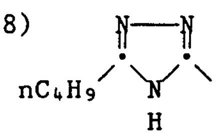 ,

19) 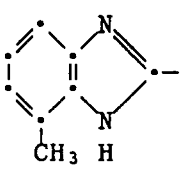 , 20) 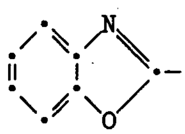 oder 21) 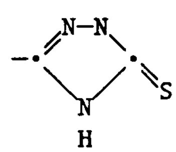 .

Bevorzugt aus obiger Aufstellung sind die Substituenten 1), 3), 4), 5), 6), 7), 8) und 9).

Von den Gliedern aus der Reihe von -NH-, -N=,

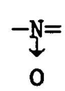

oder -N($C_1$-$C_4$-Alkyl)- sind -NH-, -N=,

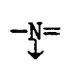

und -N($CH_3$)- zweckmässig und -NH- und -N= bevorzugt.

Eine weitere Bedeutung von $R^{4'}$ ist eine Gruppe der Formel

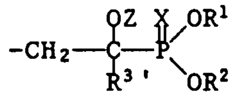 ,

wobei X Sauerstoff oder Schwefel bedeutet, Z und $R^{3'}$, sowie $R^1$ und $R^2$ die eingangs genannten Bedeutungen haben. Bevorzugt sind für $R^{3'}$ -H, Methyl und Phenyl, für $R^1$ und $R^2$, die bevorzugt gleich sind, Alkylgruppen mit 1 bis 8 C-Atomen oder für $R^1$ und $R^2$ zusammen eine geradkettige Alkylengruppe mit 2 oder 3 C-Atomen oder mit einer oder zwei $C_1$-$C_4$-Alkylgruppen substituierte geradkettige Alkylengruppen mit 2 oder 3 C-Atomen. Z ist bevorzugt -H.

Beispiele besonders bevorzugter Reste sind:

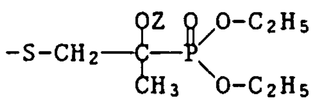 ,

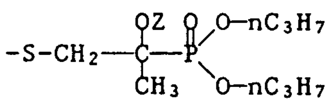 und

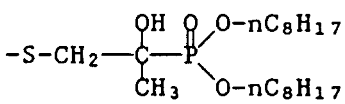 ,

wobei Z die genannten Bedeutungen hat und bevorzugt -H ist.

Bedeutet in der obenerwähnten Formel I n = 2, so kann $R^4$ geradkettiges Alkylen mit 1 bis 10 C-Atomen darstellen. Beispiele dafür sind Methylen, Ethylen, Trimethylen, Tetramethylen, Pentamethylen, Hexamethylen, Octamethylen oder Decamethylen, wobei Ethylen bevorzugt ist. Beispiele für geradkettige Alkylengruppen mit 1 bis 10 C-Atomen, die mit wenigstens einer, zweckmässig mit 1 bis 3 und vorzugsweise mit 1 oder 2, Alkylgruppen mit 1 bis 4 C-Atomen substituiert sind, wie für $R^4$ ebenfalls erwähnt, sind 1-Methyl-1,2-ethandiyl, 1-Ethyl-1,2-ethandiyl, 2,2-Dimethyl-1,3-propandiyl oder 2-Methyl-2-n-Butyl-1,3-propandiyl.

Beispiele für geradkettige Alkylengruppen mit 2 bis 10 C-Atomen, die durch mindestens ein -S- oder -O- unterbrochen sind, wie für $R^4$ erwähnt, können die Formeln $-CH_2-CH_2-S-CH_2-CH_2-$, $-CH_2-CH_2-O-CH_2-CH_2-$,$-CH_2-CH_2-O-CH_2-CH_2-O-CH_2-CH_2-$ oder $-CH_2-CH_2-O-CH_2-CH_2-O-CH_2-CH_2-O-CH_2-CH_2-$ aufweisen.

Hat $R^4$ die Bedeutung von Alkenylen mit 2 bis 10 C-Atomen, so sind Beispiele dafür Vinylen, Methylvinylen, Octenylethylen oder 2-Buten-1,4-diyl.

Hat $R^4$ die Bedeutung eines bivalenten Heterocyclus mit 5 bis 6 Ring-Gliedern mit 1 bis 4 Stickstoffatomen oder eines bivalenten Heterocyclus mit 5 bis 6 Ring-Gliedern mit einem oder zwei Stickstoffatomen und einem weiteren Heteroatom aus der Reihe von O oder S, oder der genannten bivalenten Heterocyclen, die mit einem Benzorest anelliert sind, und/oder der genannten bivalenten Heterocyclen, die an einem oder zwei der C-Atome mit =S oder $C_1$-$C_4$-Alkyl substituiert sind, so sind Beispiele dafür:

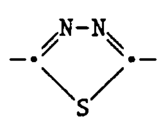 , 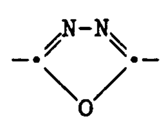 .

Bedeutet n = 3, so stellt $R^4$ eine Gruppe der Formel

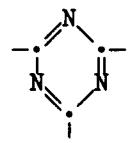

dar.

Zu den zweckmässigen Verbindungen obengenannter Formel I gehören solche, worin n = 1 ist und $R^4$ eine Gruppe

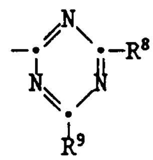

ist, oder
worin n = 2 ist und $R^4$ eine Gruppe

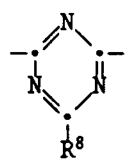

ist, wobei
$R^8$ und $R^9$, unabhängig voneinander, $C_1$-$C_{12}$-Alkyl, Phenyl, eine Gruppe -$OR^{10}$, -$SR^{11}$ oder

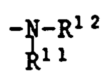

sind und $R^{10}$ $C_1$-$C_{12}$-Alkyl, $C_5$-$C_8$-Cycloalkyl, mono-, di- oder tri-($C_1$-$C_4$-alkyl)substituiertes $C_5$-$C_8$-Cycloalkyl, Allyl, Phenyl oder Benzyl ist und $R^{11}$ und $R^{12}$, die gleich oder verschieden sind, -H, $C_1$-$C_{12}$-Alkyl, $C_5$-$C_8$-Cycloalkyl, mono-, di- oder tri-($C_1$-$C_4$-alkyl)substituiertes $C_5$-$C_8$-Cycloalkyl, Allyl, Benzyl, $C_2$-$C_3$-Alkyl, welches in der 2- oder 3-Position durch -OH, durch $C_1$-$C_4$-Alkoxy oder durch Di-($C_1$-$C_4$-Alkyl)amino substituiert ist, oder die Gruppe

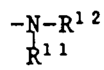 ,

1-Pyrrolidyl, 1-Piperidyl, 4-Morpholinyl oder 1-Hexahydroazepinyl sind.

Zu den bevorzugten Verbindungen der obengenannten Formel I gehören solche, worin n = 1 ist und $R^4$ eine Gruppe

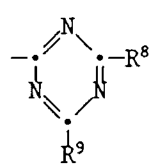

ist, oder worin
n = 2 ist und $R^4$ eine Gruppe

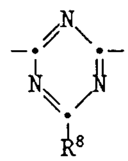

ist, wobei
$R^8$ und $R^9$, unabhängig voneinander, $C_1$-$C_4$-Alkyl, Phenyl, eine Gruppe $-OR^{10}$, $-SR^{10}$ oder

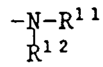

darstellen, wobei $R^{10}$ $C_1$-$C_{10}$-Alkyl, Cyclohexyl, mono-, di- oder tri-($C_1$-$C_4$-alkyl)substituiertes Cyclohexyl, Allyl, Phenyl oder Benzyl darstellen und $R^{11}$ und $R^{12}$ gleich oder verschieden sind und -H, $C_1$-$C_{12}$-Alkyl, Cyclohexyl, mono-, di- oder -tri-($C_1$-$C_4$-alkyl)substituiertes Cyclohexyl, Allyl, Benzyl, $C_2$-$C_3$-Alkyl, das in 2- oder 3-Position durch -OH, durch Methoxy, durch Ethoxy, durch Dimethylamino oder Diethylamino substituiert ist, darstellen oder $R^{11}$ und $R^{12}$ stellen mit dem sie verknüpfenden H-Atom eine Morpholinogruppe dar. Bevorzugt sind $R^8$ und $R^9$ gleich.

Vorliegende Erfindung umfasst auch Zusammensetzungen, enthaltend a) ein synthetisches Polymer oder eine funktionelle Flüssigkeit und b) wenigstens eine Verbindung der allgemeinen Formel I

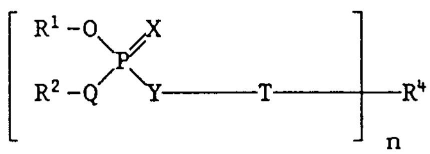
(I) ,

wobei n = 1, 2 oder 3 ist und worin
X Sauerstoff oder Schwefel darstellt, T die Bedeutung von -S-, -S-S-, -S-S-S-, -S-S-S-S-, -S-S-S-S-S-,

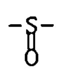 , 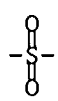 oder 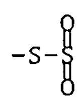

hat und
Y die Bedeutung von

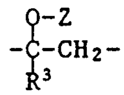

hat,
wobei
Z die Bedeutung von -H, $-COR^{13}$, $-COOR^{13}$ oder $-CONHR^{13}$ hat, und
Q die Bedeutung von Sauerstoff oder $-NR^o-$ hat, und
$R^1$, $R^2$, $R^o$ und $R^{13}$ gleich oder verschieden sind und eine Alkylgruppe mit 1 bis 18 C-Atomen, eine Alkenylgruppe mit 2 bis 18 C-Atomen, eine Phenyl- oder Naphthylgruppe, eine mit wenigstens einer $C_1$-$C_9$-Alkylgruppe substituierte Phenyl- oder Naphthylgruppe, eine Phenylalkylgruppe mit 7 bis 9 C-Atomen, eine Cycloalkylgruppe mit 5 bis 12 Ring-C-Atomen oder eine Cycloalkylgruppe mit 5 bis 12 Ring-C-Atomen, die

mit wenigstens einer Alkylgruppe mit 1 bis 4 C-Atomen substituiert ist, darstellen, oder $R^o$ -H ist, oder
$R^1$ und $R^2$ zusammen eine geradkettige Alkylengruppe mit 2 bis 10 C-Atomen, eine geradkettige Alkylengruppe mit 2 bis 10 C-Atomen, die durch wenigstens eine Alkylgruppe mit 1 bis 8 C-Atomen oder durch wenigstens eine Gruppe $-CH_2-O-C_1-C_{12}$-Alkyl oder $-CH_2-S-C_1-C_{12}$-Alkyl substituiert ist, oder
$R^1$ und $R^2$ zusammen eine Gruppe der Formel

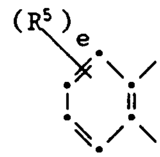
,

wobei $R^5$ eine Alkylgruppe mit 1 bis 4 C-Atomen und e eine Zahl von O, 1 oder 2 darstellt, oder
$R^1$ und $R^2$ zusammen eine Gruppe der Formel

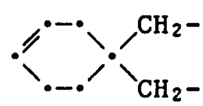

darstellen,
$R^3$ die Bedeutung von -H, von Alkyl mit 1 bis 4 C-Atomen, von Phenyl, von $-CH_2-S-R^{4\prime}$, wobei $R^{4\prime}$ nachstehende Bedeutung hat, von Phenyl oder Phenyl, substituiert mit mindestens einer Alkylgruppe mit 1 bis 4 C-Atomen, hat, und,
wenn n = 1 ist,
$R^4$ die Bedeutung von $R^{4\prime}$ hat, wobei
$R^{4\prime}$ -H, eine Alkylgruppe mit 1 bis 18 C-Atomen, eine Alkenylgruppe mit 2 bis 18 C-Atomen, eine Phenyl- oder Naphthylgruppe, eine mit wenigstens einer $C_1$-$C_9$-Alkylgruppe substituierte Phenyl- oder Naphthylgruppe, eine Phenylalkylgruppe mit 7 bis 9 C-Atomen, Pinan-10-yl, eine Alkylgruppe mit 1 bis 18 C-Atomen, die mit wenigstens einer OH-Gruppe substituiert ist, eine Alkylgruppe mit 2 bis 18 C-Atomen, die von wenigstens einem -S- oder -O- unterbrochen ist, eine Alkylgruppe mit 3 bis 18 C-Atomen, die mit wenigstens einer OH-Gruppe substituiert und von wenigstens einem -S- oder -O- unterbrochen ist, eine Gruppe der Formel $-R^6-COOR^7$, wobei $R^6$ eine Alkylengruppe mit 1 bis 6 C-Atomen und $R^7$ eine Alkylgruppe mit 1 bis 12 C-Atomen darstellt, eine Cycloalkylgruppe mit 5 bis 12 Ring-C-Atomen, eine Cycloalkylgruppe mit 5 bis 12 Ring-C-Atomen, die mit wenigstens einer Alkylgruppe mit 1 bis 4 C-Atomen substituiert ist oder eine Cycloalkylgruppe mit 5 bis 12 Ring-C-Atomen, die durch mindestens ein -O- oder -S- unterbrochen ist oder eine Cycloalkylgruppe mit 5 bis 12 Ring-C-Atomen, die mit wenigstens einer Alkylgruppe mit 1 bis 4 C-Atomen substituiert ist und die durch mindestens ein -O- oder -S- unterbrochen ist, oder
$R^{4\prime}$ eine Gruppe der Formel

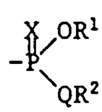
,

worin
X Sauerstoff oder Schwefel bedeutet und Q, $R^1$ und $R^2$ genannte Bedeutung haben, darstellt, oder
$R^{4\prime}$ bedeutet einen Heterocyclus mit 5 bis 6 Ring-Gliedern mit 1 bis 3 Gliedern aus der Reihe von -NH-, -N=,

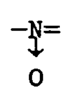

oder $-N(C_1-C_4\text{-Alkyl})-$ oder eines Heterocyclus mit 5 bis 6 Ring-Gliedern mit einem oder zwei Gliedern aus der Reihe von -NH-, -N=,

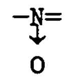

oder $-N(C_1-C_4\text{-Alkyl})-$ und einem weiteren Heteroatom aus der Reihe von O oder S oder der genannten Heterocyclen, die mit einem Benzorest anelliert sind, oder der genannten Heterocyclen, die an einem oder zwei der C-Atome mit =S und/oder $C_1$-$C_4$-Alkyl substituiert sind, oder $R^{4'}$ hat die Bedeutung von

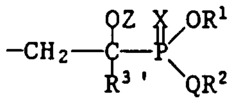

oder von

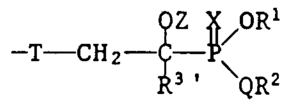

wobei T und Z die angegebenen Bedeutungen haben, X Sauerstoff oder Schwefel bedeutet, $R^{3'}$ -H, Alkyl mit 1 bis 4 C-Atomen, Phenyl oder Phenyl substituiert mit mindestens einer Alkylgruppe mit 1 bis 9 C-Atomen ist, und Q, $R^1$ und $R^2$ die genannte Bedeutung haben, oder,
$R^4$ die Bedeutung von

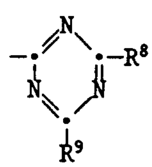

hat, wobei
$R^8$ und $R^9$, unabhängig voneinander, $C_1$-$C_{18}$-Alkyl, Phenyl, mono-, di- oder tri-$C_1$-$C_4$-alkylsubstituiertes Phenyl, eine Gruppe $-OR^{10}$, $-SR^{10}$ oder

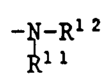

bedeuten, wobei $R^{10}$ $C_1$-$C_{18}$-Alkyl, $C_5$-$C_{12}$-Cycloalkyl, mono-, di- oder tri-$C_1$-$C_4$-alkylsubstituiertes $C_5$-$C_{12}$-Cycloalkyl, $C_3$-$C_6$-Alkenyl, Phenyl, mono- di- oder tri-$C_1$-$C_4$-alkylsubstituiertes Phenyl, $C_7$-$C_9$-Phenylalkyl oder am Phenyl mono-, di- oder tri-$C_1$-$C_4$-alkylsubstituiertes $C_7$-$C_9$-Phenylalkyl bedeutet, und $R^{11}$ und $R^{12}$, die gleich oder verschieden sind, bedeuten -H, $C_1$-$C_{18}$-Alkyl, $C_5$-$C_{12}$-Cycloalkyl, mono-, di- oder tri-$C_1$-$C_4$-alkylsubstituiertes $C_5$-$C_{12}$-Cycloalkyl, $C_3$-$C_6$-Alkenyl, $C_7$-$C_9$-Phenylalkyl, am Phenyl mono-, di- oder tri-$C_1$-$C_4$-alkylsubstituiertes $C_7$-$C_9$-Phenylalkyl, $C_2$-$C_4$-Alkyl, das durch -OH, durch $C_1$-$C_8$-Alkoxy oder durch Di-($C_1$-$C_4$-alkyl)amino substituiert ist oder $R^{11}$ und $R^{12}$ bedeuten, zusammen mit dem sie verknüpfenden Stickstoffatom, einen 5- bis 7-gliedrigen Heterocyclus, oder,
wenn $n = 2$ ist, bedeutet
$R^4$ geradkettiges Alkylen mit 1 bis 12 C-Atomen oder Alkenylen mit 2 bis 10 C-Atomen oder geradkettiges Alkylen mit 1 bis 10 C-Atomen, das mit wenigstens einer Alkylgruppe mit 1 bis 4 C-Atomen substituiert ist, oder geradkettiges Alkylen, mit 2 bis 10 C-Atomen, das durch -S- oder -O-unterbrochen ist oder Alkylen mit 2 bis 10 C-Atomen, das mit wenigstens einer Alkylgruppe mit 1 bis 4 C-Atomen substituiert und durch -S- oder -O- unterbrochen ist, oder
$R^4$ hat die Bedeutung eines bivalenten Heterocyclus mit 5 bis 6 Ring-Gliedern mit 1 bis 3 Stickstoffatomen oder eines bivalenten Heterocyclus mit 5 bis 6 Ring-Gliedern mit einem Stickstoffatom und einem weiteren Heteroatom aus der Reihe von O oder S, oder der genannten bivalenten Heterocyclen, die mit einem Benzorest anelliert sind, oder der genannten bivalenten Heterocyclen, die an einem oder zwei der C-Atome mit =S oder $C_1$-$C_4$-Alkyl substituiert sind, oder,
$R^4$ hat die Bedeutung von

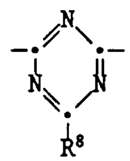

wobei $R^8$ die genannte Bedeutung aufweist, oder,
wenn n = 3 ist, bedeutet
$R^4$ eine Gruppe der Formel

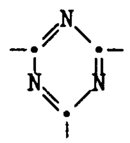

Zweckmässige und bevorzugte Zusammensetzungen ergeben sich z.B. durch die Wahl der Komponenten b), Verbindungen der allgemeinen Formel I, wie oben beschrieben, in ihren zweckmässigen und vorzugsweisen Ausführungsformen.

Andere zweckmässige Ausführungsformen ergeben sich durch die Wahl des organischen Materials a).

Geeignetes organisches Material ist beispielsweise der nachfolgenden Auflistung zu entnehmen.

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifikationen davon (z.B. Klebrigmacherharze).

4. Polystyrol, Poly-(p-methylstyrol), Poly-($\alpha$-methylstyrol).

5. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol oder $\alpha$-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren,

sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid/Vinylidenchlorid, Vinylchlorid/Vinylacetat oder Vinylidenchlorid/Vinylacetat.

8. Polymere, die sich von $\alpha,\beta$-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril/Butadien-Copolymere, Acrylnitril/Alkylacrylat-Copolymere, Acrylnitril/Alkoxyalkylacrylat-Copolymere, Acrylnitril/Vinylhalogenid-Copolymere oder Acryl/nitril/Alkylmethacrylat/Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten; Polyacetale, die mit termoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso-und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.

29. Wässrige Emulsionen natürlicher oder synthetischer Kautschuke, wie z.B. Naturkautschuk-Latex oder Latices von carboxylierten Styrol-Butadien-Copolymeren.

Die Einarbeitung der erfindungsgemässen Verbindungen der Formel I und allenfalls weiterer Zusätze in das organische Material erfolgt nach an sich bekannten Methoden. Sie kann beispielsweise durch Einmischen der erfindungsgemässen Produkte und gegebenenfalls weiterer Additive nach den in der Technik üblichen Methoden, vor oder während der Formgebung, oder auch durch Aufbringen der gelösten oder dispergierten Verbindungen auf das Polymer, gegebenenfalls unter nachträglichem Verdunsten des Lösungsmittels, erfolgen. Die erfindungsgemässen Produkte können auch in Form eines Masterbatches, der diese beispielsweise in einer Konzentration von 2,5 bis 25 Gew.-% enthält, den zu stabilisierenden Materialien zugesetzt werden. Die erfindungsgemässen Produkte können auch vor oder während der Polymerisation oder vor der Vernetzung zugegeben werden.

Zweckmässig kann die Einarbeitung der Verbindungen der Formel I nach folgenden Methoden erfolgen:

- als Emulsion oder Dispersion (z.B. zu Latices oder Emulsionspolymeren)
- Als Trockenmischung während des Vermischens von Zusatzkomponenten oder Polymermischungen
- direktes Zugeben in die Verarbeitungsapparatur (.z.B. Extruder, Innenmischer usw.)
- als Lösung oder Schmelze.

Die Verbindungen der Formel I können z.B. in Mengen von 0,01 bis 10 Gew.-%, zweckmässig 0,1 bis 5 Gew.-% und vorzugsweise von 0,1 bis 3 Gew.-%, bezogen auf das organische Material, im organischen Material eingesetzt werden.

Die so stabilisierten Materialien können in verschiedenster Form angewendet werden, z.B. als Folien, Fasern, Bändchen, Formmassen, Profile oder als Bindemittel für Lacke, Klebestoffe oder Kitte.

Die Verbindungen der Formel I stellen in organischen Materialien wertvolle Additive dar.

Zusätzlich zu den Verbindungen der Formel I können die obengenannten organischen Materialien und besonders die synthetischen Polymere andere Additive enthalten. Beispiele für zusätzliche Additive sind:

1. Antioxidantien

1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

1.3. Hydroxylierte Thiodiphenylether, z.B. 2,2′-Thio-bis-(6-tert.butyl-4-methylphenol), 2,2′-Thio-bis-(4-octylphenol), 4,4′-Thio-bis-(6-tert.butyl-3-methylphenol), 4,4′-Thio-bis-(6-tert.butyl-2-methylphenol).

1.4. Alkyliden-Bisphenole, z.B. 2,2′-Methylen-bis-(6-tert.butyl-4-methylphenol), 2,2′-Methylen-bis-(6-tert.butyl-4-ethylphenol), 2,2′-Methylen-bis-[4-methyl-6-(α-methylcyclohexyl)-phenol], 2,2′-Methylen-bis-(4-methyl-6-cyclohexylphenol), 2,2′-Methylen-bis-(6-nonyl-4-methylphenol), 2,2′-Methylen-bis-(4,6-di-tert.butylphenol), 2,2′-Ethyliden-bis-(4,6-di-tert.butylphenol), 2,2′-Ethyliden-bis-(6-tert.butyl-4-isobutylphenol), 2,2′-Methylen-bis-[6-(α-methylbenzyl)-4-nonylphenol], 2,2′-Methylen-bis-[6-(α,α-dimethylbenzyl)-4-nonylphenol], 4,4′-Methylen-bis-(2,6-di-tert.butylphenol), 4,4′-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3′-tert.butyl-4′-hydroxyphenyl)-butyrat], Bis-(3-tert.butyl-4-hydroxy-5-methylphenyl)-dicyclopentadien, Bis-[2-(3′-tert.butyl-2′-hydroxy-5′-methylbenzyl)-6-tert.butyl-4-methyl-phenyl]-terephthalat.

1.5 Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N′-Bis-(hydroxyethyl)-oxalsäurediamid.

1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.

1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.

1.10. Amide der β-(3,5-Di-tert.butyl-4-hydroxyphenyl)-propionsäure, wie z.B. N,N′-Bis-(3,5-di-tert.butyl-4-hydroxyphenylpropionyl)-hexamethylendiamin, N,N′-Bis-(3,5-di-tert.butyl-4-hydroxyphenylpropionyl)-trimethylendiamin, N,N′-Bis-(3,5-di-tert.butyl-4-hydroxyphenylpropionyl)-hydrazin.

2. UV-Absorber und Lichtschutzmittel

2.1. 2-(2′-Hydroxyphenyl)-benztriazole, wie z.B. das 5′-Methyl-, 3′,5′-Di-tert.butyl-, 5′-tert.Butyl-, 5′-(1,1,3,3-Tetramethylbutyl)-, 5-Chlor-3′,5′-di-tert.butyl-, 5-chlor-3′-tert.butyl-5′-methyl-, 3′-sec.Butyl-5′-tert.butyl, 4′-Octoxy-, 3′,5′-Di-tert.amyl-, 3′,5′-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2′,4′-Trihydroxy-, , 2′-Hydroxy-4,4′-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxyzimtsäure-methylester,N-(β-Carbomethoxy-β-cyanovinyl)-2-methyl-indolin.

2.5. Nickelverbindungen, wie z.B. Nickelkomplexe des 2,2′-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N′-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1′-(1,2-Ethandiyl)-bis-(3,3,5,5-tetramethyl-piperazinon).

2.7. Oxalsäurediamide, wie z.B. 4,4′-Di-octyloxy-oxanilid, 2,2′-Di-octyloxy-5,5′-di-tert.butyl-oxanilid, 2,2′-Di-dodecyloxy-5,5′di-tert.butyloxanilid, 2-Ethoxy-2′-ethyl-oxanilid, N,N′-Bis-(3-dimethylaminopropyl)-oxalamid, 2-Ethoxy-5-tert.butyl-2′-ethyloxanilid und dessen Gemisch mit 2-Ethoxy-2′-ethyl-5,4′-di-tert.butyl-oxanilid, Gemische von o-und p-Methoxy- sowie von o- und p-Ethoxy-di-substituierten Oxaniliden.

2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin.

3. Metalldesaktivatoren, wie z.B. N,N′-Diphenyloxalsäurediamid, N-Salicylal-N′-salicyloylhydrazin, N,N′-Bis-(salicyloyl)-hydrazin, N,N′-Bis-(3,5-di-tert.butyl-4-hydroxyphenylpropionyl)-hydrazin, 3-Salicyloylamino-1,2,4-triazol, Bis-(benzyliden)-oxalsäuredihydrazid.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy)-2,4,8,10-tetraoxa-3,9-diphosphaspiro[5.5]undecan.

5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrittetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Bevorzugtes organisches Material ist in vorstehender Liste unter Punkt 28 erwähnt. Insbesondere gehören dazu die funktionellen Flüssigkeiten, zu denen beispielsweise die Schmierstoffe, die Hydraulikflüssigkeiten und die Metallbearbeitungsflüssigkeiten gehören.

Als Schmierstoffe können z.B. die Schmieröle für Verbrennungskraftmaschinen, die Hydrauliköle, die Kompressoröle und die sogenannten Industrieschmierstoffe, welche beispielsweise die Gruppen der Turbinenöle, sowohl für Dampf- wie Gasturbinen, umfassen, genannt werden.

Als Schmieröle für Verbrennungskraftmaschinen werden insbesondere die Schmieröle umfasst, welche den Schmierkreislauf einer Verbrennungskraftmaschine aus dem Kurbelgehäuse oder Trockensumpf bedienen. Mit Verbrennungskraftmaschinen sind beispielsweise Hub- oder Drehkolbenmotoren mit Eigen- oder Fremdzündung (Diesel- oder Ottoprinzip) gemeint.

Die in Frage kommenden Schmierstoffe, Hydraulikflüssigkeiten und Metallbearbeitungsflüssigkeiten basieren beispielsweise auf mineralischen oder synthetischen Oelen, sowie aus Quellen der belebten Natur stammenden Oelen oder Mischungen davon. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek,"Das Schmiermittel-Taschenbuch" (Dr. Alfred Hüthig-Verlag, Heidelberg, 1974) und in "Ullmanns Enzyklopädie der technischen Chemie", Bd. 13, Seiten 85-94 (Verlag Chemie, Weinheim, 1977) beschrieben.

Die Schmierstoffe sind insbesondere Oele. Fette, beispielsweise basierend auf einem Mineralöl, sind mitumfasst.

Die Mineralöle basieren insbesondere auf Kohlenwasserstoffverbindungen.

Beispiele von synthetischen Schmierstoffen umfassen Schmierstoffe auf der Basis der aliphatischen oder aromatischen Carboxylester, der polymeren Ester, der Polyalkylenoxide, der Phosphorsäureester, der Poly-α-olefine oder der Silicone, eines Diesters einer zweiwertigen Säure mit einem einwertigen Alkohol, wie z.B. Dioctylsebacat oder Dinonyladipat, eines Triesters von Trimethylolpropan mit einer einwertigen Säure oder mit einem Gemisch solcher Säuren, wie z.B. Trimethylolpropantripelargonat, Trimethylolpropantricaprylat oder Gemische davon, eines Tetraesters von Pentaerythrit mit einer einwertigen Säure oder mit einem Gemisch solcher Säuren, wie z.B. Pentaerythrit-tetracaprylat, oder eines komplexen Esters von einwertigen und zweiwertigen Säuren mit mehrwertigen Alkoholen, z.B. ein komplexer Ester von Trimethylolpropan mit Capryl- und Sebacinsäure oder von einem Gemisch davon. Besonders geeignet sind neben Mineralölen z.B. Poly-α-Olefine, Schmierstoffe auf Esterbasis, Phosphate, Glykole, Polyglykole und Polyalkylenglykole, sowie deren Mischungen mit Wasser.

Beispielsweise Hydrauliköle, aber auch Schmieröle und -fette können auf tierischer und pflanzlicher Basis beruhen und beispielhaft können tierische Talge, Sperm-, Fisch- und Knochenöl, Palmkernöl, Rapsöl, Leinöl, Rüböl, Sojabohnenöl, Kokosöl, Nussöl und deren modifizierten, wie epoxidierten und sulfurisierten, Formen angegeben werden.

Die Schmierstoffe können zusätzlich andere Additive enthalten, die zugegeben werden, um die Grundeigenschaften von Schmierstoffen noch weiter zu verbessern; dazu gehören: Antioxidantien, Metallpassivatoren, Rostinhibitoren, Viskositätsindex-Verbesserer, Stockpunkterniedriger, Dispergiermittel, Detergentien, Hochdruck-Zusätze und Antiverschleiss-Additive.

Beispielsweise ist eine Reihe solcher Verbindungen obiger Auflistung "1. Antioxidantien", insbesondere Punkte 1.1 bis 1.10 zu entnehmen. Darüberhinaus sind weitere Additive beispielhaft zu nennen:

Beispiele für aminische Antioxidantien:

N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylamino-phenol, 4-Dodecanoylamino-phenol, 4-Octadecanoylamino-phenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl-/tert-Octyldiphenylaminen, 2,3-Dihydro-3,3-dimethyl-4H-1,4-benzothiazin, Phenothiazin, N-Allylphenothiazin.

Beispiele für weitere Antioxidantien:

Aliphatische oder aromatische Phosphite, Ester der Thiodipropionsäure oder der Thiodiessigsäure, oder Salze der Dithiocarbamid- oder Dithiophosphorsäure.

Beispiele für Metall-Passivatoren, z.B. für Kupfer, sind:

Triazole, Benztriazole und deren Derivate, Tolutriazole und deren Derivate, 2-Mercaptobenzthiazol, 2-Mercaptobenztriazol, 2,5-Dimercaptobenztriazol, 2,5-Dimercaptobenzthiadiazol, 5,5'-Methylenbisbenztriazol, 4,5,6,7-Tetrahydrobenztriazol, Salicyliden-propylendiamin, Salicylaminoguanidin und dessen Salze.

Beispiele für Rost-Inhibitoren sind:

a) Organische Säuren, ihre Ester, Metallsalze und Anhydride, z.B.:
N-Oleoyl-sarcosin, Sorbitan-mono-oleat, Blei-naphthenat, Alkenylbernsteinsäureanhydrid, z.B. Dodecenylbernsteinsäure-anhydrid, Alkenylbernsteinsäure-Teilester und -Teilamide, 4-Nonylphenoxy-essigsäure.
b) Stickstoffhaltige Verbindungen, z.B.:
  I. Primäre, sekundäre oder tertiäre aliphatische oder cycloaliphatische Amine und Amin-Salze von organischen und anorganischen Säuren, z.B. öllösliche Alkylammoniumcarboxylate.
  II. Heterocyclische Verbindungen, z.B.:
  Substituierte Imidazoline und Oxazoline.
c) Phosphorhaltige Verbindungen, z.B.:
Aminsalze von Phosphorsäurepartialestern oder Phosphonsäurepartialestern, Zinkdialkyldithiophosphate.
d) Schwefelhaltige Verbindungen, z.B.:
Barium-dinonylnaphthalin-sulfonate, Calciumpetroleum-sulfonate.

Beispiele für Viskositätsindex-Verbesserer sind:

Polyacrylate, Polymethacrylate, Vinylpyrrolidon/Methacrylat-Copolymere, Polyvinylpyrrolidone, Polybutene, Olefin-Copolymere, Styrol/Acrylat-Copolymere, Polyether.

Beispiele für Stockpunkterniedriger sind:

Polymethacrylat, alkylierte Naphthalinderivate.

Beispiele für Dispergiermittel/Tenside/Detergentien sind:

Polybutenylbernsteinsäureamide oder -imide, Polybutenylphosphonsäurederivate, basische Magnesium-, Calcium-, und Bariumsulfonate und -phenolate.

Beispiele für Hochdruckzusätze/Verschleissschutz-Additive sind:

Schwefel und/oder Phosphor und/oder Halogen enthaltende Verbindungen, wie geschwefelte pflanzliche Oele, Zinkdialkyldithiophosphate, Tritolylphosphat, chlorierte Paraffine, Alkyl- und Aryldi- und tri-sulfide, Triphenylphosphorothionate, Diethanolaminomethyltolyltriazol, Di(2-ethylhexyl)aminomethyltolyltriazol.

Beispielsweise enthalten die organischen Materialien 0,01 bis 10 Gew.-%, zweckmässig 0,05 bis 5 Gew.-%, vorzugsweise 0,05 bis 3 Gew.-% und insbesondere 0,1 bis 2 Gew.-%, insgesamt von wenigstens einer Verbindung der Formel I, wie oben erwähnt.

Derartige erfindungsgemässe Zusammensetzungen weisen im Falle von Thermoplasten und Elastomeren herausragende Bearbeitungs- und Gebrauchseigenschaften auf und die erfindungsgemässen Verbindungen der Formel I sind demzufolge als Bearbeitungs- und Gebrauchsadditive für Thermoplaste und Elastomeren zu bezeichnen.

In funktionellen Flüssigkeiten, wie Schmierstoffen, weisen die erfindungsgemässen Verbindungen der Formel I die Eigenschaften eines multifunktionellen Additives auf und verbessern auf hervorragende Weise die Hochdruck- und Reibabnutzungseigenschaften. Hervorzuheben ist insbesondere der Effekt auf die Verminderung der Reibabnutzung, sowie der Korrosions(Rost)-schutz.

Vorliegende Erfindung umfasst auch die Verwendung der Verbindungen der Formel I, wie obengenannt, in organischen Materialien. Zweckmässige und vorzugsweise Verwendungen lassen sich sinngemäss aus zweckmässigen und vorzugsweisen Verbindungen der Formel I und als zweckmässig und vorzugsweise bezeichneten organischen Materialien herleiten.

Die Verbindungen der Formel I, worin Z = -H ist, nach vorliegender Erfindung, sind erhältlich durch das erfindungsgemässe Verfahren, das dadurch gekennzeichnet ist, dass eine Verbindung der allgemeinen Formel II

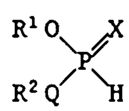

(II),

worin X, Q, $R^1$ und $R^2$ die weiter oben angegebenen Bedeutungen haben, mit einer Verbindung der allgemeinen Formel III

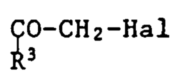

(III) ,

wobei $R^3$ ebenfalls die weiter oben angegebene Bedeutung und Hal die Bedeutung I, Br oder vorzugsweise Cl hat, in einer ersten Umsetzungsstufe zu einer Verbindung der allgemeinen Formel IV

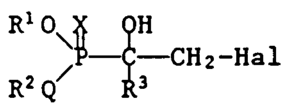

(IV) ,

wobei X, Q, $R^1$, $R^2$, $R^3$ und Hal die angegebene Bedeutung haben, umgesetzt wird, und, in einer zweiten Umsetzungsstufe, die Verbindung der allgemeinen Formel IV mit einer Verbindung der allgemeinen Formel V

$$[MS]_n-R^4 \qquad (V)$$

oder einer Verbindung der allgemeinen Formel Va

M-S-M (Va)

oder einer Verbindung der Formel Vb

$$M-[S]_q-M \qquad (Vb),$$

worin q eine Zahl von 2, 3, 4 oder 5 ist, umgesetzt wird, wobei $R^4$ und n die weiter oben angegebene Bedeutung haben und M die Bedeutung von Alkalimetall oder -H hat. Hat M in Verbindungen der Formeln V, Va oder Vb die Bedeutung von -H, kann gegebenenfalls auch ein tertiäres Amin, wie z.B. $(C_2H_5)_3N$ oder $(nC_4H_9)_3N$ als Kondensationsmittel eingesetzt werden.

Verbindungen der Formel I, worin Z die Bedeutung von $-COR^{13}$, $-COOR^{13}$ oder $-CONHR^{13}$ hat, können nach an sich bekannter Weise, beispielsweise aus Verbindungen der Formel I, worin Z die Bedeutung von -H hat, durch Acylierung mit Acylierungsagentien, durch Umsatz mit entsprechenden Anhydriden, Säurechloriden, Kohlensäurechloriden oder durch Addition an entsprechende Isocyanate, hergestellt werden. Beispielsweise kann das Verfahren auch unter Zuhilfenahme der Phasentransfertechnik durchgeführt werden.

M kann beispielsweise als Alkalimetall Li, Na, K, Rb oder Cs, vorzugsweise Na oder K und insbesondere Na darstellen.

Die Verwendung von Verbindungen der Formeln II, III, IV und V, in denen die Substituenten $R^1$, $R^2$, $R^3$ und $R^4$ zweckmässige oder vorzugsweise Ausführungsformen darstellen, führen zu zweckmässigen oder vorzugsweisen Verfahren.

Zweckmässige erfindungsgemässe Verfahren sind dadurch gekennzeichnet, dass die erste Umsetzungsstufe, die zu Verbindungen der Formel IV führt, in Gegenwart eines basischen Katalysators ausgeführt wird.

Als basische Katalysatoren für diese Umsetzungsstufe sind beispielsweise Alkalihydroxide, wie Natrium- oder Kaliumhydroxid, Alkalialkoholate, wie Natrium- oder Kaliummethylat, -ethylat oder -propylat geeignet. Zweckmässig wird Natriumhydroxid, Kaliumhydroxid, Natriummethylat oder Natriumethylat als Katalysator eingesetzt.

Die Menge des Katalysators ist nicht kritisch; zweckmässig wird, bezogen auf die Verbindung der Formel II, 0,001 bis 20 Gew.-%, vorzugsweise 0,01 bis 10 Gew.-% des Katalysators für die erste Umsetzungsstufe angewendet.

Die zweite Umsetzungsstufe wird vorteilhaft mit stöchiometrischen Mengen eines Alkalimercaptides M-$SR^4$ oder M-S-M oder $M-(S)_q-M$ ausgeführt, wobei M und $R^4$ genannte Bedeutungen haben und q 2, 3, 4 oder 5 bedeutet.

Die zweite Umsetzungsstufe, der thiolytische Austausch von Halogen in Verbindungen der Formel III, kann beispielsweise auch mit den entsprechenden SH-Verbindungen vorgenommen werden, wobei stöchiometrische Mengen an tertiären Aminen angewendet werden können.

Geeignete tertiäre Amine haben die Formel

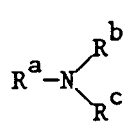

,

wobei $R^a$, $R^b$ und $R^c$, unabhängig voneinander, lineare oder verzweigte, $C_1$-$C_8$-Alkylreste, $C_3$-$C_8$-Alkenylreste, Cycloalkyl mit 5 bis 12 Ring-C-Atomen, Phenyl oder $C_1$-$C_4$alkylsubstituiertes Phenyl sind, ferner können z.B. Pyridinderivate und andere heterocyclische Basen angewendet werden.

Beispiele für besonders geeignete tertiäre Amine sind Triethylamin, Tributylamin oder Triisopropylamin, sowie Pyridin oder 1,8-Diazobicyclo[5.4.0]undec-5-en (DBU).

Ganz besonders bevorzugte tertiäre Amine sind jedoch die sogenannten Hünig-Basen, demnach Verbindungen die z.B. Chlorwasserstoff zu binden vermögen, jedoch zu einer $\beta$-Eliminierung unfähig sind.

In beiden Umsetzungsstufen kann ein Lösungsmittel Verwendung finden, wobei die Menge an sich nicht kritisch ist und Lösungsmittel, wie Toluol, Xylol, Tetrahydrofuran, Dioxan, Diglyme, t-Butylmethylether usw. verwendet werden können. Alkohole sind ebenfalls Beispiele geeigneter Lösungsmittel, sofern der Alkoholrest mit $R^1$ und $R^2$ übereinstimmt und Q = O ist. Zweckmässig werden die Umsetzungen ohne Lösungsmittel durchgeführt, wobei die Reaktionsteilnehmer auch als Lösungsmittel untereinander wirken können.

Die Mengenverhältnisse von Verbindungen der Formel II zu Verbindungen der Formel III in der ersten Umsetzungsstufe sind an sich nicht kritisch, zweckmässig werden die Verbindungen, bezogen auf die Aequivalente, in einem stöchiometrischen Verhältnis von 1 zu 0,8 bis 1,2, vorzugsweise in einem Verhältnis von 1 zu 0,95 bis 1,05, angewendet.

In der zweiten Umsetzungsstufe, bei der Umsetzung von Verbindungen der Formel IV mit Verbindungen der Formel V zu Verbindungen der Formel I kann beispielsweise das stöchiometrische Verhältnis von einem Aequivalent der Formel IV zu einem Aequivalent der Formel V 1 zu 0,8 bis 1,2, vorzugsweise von 1 zu 0,95 bis 1,05, betragen.

Die Reaktionstemperaturen und Reaktionszeiten sind in beiden Stufen unkritisch und in der Regel wird das Verfahren zwischen O°C und der Rückflusstemperatur des jeweiligen Reaktionsgemisches durchgeführt. Zweckmässig wird zu Beginn der jeweiligen Reaktion die Temperatur zwischen O°C, vorzugsweise 20°C, und 40°C, vorzugsweise 35°C gehalten und gegen Ende der Reaktion die Temperatur zwischen 20°C und Rückflusstemperatur ansteigen gelassen. Die Reaktionszeiten betragen in der Regel zwischen 20 Minuten und 2 Stunden, wobei die Reaktanden meistens nach 20 bis 40 Minuten weitgehend umgesetzt sind und noch während beispielsweise weiteren 20 Minuten bis zu einer Stunde nachgerührt werden. Die Reaktion verläuft, wie beschrieben, in der Regel in zwei Stufen. Die Reaktionsführung kann auch zu einem Eintopfverfahren ausgestaltet werden.

Die erfindungsgemässen Verfahren folgen, beispielhaft, folgenden als Beispiele gewählten Formeln:

1. Erste Umsetzungsstufe:

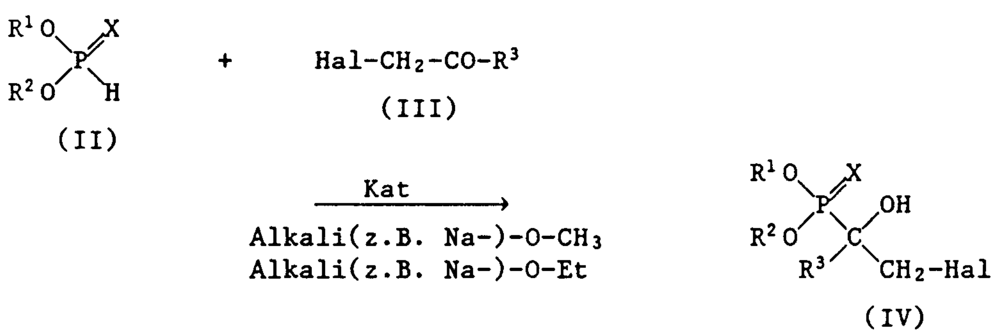


(II) (III) (IV)

2a) Zweite Umsetzungsstufe, wenn in Formel I n = 1 und $R^4$ einen monovalenten Rest $R^{4'}$ darstellt:

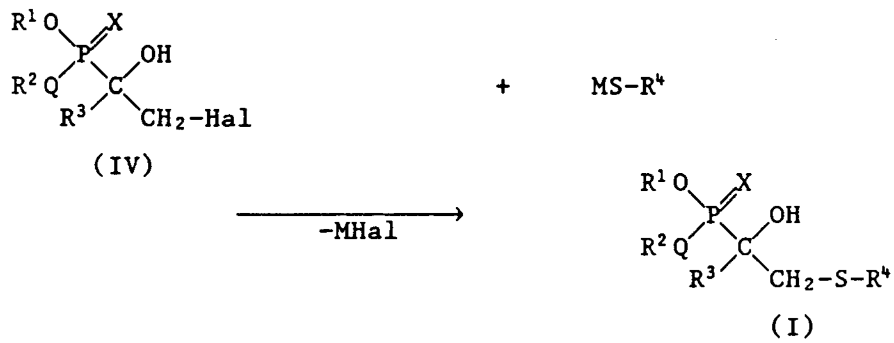


(IV) (I)

2b) Zweite Umsetzungsstufe, wenn in Formel I n = 1 und $R^{4'}$ beispielsweise

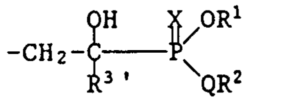

oder

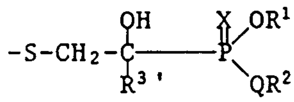

darstellt:

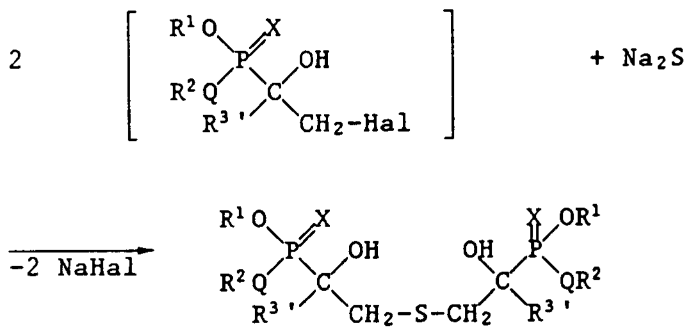


oder

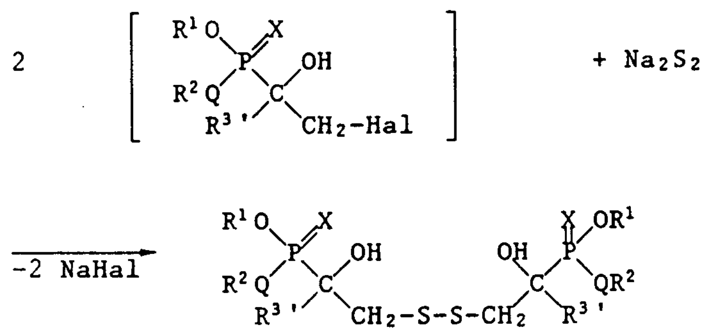


2c) Zweite Umsetzungsstufe, wenn in Formel I n = 2 und entsprechend $R^4$ einen bivalenten Rest darstellt:

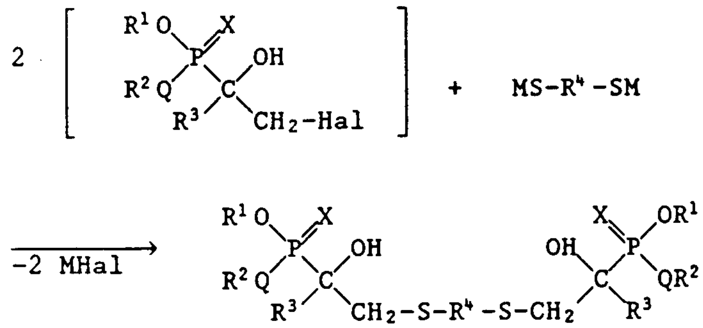


2d) Zweite Umsetzungsstufe, wenn in Formel I n = 3 und entsprechend $R^4$ einen 1,3,5-Triazinrest bedeutet:

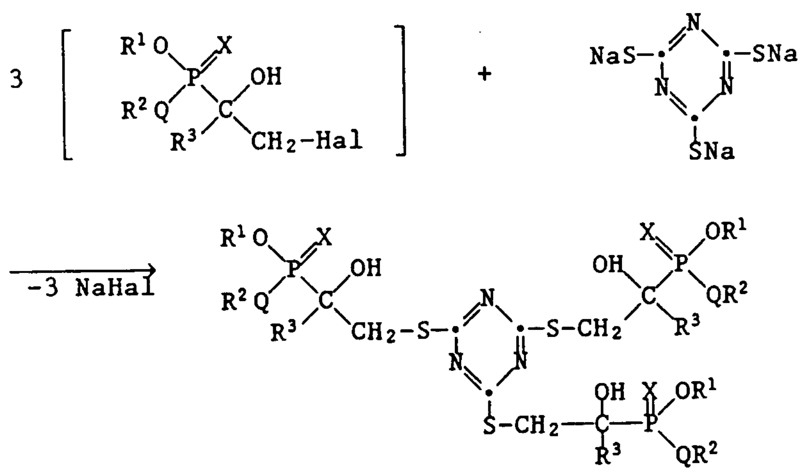


Die zweite Stufe kann auch mit den entsprechenden Alkalimercaptiden, die über die Alkalialkoholate in einem inerten Lösungsmittel leicht zugänglich sind, durchgeführt werden.

Ein weiteres Beispiel zur Herstellung einer Reihe der erfindungsgemässen Verbindungen folgt den allgemeinen Formeln

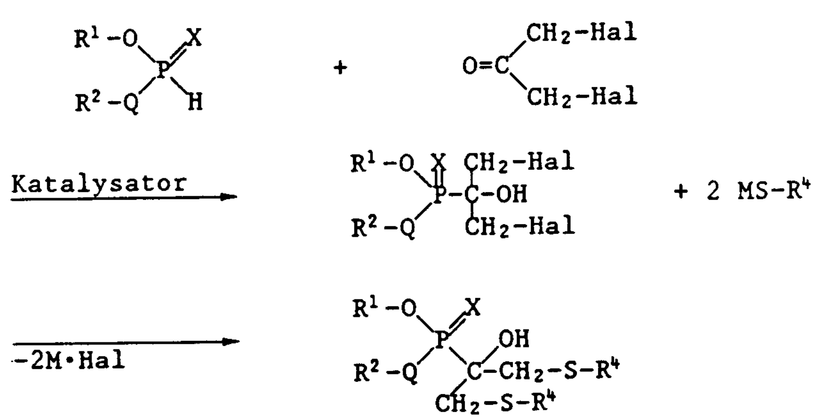


Beispiele besonders bevorzugter Umsetzungen und daraus erhältlicher Umsetzungsprodukte sind für die erste Umsetzungsstufe:

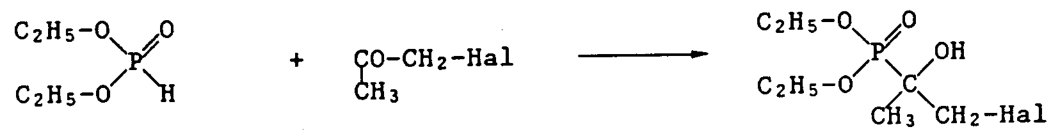

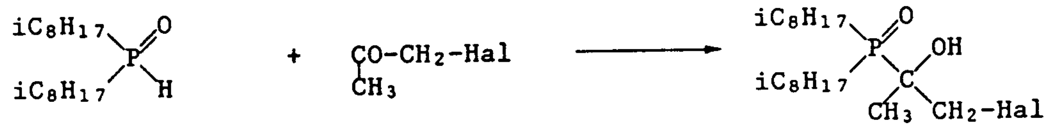

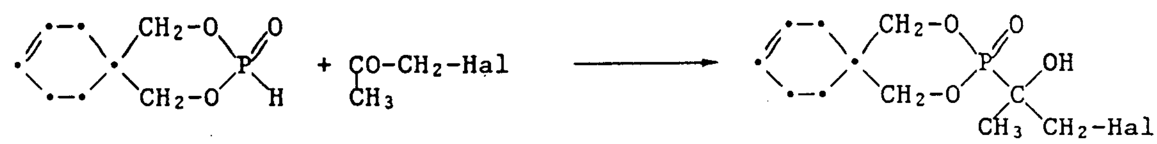

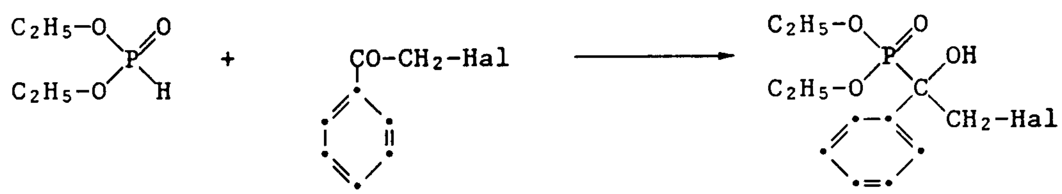

Bevorzugte Verbindungen sind beispielsweise durch nachfolgend beschriebene Verfahren in einer zweiten Umsetzungsstufe erhältlich:

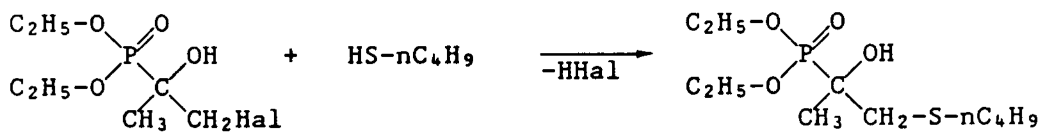


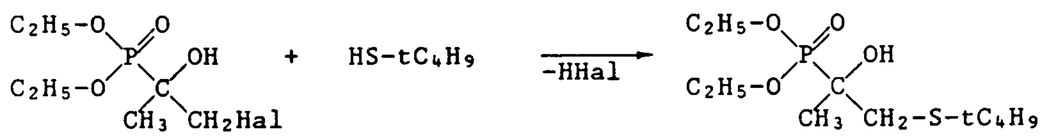


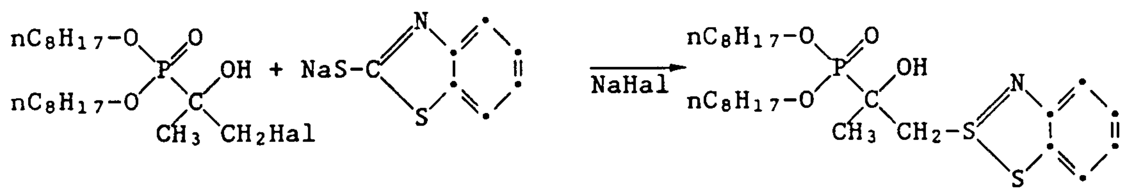


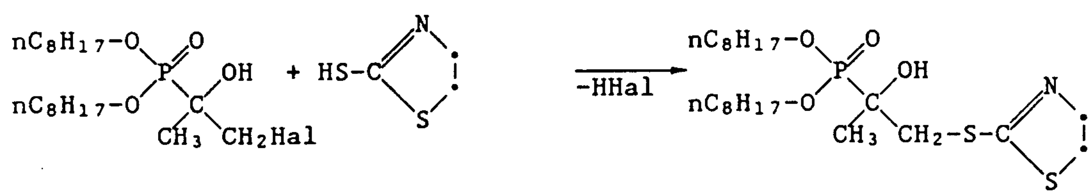


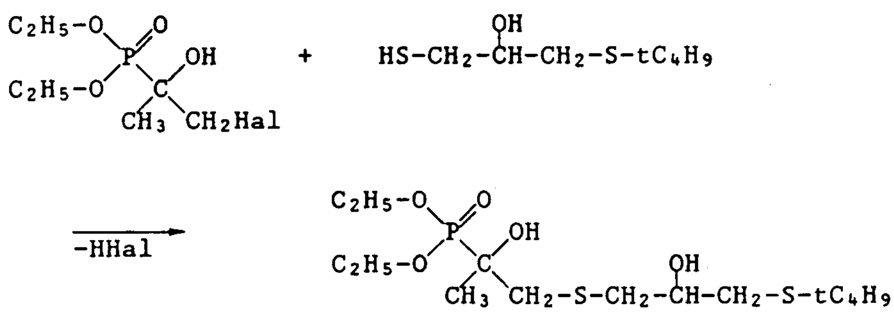


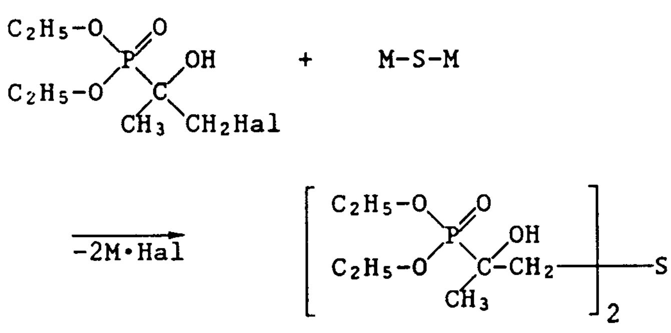


Bei Verwendung von HS-Säuren des Phosphors wie z.B.

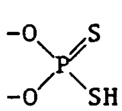

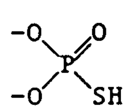

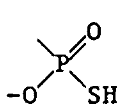

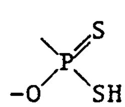

können erfindungsgemässe Verbindungen auch durch Umsetzung mit $\alpha,\beta$-Epoxi-phosphonsäuren erhalten werden, so z.B.

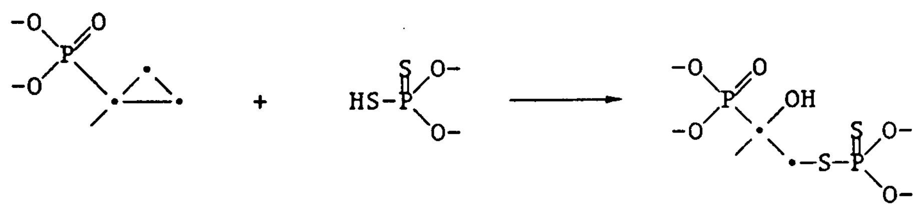

Ein weiteres Verfahren Verbindungen der allgemeinen Formel I nach der vorliegenden Efindung darzustellen ist die Umsetzung von Epoxiden der Formel X

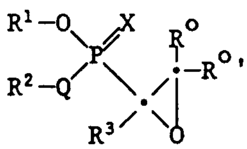

(X)

worin Q, X, $R^o$, $R^1$, $R^3$ die angegebenen Bedeutungen haben ($R^{o'}$mit gleicher Definition wie $R^o$, $R^o$ und $R^{o'}$ gleich oder verschieden) mit Verbindungen der Formel XI

$H\text{-}T\text{-}R^4$ (XI)

worin T und $R^4$ die angegebenen Bedeutungen haben zu Verbindungen der Allgemeinen Formel Ib

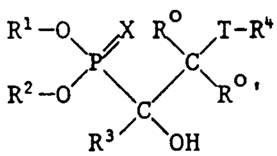

(Ib)

Die Epoxide der Formel X sind in der Literatur bekannt. Ihre Herstellung wird z.B. beschrieben in: B. Springs und P. Haake, J. Org. Chem. 41, 1165-68 (1976), eine Uebersicht über weitere Syntheseverfahren gibt: D. Redmore, Chem. Rev. 71, 326-331 (1971).

Die Verbindungen der allgemeinen Formel I nach vorliegender Erfindung sind auch erhältlich nach einem Verfahren, in Analogie, wie beschrieben in Chemical Abstracts 67, 43873n.

Gemäss diesem Verfahren wird beispielsweise eine Verbindung der Formel II

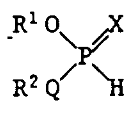

(II),

worin Q, X, $R^1$ und $R^2$ die angegebenen Bedeutungen haben, mit einer Verbindung der Formel VI

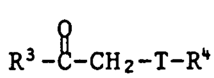

(VI),

worin T, $R^3$ und $R^4$ die angegebenen Bedeutungen haben, zu Verbindungen der allgemeinen Formel Ia

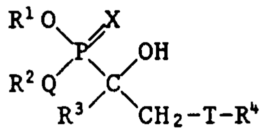

(Ia) ,

wobei T, Q, $R^1$, $R^2$, $R^3$, $R^4$ und X die angegebenen Bedeutungen haben, in Gegenwart eines basischen Katalysators umgesetzt.

Verbindungen der Formel Ia entsprechen Verbindungen der Formel I, wie oben beschrieben, worin Z = -H ist.

Bedeutet n eine Zahl von 2 oder 3 kann eine entsprechende Verbindung der Formel Ia beispielsweise nach folgender Gleichung hergestellt werden:

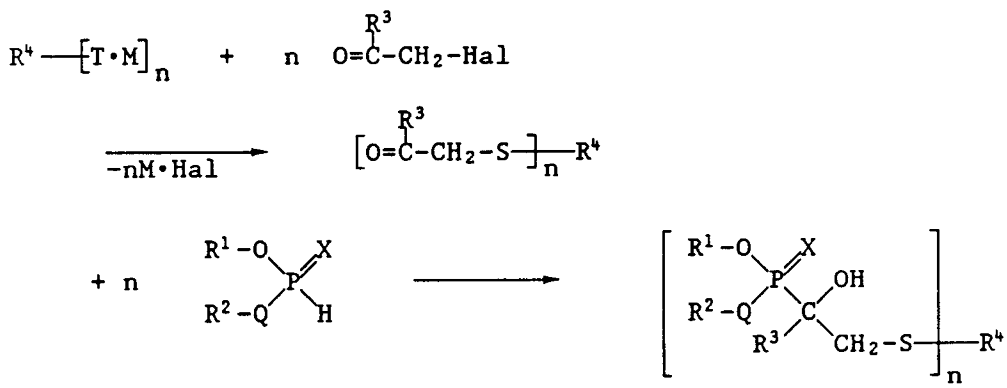

Beispiele besonders bevorzuger Umsetzungen, wie vorstehend beschrieben, sind:

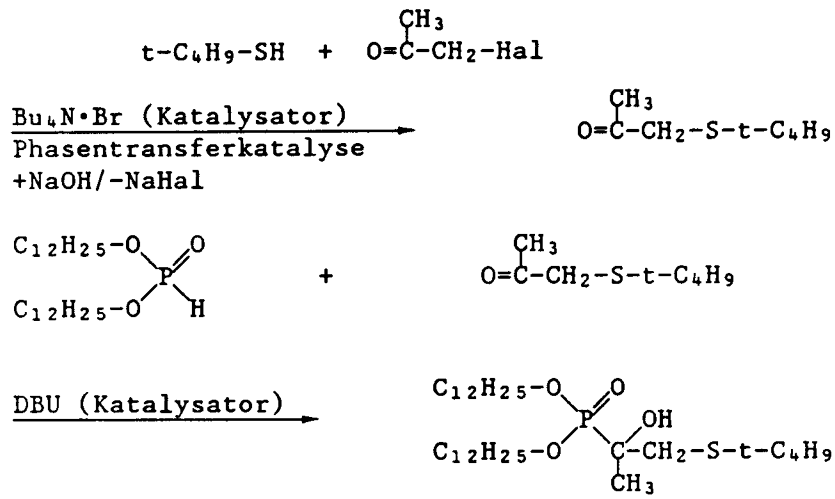


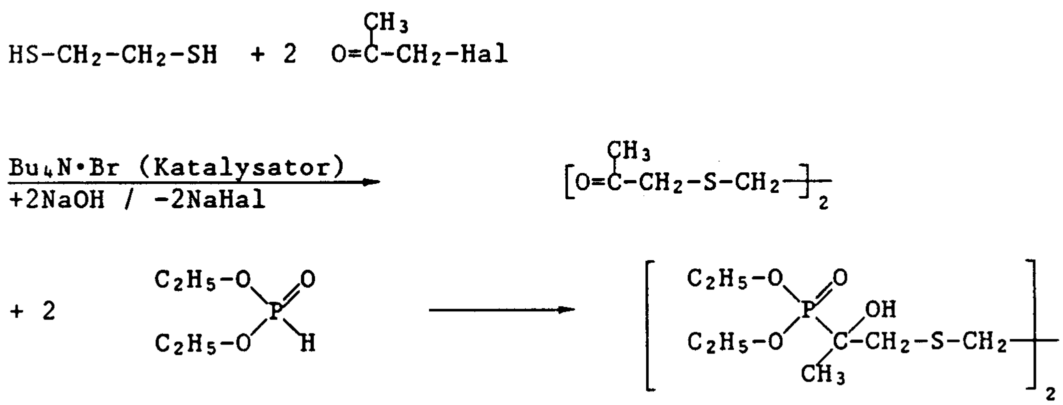


Die Verbindungen der Formel VI sind beispielsweise erhältlich durch Umsetzung einer Verbindung der Formel

$R^4$-SM

wobei $R^4$ und M die oben angegebenen Bedeutungen haben, mit einer Verbindung der Formel III

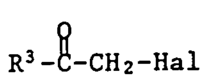 (III),

wobei $R^3$ und Hal die oben angegebenen Bedeutungen haben, beispielsweise in Gegenwart eines Katalysators, zweckmässig eines basischen Katalysators und insbesondere eines Phasentransferkatalysators.

Hat in Verbindungen der Formel I Z eine andere Bedeutung als -H, so sind derartige Verbindungen beispielsweise erhältlich, durch eine Umsetzung

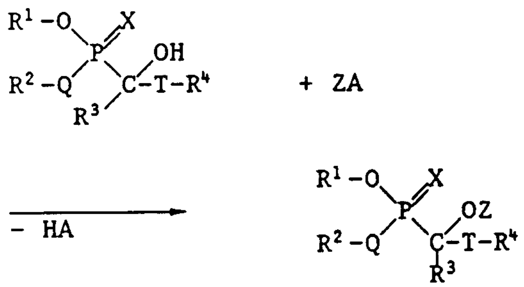


,

wobei $R^1$, $R^2$, $R^3$, $R^4$, Q, X, T und Z die obengenannte Bedeutung haben und A beispielsweise das Halogen eines Säurechlorids oder das Proton einer Säure oder eine Acyloxygruppe eines Anhydrides bedeutet.

Eine andere Verfahrensweise folgt z.B. der allgemeinen Formel

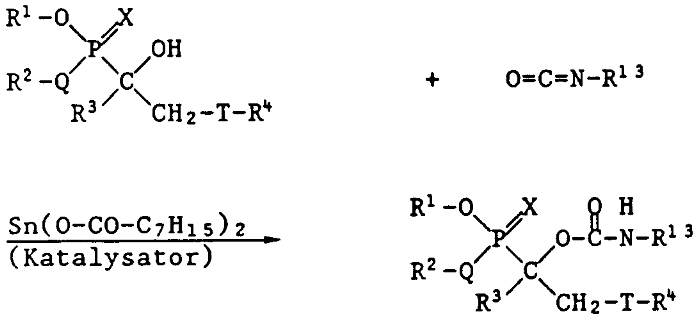


,

wobei $R^1$, $R^2$, $R^3$, $R^4$, $R^{13}$, Q, X und T die genannten Bedeutungen haben.

Diese Umestzungen von -OH zu $-O-COR^{13}$, $-OCOOR^{13}$ oder $-OCONHR^{13}$ können in jeder Verfahrensstufe bei der Herstellung von Verbindungen der Formel I erfolgen.

Die nachfolgenden Beispiele illustrieren die vorliegende Erfindung weiter. Teile- und Prozentangaben beziehen sich auf das Gewicht, sofern nichts anderes angegegeben ist.

<u>Beispiel 1:</u>

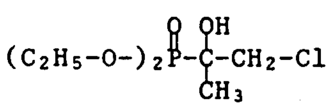

In einen 1-l-Sovirel-Kolben (doppelwandiges Reaktionsgefäss) mit Thermometer, Rührer, Rückflusskühler und pH-Elektrode werden 207 g Phosphorigsäurediethylester, 153 g Chloraceton und 600 ml Toluol auf 10 °C abgekühlt und unter Rühren und Kühlen mit 8 ml Natriummethylatlösung (30%ig in Methanol) versetzt. Bei einem pH-Wert von 8 setzt eine Exothermie ein, die Reaktionstemperatur steigt auf 34 °C an, das Gemisch wird anschliessend 60 Minuten nachgerührt, eine leichte Trübung abfiltriert und am Rotationsverdampfer auf Rückstand eingeengt.

Ausbeute: 346 g ≙ 100 % der Theorie

braune, viskose Flüssigkeit, $n_D^{20}$ : 1,4558

Gehalt lt. $^{31}$P-NMR: 90 %

Durch Destillation kann das Reaktionsgemisch gereinigt werden (Kp $_{0,2}$: 106 - 107 °C; Smp. 42 - 43 °C).

Analog den in Beispiel 1 genannten Bedingungen werden die in nachstehener Tabelle beschriebenen Verbindungen isoliert.

| Beispiel | Formel | Analyt. Daten | Ausbeute | Reaktionsmedium |
|---|---|---|---|---|
| 2 | 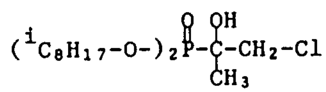 | $n_D^{20}$: 1,4596 | 100 % der Theorie<br>$^{31}$P-NMR 90 % | Toluol |
| 3 | 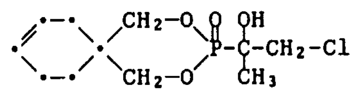 | Smp. 142-43°C | 91 % der Theorie | Diethylether |
| 4 | 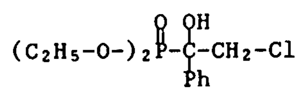 | Smp. 76 - 78°C<br>(Lit. 80°C) | 76 % der Theorie<br>(Heptan/Toluol) | Toluol |
| 5 | 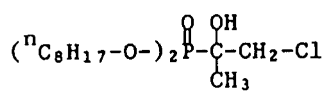 | $n_D^{20}$: 1,4579 | 96 % der Theorie | Toluol |
| 6 | 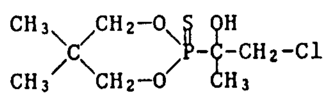 | Smp. 88-89°C | 68 % der Theorie<br>(Petrolether/Toluol) | Toluol |

Beispiel 7:

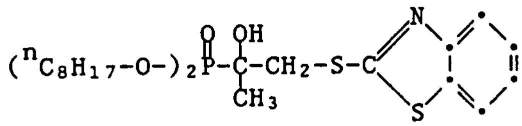

In 100 ml Tetrahdrofuran werden 36,8 g der Verbindung aus Beispiel 5 gelöst und unter Rühren mit 18,9 g des Natriumsalzes von 2-Mercaptobenzthiazol portionsweise versetzt. Das Gemisch wird dann 30 Minuten bei 20 °C nachgerührt, am Rotationsverdampfer auf Rückstand eingeengt, mit 150 ml Toluol aufgenommen. Diese Lösung wird dann mit wässrigem Natriumbicarbonat und Wasser gewaschen, über Natriumsulfat getrocknet und das Lösungsmittel abdestilliert.
Ausbeute: 38,4 g ≙ 78,9 % der Theorie
braune, viskose Flüssigkeit, $n_D^{20}$ : 1,5223

Beispiel 8:

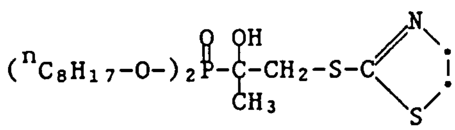

Verfahren wie im Beispiel 7 beschrieben, das Natriumsalz des 2-Mercaptobenzthiazols wird durch 14,1 g des Natriumsalzes von 2-Mercaptothiazolin ersetzt.
Ausbeute: 38,5 g ≙ 86,9 % der Theorie,
braune Flüssigkeit, $n_D^{20}$ : 1,5015

Beispiel 9:

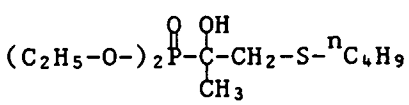

In 150 ml Ethanol abs. werden 4,5 g Natrium umgesetzt, diese Lösung wird dann mit 17,6 g $^n$Butylmercaptan versetzt. Anschliessend werden 46 g der Verbindung aus Beispiel 1 innerhalb 25 Minuten bei 30 - 35 °C unter Kühlung (Wasserbad) eingetropft, das Gemisch 30 Minuten unter Rückfluss erwärmt, auf 20 °C abgekühlt und das ausgefallene Natriumchlorid (8,1 g) isoliert. Die Mutterlauge wird auf Rückstand eingeengt, der Rückstand in 150 ml Diethylether gelöst, mit wässriger Natriumhydrogencarbonatlösung gewaschen und wieder auf Rückstand eingeengt.

Durch fraktionierte Destillation wird das Rohprodukt (46,0 g) anschliessend gereinigt.
Ausbeute: 28,8 g ≙ 52 % der Theorie, Kp: 119 - 22 °C/0,3, $n_D^{20}$ : 1,4696.

Beispiel 1O:

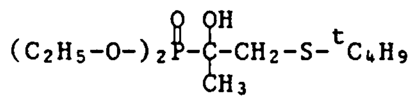

Verfahren wie im Beispiel 9 beschrieben, das $^{n}$Butylmercaptan wird durch $^{t}$Butylmercaptan ersetzt.
Ausbeute: 35,9 g ≙ 63,1 % der Theorie, Kp: 108 - 10 ° C/O,25,
$n_D^{20}$ : 1,4691.

Beispiel 11:

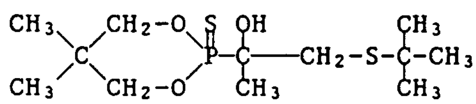

Verfahren wie in Beispiel 10 beschrieben, die Verbindung gemäss Beispiel 1 wird durch die Verbindung gemäss Beispiel 6 ersetzt.

Beispiel 12:

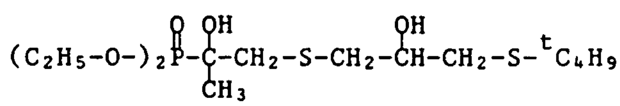

Verfahren wie im Beispiel 9 beschrieben, das $^{n}$Butylmercaptan wird durch 35,2 g $^{t}C_4H_9$-S-$CH_2$-CH(OH)-$CH_2$-SH ersetzt.
Ausbeute: 63,2 g ≙ 86,5 % der Theorie, farblose Flüssigkeit,
$n_D^{20}$ : 1.4944.

Beispiel 13:

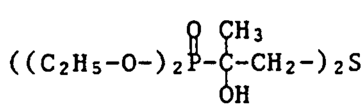

46 g der Verbindung aus Beispiel 1 werden in 100 ml Ethanol gelöst und in diese Lösung unter Rühren und Kühlen 11,7 g entwässertes Natriumsulfid portionenweise eingetragen.

Nach beendeter Zugabe wird das Reaktionsgemisch 30 Min. nachgerührt und das Lösungsmittel unter Vakuum abdestilliert. Der Rückstand wird in 200 ml Diethylether suspendiert, mit je 60 ml Wasser und Natriumbicarbonatlösung extrahiert, die organische Phase getrocknet und wieder auf Rückstand eingeengt.
Ausbeute: 24,1 g ≙ 57 % der Theorie gelbes Wachs.

Ein Teil dieser Substanz wurde aus Petrolether (100 - 140 ° C) umkristallisiert.

Der Schmelzpunkt beträgt dann 109-111 ° C.

Beispiel 14:

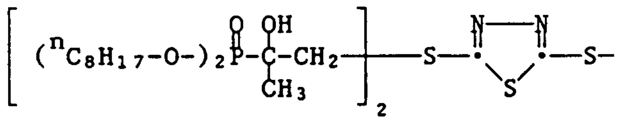

Die Herstellung erfolgt analog Beispiel 13, wobei 2 Mole der Verbindung gemäss Beispiel 5 mit einem Mol der Verbindung

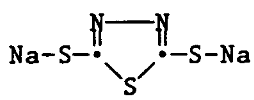

umgesetzt werden. Es resultiert eine braune, viskose Flüssigkeit, $n_D^{20}$ : 1,4650.

Beispiel 15:

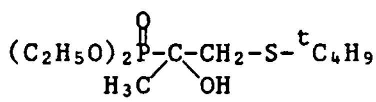

Synthese von 2-t-Butylthio-1-hydroxy-1-methyl-ethanphosphonsäure-diethylester.

8,99 g (65 mMol) Diethylphosphit werden in 20 ml wasserfreiem Ethanol vorgelegt und 0,90 g (5 mMol) einer 30%igen Lösung von Natriummethylat in Methanol zugegeben. Anschliessend werden 8,77 g (60 mMol) t-(Butylthio)-aceton zugetropft. Dabei steigt die Innentemperatur des Reaktionskolbens von 24 ° C auf 45 ° C. Diese Temperatur wird noch 40 Min. gehalten, anschliessend abgekühlt, mit 80 ml Toluol verdünnt, zweimal mit 20 ml Wasser gewaschen, über Natriumsulfat getrocknet und das Lösungsmittel im Vakuum entfernt.

Zurück bleiben 16,2 g (95 % der Theorie) einer schwach gelben Flüssigkeit, $n_D^{20}$ = 1,4685; $^{21}$P-NMR: $\delta$ = 25,56 ppm (~ 90 %)

Beispiel 16:

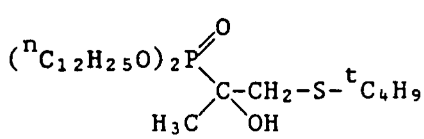

Synthese von 2-(t-Butylthio)-1-hydroxy-1-methyl-ethanphosphonsäure-didodecylester

23,0 g (55 mMol) Didodecylphosphit werden in einer Mischung aus 20 ml tert.-Butylmethylether und 5 ml Dimethylsulfoxid vorgelegt. Nach Zugabe von 1,0 g 1,8-Diazabicyclo[5.4.0]undec-5-en (DBU) werden bei 30 ° C 8,04 g (55 mMol) (t-Butylthio)-aceton zugetropft. Die Reaktionsmischung wird für 5 Std. auf 60 ° C erhitzt, abgekühlt, mit 150 ml Toluol verdünnt und mit 100 ml Wasser gewaschen. Die organische Phase wird über Natriumsulfat getrocknet, das Lösungsmittel und Reste der Edukte im Vakuum (zuletzt bei 0,5 mbar und 55 ° C Badtemperatur) abdestilliert.

Zurück bleiben 25,4 g (82 % der Theorie) einer farblosen, viskosen Flüssigkeit, $n_D^{20}$ = 1,4609.

Beispiel 17:

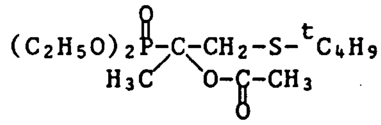

Synthese von 1-Acetoxy-2-t-butylthio-1-methyl-ethanphosphonsäure-diethylester

25,2 g (88,6 mmol) 2-t-Butylthio-1-hydroxy-1-methyl-ethanphosphonsäurediethylester werden in 130 ml Essigsäureanhydrid mit 1 ml konzentrierter Schwefelsäure versetzt, wobei die Temperatur der Lösung von 20 auf ca. 30 °C ansteigt. Anschliessend wird 8 Std. bei 20 °C gerührt, mit 100 ml Dichlormethan versetzt und auf 300 ml Eis/Wasser gegeben. Die abgetrennte organische Phase wird nacheinander mit verdünnter Salzsäure, Natriumhydrogencarbonatlösung und Wasser gewaschen, über Natriumsulfat getrocknet und das Lösungsmittel im Vakuum abdestilliert.

Es bleiben 17,4 g (60 % der Theorie) einer hellgelben Flüssigkeit mit $n_D^{20}$ : 1,4711 zurück.
$^1$H-NMR (200 MHz, $CDCl_3$): 1,76 ppm (d, $CH_3$, $J_{H,P}$ = 14,9 Hz); 2,08 ppm (S, Acetyl).

Beispiel 18:

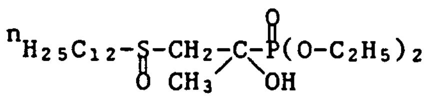

Synthese von 2-Dodecylsulfoxy-1-hydroxy-1-methylethanphosphonsäurediethylester

11,3 g (81,9 mmol) Diethylphosphit und 2 ml 1,8-Diazabicyclo[5.4.0]undecen (DBU) werden in 200 ml wasserfreiem Tetrahydrofuran vorgelegt, eine Lösung von 15,0 g (81,9 mmol) Dodecylsulfoxy-aceton in 50 ml Tetrahydrofuran zugetropft und anschliessend 8 Std. zum Rückfluss erhitzt. Die abgekühlte Lösung wird 2mal mit gesättigter Natriumchloridlösung gewaschen, über Natriumsulfat getrocknet und das Lösungsmittel, zuletzt bei 0,5 mbar und 60 °C Badtemperatur abdestilliert.

Es bleiben 19,7 g (87 der Theorie) einer gelben Flüssigkeit ($n_D^{20}$ : 1,4741) zurück, die langsam kristallisiert (Fp.: 52 - 53 °C).

Beispiel 19:

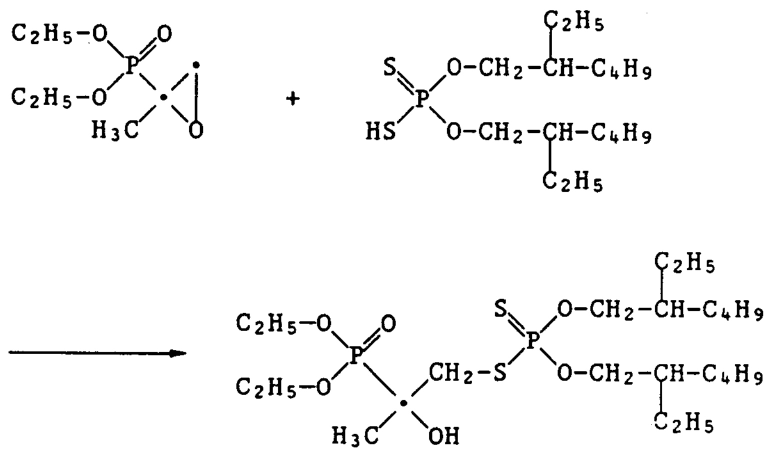

21,2 g (109 mmol) 1,2-Epoxy-1-methyl-ethanphosphonsäure-diethylester werden unter Stickstoff in 50 ml Toluol vorgelegt. Dann werden bei 20-25 °C (leicht exotherm) 38,7 g (109 mmol) Dithiophosphorsäure-O,O'-bis-(2-ethylhexyl)-ester zugetropft. Nach 5 h Rühren bei 20-25 °C wird 1 h auf 40 °C zur Vervollständigung der Reaktion erhitzt, und anschliessend werden die flüchtigen Bestandteile im Vakuum entfernt. Es bleiben 59,9 g (100 % der Theorie) einer farblosen Flüssigkeit mit $n_D^{20}$ = 1,4850 zurück.
$^1$H-NMR (200 MHz, $CDCl_3$): $\delta$ = 3,25 ppm (ddd, 1H, C-$CH_2$-S-P, J = 18,9, 13,6, 4,9 Hz);
3,54 ppm (td, 1H, C-$CH_2$-S-P, J = 14,9, 7,8 Hz);
4,00 ppm (cm, 4H, $CH_2$-O-P); 4,20 ppm (cm, 4H, $CH_2$-O-P).

Beispiel 20:

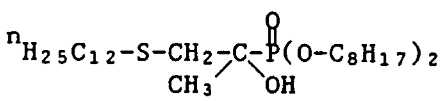

Synthese von 2-Dodecylthio-1-hydroxy-1-methyl-ethanphosphonsäure-dioctylester

25,6 (83,6 mmol) Phosphorigsäure-di-octylester werden in 100 ml tert-Butylmethylether vorgelegt, 0,4 g Natrium-tert-butanolat zugegeben und anschliessend 20,0 g (77,4 mol) Dodecylthio-aceton eingetragen.

Die Lösung wird anschliessend für 8 h unter Feuchtigkeitsausschluss zum Rückfluss erhitzt. Nach Abkühlen wird 2 x mit Wasser gewaschen, über Natriumsulfat getrocknet und die flüchtigen Bestandteile im Vakuum entfernt. Es bleiben 26,6 g (61 % der Theorie) einer farblosen viskosen Flüssigkeit mit $n_D^{20}$ = 1,4682 zurück.

Durch Säulenchromatographie mit Methanol/Dichlormethan 1:19 an Kieselgel ist eine weitere Reinigung möglich. Das so gereinigte Produkt hat $n_D^{20}$ = 1,4676.
$^1$H-NMR (200 MHz, $CDCl_3$): $\delta$ = 1,48 ppm (d, $CH_3$, $J_{H,P}$ = 15 Hz);
2,78 ppm (dd, 1H, S-$CH_2$-C($CH_3$)(OH)-, $J_{H,H}$ = 14 Hz, $J_{H,P}$ = 7,5 Hz);
3,11 ppm (dd, 1H, S-$CH_2$-C($CH_3$)(OH)-, $J_{H,P}$ = 8,5 Hz);
4,10 ppm (q, -O-$CH_2$-, J = 7 Hz), (≧ 95 %).

Beispiel 21:

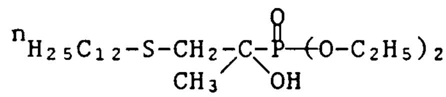

2-Dodecylthio-1-hydroxy-1-methyl-ethanphosphonsäure-di-ethylester wird ebenfalls nach dem oben beschriebenen Verfahren hergestellt, der Phosphorigsäure-di-octylester wird jedoch durch 10,6 g (76,8 mmol) Phosphorigsäure-di-ethylester ersetzt. Man erhält 23,4 g (77 % der Theorie) Rohprodukt.

Durch Säulenchromatographie kann reines Produkt mit $n_D^{20}$ = 1,4680 gewonnen werden.
$^1$H-NMR (200 MHz, $CDCl_3$): $\delta$ = 1,48 ppm (d, $CH_3$, $J_{H,P}$ = 15 Hz);
2,78 ppm (dd, 1H, S-$C\underline{H}_2$-$C(CH_3)(OH)$-, $J_{H,H}$ = 14 Hz, $J_{H,P}$ = 7,5 Hz);
3,11 ppm (dd, 1H, S-$C\underline{H}_2$-$C(CH_3)(OH)$-, $J_{H,P}$ = 8,5 Hz);
4,19 ppm (q, P-O-$C\underline{H}_2$-, J = 7,5 Hz), (≧ 95 %).

Beispiel 22:

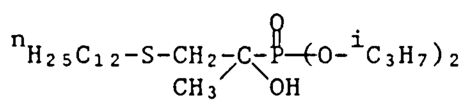

Synthese von 2-Dodecylthio-1-hydroxy-1-methyl-ethanphonphonsäure-di-isopropylester

12,0 g (72,2 mmol) Phosphorigsäure-di-isopropylester und 18,6 g (72,1 mmol) Dodecylthio-aceton werden mit 5,3 g (72 mmol) Diethylamin 72 h gerührt und anschliessend bei 50 °C Bad und 0,5 mbar die flüchtigen Bestandteile abgetrennt. Es bleiben 30,5 g (99 % der Theorie) einer gelben Flüssigkeit mit $n_D^{20}$ = 1,4636 zurück.
$^1$H-NMR (200 MHz, $CDCl_3$): $\delta$ = 1,48 ppm (d, $CH_3$, $J_{H,P}$ = 15 Hz);
2,75 ppm (dd, S-$C\underline{H}_2$-$C(CH_3)(OH)$-, $J_{H,H}$ = 13,8 Hz, $J_{H,P}$ = 7,5 Hz);
3,08 ppm (dd, S-$C\underline{H}_2$-$C(CH_3)(OH)$-, $J_{H,P}$ = 8,5 Hz);
4,76 ppm (cm, -O-$C\underline{H}(CH_3)_2$).

Beispiel 23:

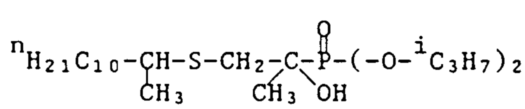

2-(1-Methyl-undecylthio)-1-hydroxy-1-methyl-ethanphosphonsäure-di-isopropylester wird nach dem oben beschriebenen Verfahren hergestellt, Dodecylthio-aceton wird durch (1-Methyl-undecylthio)-aceton ersetzt. Ausbeute 27,1 g (90 % der Theorie) einer gelben Flüssigkeit,
$n_D^{20}$ = 1,4593.

Beispiel 24-27: Zur prüfung auf Eignung als Verschleissschutzadditiv wird die ASTM-Standardmethode D-2783-81 unter Verwendung des Shell-Vierkugelapparates (VKA) herangezogen. Als Basisöl wird Catenex® p 941 der Fa. Shell verwendet, dem 1 Gew.-% der erfindungsgemässen Verbindung aus dem jeweils genannten Beispiel zugegeben wird. Ermittelt werden

a) Die Schweisslast WL (Weld Load) als die Last (in kg), bei der die 4 Kugeln innerhalb von 10 sec. zusammenschweissen, und

b) der mittlere Verschleiss-Narben-Durchmesser (Wear Scar Diameter) bei einer Last von 40 kg während 1 Stunde (in mm).

Es wird auch die Korrosivität gegenüber Kupfer nach der ASTM-Standardmethode D 130 bestimmt. Ein polierter Kupferstreifen wird dazu in ein Oelmuster eingetaucht und während drei Stunden bei 120 °C darin belassen. Nach dieser Testperiode wird der Kupferstreifen aus dem Oel entfernt, gereinigt und mit den Standardwerten verglichen. Wiedergegeben sind in der Tabelle die Resultate von 1%igen Lösungen der jeweiligen erfindungsgemässen Verbindung in einem Grundöl (Catenex® P 941 der Fa. Shell), enthaltend 0,03 % eines handelsüblichen Kupferpassivators des Typs 1-(Di-2-ethylhexyl)-aminomethyltolutriazol.

Die Beurteilung der Kupferstreifen geschieht in 4 Stufen, wobei die "ASTM Copper Strip Corrosion Standards" herangezogen werden:

1 - kein Beschlag
2 - mässiger Beschlag
3 - starker Beschlag
4 - Korrosion

B stellt eine Feinunterteilung innerhalb der Zahlengruppen 1 bis 4 dar und bedeutet die Schattenbildung auf den Proben. In der qualitativen Beurteilung A bis E steht die Wertung A vor B, B vor C usw.

Tabelle

| Beispiel | Verbindung aus Beispiel | Verschleissschutz VKA | | Korrosivität D 130 |
|---|---|---|---|---|
| | | WL kg | WSD mm | |
| 24 | 9 | 1600 | 0,34 | 1B |
| 25 | 10 | 1600 | 0,33 | 1B |
| 26 | 12 | 2000 | 0,36 | 1B |
| 27 | 7 | 2000 | 0,34 | 1B |

Beispiel 28: Das Produkt gemäss Beispiel 16 wird nach der ASTM-Standardmethode D 665 B bezüglich den rostverhütenden Eigenschaften in Turbinenölen in Gegenwart von Wasser geprüft.

Das Prüfverfahren ist derart gestaltet, dass in einem Gefäss 300 ml des zu prüfenden Oeles, enthaltend die erfindungsgemässen Zusätze, und 30 ml synthetisches Meerwasser bei 60 °C während 24 Stunden gerührt werden. Eingetaucht in das zu prüfende Oel ist eine zylinderische Stahlprobe. Das Prüfverfahren ist dazu gedacht, die Fähigkeit eines Dampfturbinenöles zu bestimmen, das Rosten von Eisenteilen zu verhüten, falls Wasser in das Oel gelangen sollte.

Gemessen wird der Korrosionsgrad der Stahlzylinderproben.

0 bedeutet keinen Rost, 3 bedeutet eine verrostete Probe. Entsprechend geben Zwischenziffern die Zwischenstufen bezüglich des Verrostungsgrades an.

Die Konzentration der Verbindung nach Beispiel 16 beträgt 0,25 % in einem Basisöl. Die Probe weist nach dem Test keinen Rost auf und wird mit 0 bewertet.

Eine Probe, die im Basisöl, ohne erfindungsgemässe Verbindungen, geprüft wird, ist verrostet und wird mit 3 bewertet.

## Patentansprüche

**1.** Verbindungen der allgemeinen Formel I

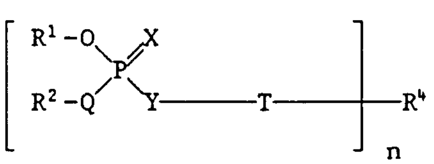

(I) ,

wobei n = 1, 2 oder 3 ist und worin

X Sauerstoff oder Schwefel darstellt, T die Bedeutung von -S-, -S-S-, -S-S-S-, -S-S-S-S-, -S-S-S-S-S-,

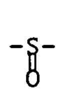, 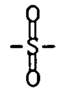 oder 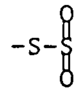

hat und
Y die Bedeutung von

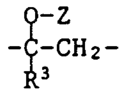

hat,
wobei
Z die Bedeutung von -H, $-COR^{13}$, $-COOR^{13}$ oder $-CONHR^{13}$ hat, und
Q die Bedeutung von Sauerstoff oder $-NR^{o}$- hat, und
$R^1$, $R^2$, $R^o$ und $R^{13}$ gleich oder verschieden sind und eine Alkylgruppe mit 1 bis 18 C-Atomen, eine Alkenylgruppe mit 2 bis 18 C-Atomen, eine Phenyl- oder Naphthylgruppe, eine mit wenigstens einer $C_1$-$C_4$-Alkylgruppe substituierte Phenyl- oder Naphthylgruppe, eine Phenylalkylgruppe mit 7 bis 9 C-Atomen, eine Cycloalkylgruppe mit 5 bis 12 Ring-C-Atomen oder eine Cycloalkylgruppe mit 5 bis 12 Ring-C-Atomen, die mit wenigstens einer Alkylgruppe mit 1 bis 4 C-Atomen substituiert ist, darstellen, oder $R^o$ -H ist, oder
$R^1$ und $R^2$ zusammen eine geradkettige Alkylengruppe mit 2 bis 5 C-Atomen, eine geradkettige Alkylengruppe mit 2 bis 5 C-Atomen, die durch wenigstens eine Alkylgruppe mit 1 bis 8 C-Atomen oder durch wenigstens eine Gruppe $-CH_2$-O-$C_1$-$C_{12}$-Alkyl oder $-CH_2$-S-$C_1$-$C_{12}$-Alkyl substituiert ist, oder
$R^1$ und $R^2$ zusammen eine Gruppe der Formel

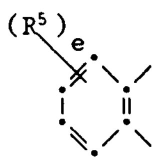 ,

wobei $R^5$ eine Alkylgruppe mit 1 bis 4 C-Atomen und e eine Zahl von O, 1 oder 2 darstellt, oder
$R^1$ und $R^2$ zusammen eine Gruppe der Formel

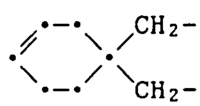

darstellen,
$R^3$ die Bedeutung von -H, von Alkyl mit 1 bis 4 C-Atomen, von Phenyl, von $-CH_2$-S-$R^{4'}$, wobei $R^{4'}$ nachstehende Bedeutung hat, von Phenyl oder Phenyl, substituiert mit mindestens einer Alkylgruppe mit 1 bis 4 C-Atomen, hat,
und,
wenn n = 1 ist,
$R^4$ die Bedeutung von $R^{4'}$ hat, wobei
$R^{4'}$ -H, eine Alkylgruppe mit 1 bis 18 C-Atomen, eine Alkenylgruppe mit 2 bis 18 C-Atomen, eine Phenyl- oder Naphthylgruppe, eine mit wenigstens einer $C_1$-$C_9$-Alkylgruppe substituierte Phenyl- oder Naphthylgruppe, eine Phenylalkylgruppe mit 7 bis 9 C-Atomen, Pinan-10-yl, eine Alkylgruppe mit 1 bis 18 C-Atomen, die mit wenigstens einer OH-Gruppe substituiert ist, eine Alkylgruppe mit 2 bis 18 C-Atomen, die von wenigstens einem -S-oder -O- unterbrochen ist, eine Alkylgruppe mit 3 bis 18 C-Atomen, die mit wenigstens einer OH-Gruppe substituiert und von wenigstens einem -S-oder -O- unterbrochen ist, eine Gruppe der Formel $-R^6-COOR^7$, wobei $R^6$ eine Alkylengruppe mit 1 bis 6 C-Atomen und $R^7$ eine Alkylgruppe mit 1 bis 12 C-Atomen darstellt; eine Cycloalkylgruppe mit 5 bis 12 Ring-C-Atomen, eine Cycloalkylgruppe mit 5 bis 12 Ring-C-Atomen, die mit wenigstens einer Alkylgruppe mit 1 bis 4 C-Atomen substituiert ist oder eine Cycloalkylgruppe mit 5 bis 12 Ring-C-Atomen, die durch mindestens ein -O- oder -S- unterbrochen ist oder eine Cycloalkylgruppe mit 5 bis 12 Ring-C-Atomen, die mit wenigstens einer Alkylgruppe mit 1 bis 4 C-Atomen substituiert ist und die durch mindestens ein -O- oder -S- unterbrochen ist, oder

$R^{4'}$ eine Gruppe der Formel

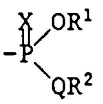 , 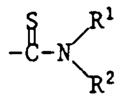 , 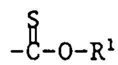 oder 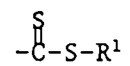 ,

worin X Sauerstoff oder Schwefel bedeutet und Q, $R^1$ und $R^2$ die genannte Bedeutung haben, darstellt, oder

$R^{4'}$ bedeutet einen Heterocyclus mit 5 bis 6 Ring-Gliedern mit 1 bis 4 Gliedern aus der Reihe von -NH-, -N=,

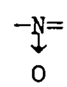

oder -N($C_1$-$C_4$-Alkyl)- oder eines Heterocyclus mit 5 bis 6 Ring-Gliedern mit einem oder zwei Gliedern aus der Reihe von -NH-. -N=,

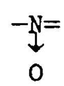

oder -N($C_1$-$C_4$-Alkyl)- und einem weiteren Heteroatom aus der Reihe von O oder S, oder der genannten Heterocyclen, die mit einem Benzorest anelliert sind, oder der genannten Heterocyclen, die an einem oder zwei der C-Atome mit =S und/oder $C_1$-$C_4$-Alkyl substituiert sind, oder

$R^{4'}$ hat die Bedeutung von

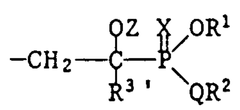 oder von 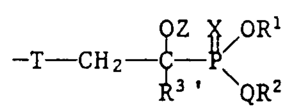

wobei T und Z die angegebenen Bedeutungen haben, X Sauerstoff oder Schwefel bedeutet, $R^{3'}$ -H, Alkyl mit 1 bis 4 C-Atomen, Phenyl oder Phenyl substituiert mit mindestens einer Alkylgruppe mit 1 bis 4 C-Atomen ist,

und Q, $R^1$ und $R^2$ die genannte Bedeutung haben, oder $R^4$ die Bedeutung von

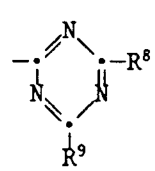

hat, wobei

$R^8$ und $R^9$, unabhängig voneinander, $C_1$-$C_{18}$-Alkyl, Phenyl, mono-, di- oder tri-$C_1$-$C_4$-alkylsubstituiertes Phenyl, eine Gruppe -$OR^{10}$, -$SR^{10}$ oder

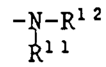

bedeuten, wobei $R^{10}$ $C_1$-$C_{18}$-Alkyl, $C_5$-$C_{12}$-Cycloalkyl, mono-, di- oder tri-$C_1$-$C_4$-alkylsubstituiertes $C_5$-$C_{12}$-Cycloalkyl, $C_3$-$C_6$-Alkenyl, Phenyl, mono- di- oder tri-$C_1$-$C_9$-alkylsubstituiertes Phenyl, $C_7$-$C_9$-Phenylalkyl oder am Phenyl mono-, di- oder tri-$C_1$-$C_4$-alkylsubstituiertes $C_7$-$C_9$-Phenylalkyl bedeutet, und $R^{11}$ und $R^{12}$, die gleich oder verschieden sind, bedeuten -H, $C_1$-$C_{18}$-Alkyl, $C_5$-$C_{12}$-Cycloalkyl, mono-, di- oder tri-$C_1$-$C_4$-alkylsubstituiertes $C_5$-$C_{12}$-Cycloalkyl, $C_3$-$C_6$-Alkenyl, $C_7$-$C_9$-Phenylalkyl, am Phenyl mono-, di- oder tri-$C_1$-$C_4$-alkylsubstituiertes $C_7$-$C_9$-Phenylalkyl, $C_2$-$C_4$-Alkyl, das durch -OH, durch $C_1$-$C_8$-Alkoxy oder durch Di-($C_1$-$C_4$-alkyl)amino substituiert ist oder $R^{11}$ und $R^{12}$ bedeuten, zusammen mit dem sie verknüpfenden Stickstoffatom, einen 5- bis 7-gliedrigen Heterocyclus, oder,
wenn n = 2 ist, bedeutet
$R^4$ geradkettiges Alkylen mit 1 bis 12 C-Atomen oder Alkenylen mit 2 bis 10 C-Atomen oder geradkettiges Alkylen mit 1 bis 10 C-Atomen, das mit wenigstens einer Alkylgruppe mit 1 bis 4 C-Atomen substituiert ist, oder geradkettiges Alkylen mit 2 bis 10 C-Atomen, das durch mindestens ein -S- oder -O- unterbrochen ist oder geradkettiges Alkylen mit 2 bis 10 C-Atomen, das mit wenigstens einer Alkylgruppe mit 1 bis 4 C-Atomen substituiert und durch mindestens ein -S- oder -O- unterbrochen ist, oder $R^4$ hat die Bedeutung eines bivalenten Heterocyclus mit 5 bis 6 Ring-Gliedern mit 1 bis 4 Stickstoffatomen oder eines bivalenten Heterocyclus mit 5 bis 6 Ring-Gliedern mit einem oder zwei Stickstoffatomen und einem weiteren Heteroatom aus der Reihe von O oder S, oder der genannten bivalenten Heterocyclen, die mit einem Benzorest anelliert sind, oder der genannten bivalenten Heterocyclen, die an einem oder zwei der C-Atome mit =S und/oder $C_1$-$C_4$-Alkyl substituiert sind, oder,
$R^4$ hat die Bedeutung von

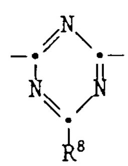 ,

wobei $R^8$ die genannte Bedeutung aufweist, oder,
wenn n = 3 ist, bedeutet
$R^4$ eine Gruppe der Formel

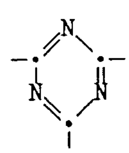 ,

mit der Massgabe, dass die Verbindungen der Formeln $C_2H_5$-S-$CH_2CH(OH)$-$PO(OC_2H_5)_2$ und Ph-C-($CH_2SCH_3$)(OH)-$PO(OC_2H_5)_2$ [Ph = Phenyl] ausgenommen sind.

**2.** Verbindungen der allgemeinen Formel I gemäss Anspruch 1,
wobei n = 1, 2 oder 3 ist und worin
$R^1$ und $R^2$ gleich oder verschieden sind und eine Alkylgruppe mit 1 bis 18 C-Atomen, eine Alkenylgruppe mit 2 bis 18 C-Atomen, eine Phenyl-, eine mit einer oder zwei $C_1$-$C_9$-Alkylgruppen substituierte Phenylgruppe, eine Phenylalkylgruppe mit 7 bis 9 C-Atomen, eine Cycloalkylgruppe mit 5 bis 12 Ring-C-Atomen oder eine Cycloalkylgruppe mit 5 bis 12 Ring-C-Atomen, die mit einer Alkylgruppe mit 1 bis 4 C-Atomen substituiert ist, darstellen, oder worin
$R^1$ und $R^2$ zusammen eine geradkettige Alkylengruppe mit 2 bis 5 C-Atomen, eine geradkettige

Alkylengruppe mit 2 bis 5 C-Atomen, die durch eine oder zwei Alkylgruppen mit 1 bis 4 C-Atomen oder durch eine Gruppe $-CH_2-O-C_1-C_9$-Alkyl oder $-CH_2-S-C_1-C_9$-Alkyl substituiert ist, oder $R^1$ und $R^2$ zusammen eine Gruppe der Formel

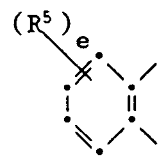

,

wobei $R^5$ eine Alkylgruppe mit 1 bis 4 C-Atomen und e eine Zahl von O, 1 oder 2 darstellt, oder
$R^1$ und $R^2$ zusammen eine Gruppe der Formel

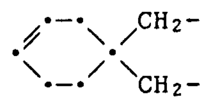

darstellen,
$R^3$ die Bedeutung von -H, Alkyl mit 1 bis 4 C-Atomen, $-CH_2-S-R^{4\prime}$, wobei $R^{4\prime}$ nachstehende Bedeutung hat, Phenyl, oder Phenyl substituiert mit einer Alkylgruppe mit 1 bis 9 C-Atomen, hat und,
wenn n = 1 ist,
$R^4$ die Bedeutung von $R^{4\prime}$ hat, wobei
$R^{4\prime}$ -H, eine Alkylgruppe mit 1 bis 18 C-Atomen, eine Alkenylgruppe mit 2 bis 18 C-Atomen, eine Phenylgruppe, eine mit wenigstens einer $C_1-C_9$-Alkylgruppe substituierte Phenylgruppe, eine Phenylalkylgruppe mit 7 bis 9 C-Atomen, eine Alkylgruppe mit 1 bis 18 C-Atomen, die mit 1 bis 5 OH-Gruppen substituiert ist, eine Alkylgruppe mit 2 bis 18 C-Atomen, die von 1 bis 5 -S- oder -O- unterbrochen ist, eine Alkylgruppe mit 3 bis 18 C-Atomen, die mit 1 bis 5 OH-Gruppen substituiert und von 1 bis 5 -S- oder -O- unterbrochen ist, eine Cycloalkylgruppe mit 5 bis 12 Ring-C-Atomen, eine Cycloalkylgruppe mit 5 bis 12 Ring-C-Atomen, die mit einer Alkylgruppe mit 1 bis 4 C-Atomen substituiert ist, oder
$R^{4\prime}$ eine Gruppe der Formel

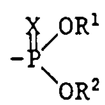

,

worin
X Sauerstoff oder Schwefel bedeutet und $R^1$ und $R^2$ genannte Bedeutung haben, darstellt, oder
$R^{4\prime}$ hat die Bedeutung eines Heterocyclus mit 5 bis 6 Ring-Gliedern mit 1 bis 3 Gliedern aus der Reihe von -NH-, -N=,

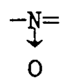

oder $-N(CH_3)$- oder eines Heterocyclus mit 5 bis 6 Ring-Gliedern mit einem Glied aus der Reihe von -NH-, -N=,

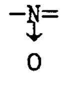

oder $-N(CH_3)$- und einem weiteren Heteroatom aus der Reihe von O oder S oder der genannten Heterocyclen, die mit einem Benzorest anelliert sind, oder der genannten Heterocyclen, die an einem

oder zwei der C-Atome mit =S und/oder $C_1$-$C_4$-Alkyl substituiert sind, oder,
wenn n = 2 ist, bedeutet
$R^4$ geradkettiges Alkylen mit 1 bis 10 C-Atomen oder geradkettiges Alkylen mit 1 bis 10 C-Atomen, das mit einer oder zwei Alkylgruppen mit 1 bis 4 C-Atomen substituiert ist, oder geradkettiges Alkylen mit 2 bis 10 C-Atomen, das durch 1 bis 5 -S- oder -O- unterbrochen ist oder Alkylen mit 2 bis 10 C-Atomen, das mit einer oder zwei Alkylgruppen mit 1 bis 4 C-Atomen substituiert und durch 1 bis 5 -S- oder -O-unterbrochen ist, oder $R^4$ hat die Bedeutung eines bivalenten Heterocyclus mit 5 bis 6 Ring-Gliedern mit 1 bis 3 Stickstoffatomen oder eines bivalenten Heterocyclus mit 5 bis 6 Ring-Gliedern mit einem oder zwei Stickstoffatom und einem weiteren Heteroatom aus der Reihe von O oder S, oder der genannten bivalenten Heterocyclen, die mit einem Benzorest anelliert sind, oder der genannten bivalenten Heterocyclen, die an einem oder zwei der C-Atome mit =S und/oder $C_1$-$C_4$-Alkyl substituiert sind, oder,
wenn n = 3 ist, bedeutet
$R^4$ eine Gruppe der Formel

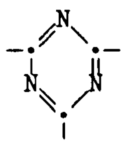 .

3. Verbindungen gemäss Anspruch 1 der Formel I, worin $R^1$ und $R^2$ gleich oder verschieden sind und eine geradkettige oder verzweigtkettige Alkylgruppe mit 2 bis 12 C-Atomen, Phenyl, mit einer $C_1$-$C_9$-Alkylgruppe substituiertes Phenyl, Benzyl oder eine Cycloalkylgruppe mit 5 bis 10 Ring-C-Atomen darstellen, oder worin $R^1$ und $R^2$ zusammen eine geradkettige Alkylengruppe mit 2 bis 4 C-Atomen oder eine geradkettige Alkylengruppe mit 2 bis 4 C-Atomen, die durch eine oder zwei Alkylgruppen mit jeweils 1 bis 4 C-Atomen substituiert ist oder die mit einer Gruppe der Formel $-CH_2-S-C_4H_9$ substituiert ist, oder eine Gruppe der Formel

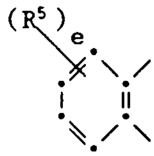 ,

wobei e = O oder 1 ist und wenn e = 1 ist, $R^5$ tert.-Butyl ist, darstellen.

4. Verbindungen gemäss Anspruch 1 der Formel I, worin $R^1$ und $R^2$ gleich oder verschieden sind und eine Alkylgruppe mit 2 bis 12 C-Atomen, Phenyl oder Cyclohexyl darstellen oder $R^1$ und $R^2$ zusammen eine geradkettige $C_2$-oder $C_3$-Alkylengruppe oder mit einer $C_1$-$C_4$-Alkylgruppe substituierte Dimethylen- oder Trimethylengruppe, eine di-$C_1$-$C_4$-alkylsubstituierte Dimethylen- oder Trimethylengruppe oder eine mit $-CH_2-S-t-C_4H_9$ substituierte Dimethylen- oder Trimethylengruppe oder eine Gruppe der Formel

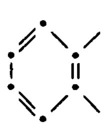

oder

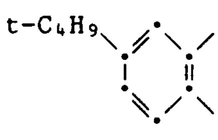

darstellen.

5. Verbindungen gemäss Anspruch 1 der Formel I, worin $R^1$ und $R^2$ gleich oder verschieden sind und $C_2$-$C_8$-Alkyl darstellen, oder $R^1$ und $R^2$ zusammen Dimethylen, 1-Methyldimethylen, 1-Ethyldimethylen, 2,2-Dimethyltrimethylen oder 2-Ethyl-2-n-butyltrimethylen darstellen.

6. Verbindungen gemäss Anspruch 1 der Formel I, worin $R^1$ und $R^2$ gleich sind.

7. Verbindungen gemäss Anspruch 1 der Formel I, worin $R^3$ Methyl, Phenyl oder $-CH_2-S-R^{4''}$ darstellt, wobei $R^{4''}$ eine Alkylgruppe mit 2 bis 12 C-Atomen oder

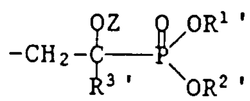

ist, worin Z die in Anspruch 1 angegebene Bedeutung hat und $R^{3'}$ -H, Alkyl mit 1 bis 4 C-Atomen oder Phenyl ist und $R^{1'}$ und $R^{2'}$ gleich sind und eine Alkylgruppe mit 1 bis 8 C-Atomen, Phenyl oder Cyclohexyl darstellen oder $R^{1'}$ und $R^{2'}$ Zusammen eine geradkettige $C_2$-oder $C_3$-Alkylengruppe oder eine $C_1$-$C_4$-alkylsubstituierte Dimethylen- oder Trimethylengruppe, eine di-$C_1$-$C_4$-alkylsubstituierte Dimethylen- oder Trimethylengruppe oder eine mit $-CH_2-S-t-C_4H_9$ oder mit $-CH_2-O-iC_8H_{17}$ substituierte Dimethylen- oder Trimethylengruppe darstellen.

8. Verbindungen gemäss Anspruch 1 der Formel I, worin $R^{4'}$ eine Alkylgruppe mit 1 bis 12 C-Atomen, eine Phenylgruppe, eine Benzylgruppe oder eine Alkylgruppe mit 2 bis 8 C-Atomen, die durch eine OH-Gruppe substituiert ist oder eine Alkylgruppe mit 2 bis 12 C-Atomen, die durch ein -O- oder -S- unterbrochen ist, oder eine Alkylgruppe mit 2 bis 18 C-Atomen, die durch ein -O- oder -S- unterbrochen und durch eine -OH Gruppe substituiert ist oder eine Gruppe der Formel $-R^6-COOR^7$ , wobei $R^6$ eine Alkylengruppe mit 1 bis 3 C-Atomen und $R^7$ eine Alkylgruppe mit 4 bis 8 C-Atomen darstellt, oder eine Cyclohexylgruppe bedeutet, oder $R^{4'}$ stellt eine Gruppe der Formel

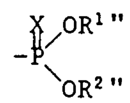

dar, worin X Sauerstoff oder Schwefel bedeutet und $R^{1''}$ und $R^{2''}$ gleich sind und Alkyl mit 1 bis 8 C-Atomen oder $R^{1''}$ und $R^{2''}$ zusammen geradkettiges Alkylen mit 2 oder 3 C-Atomen oder geradkettiges Alkylen mit 2 oder 3 C-Atomen, das mit einer oder zwei Alkylgruppen mit 1 bis 4 C-Atomen substituiert ist, bedeuten, oder $R^{4'}$ hat die Bedeutung eines Heterocyclus mit 5 bis 6 Ring-Gliedern mit 1 bis 3 Stickstoffatomen oder eines Heterocyclus mit 5 bis 6 Ring-Gliedern mit einem Stickstoffatom und einem weiteren Heteroatom aus der Reihe von O oder S oder der genannten Heterocyclen, die mit einem Benzorest anelliert sind, oder der genannten Heterocyclen, die an einem oder zwei der C-Atome mit =S oder mit $C_1$-$C_4$-Alkyl substituiert sind, oder
$R^{4'}$ hat die Bedeutung von

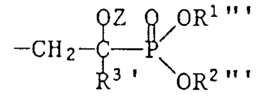

oder von

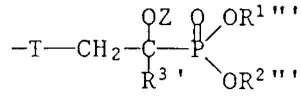

wobei T und Z die in Anspruch 1 angegebene Bedeutung haben, $R^{3'}$ Methyl ist und $R^{1'''}$ und $R^{2'''}$ gleich sind und Alkyl mit 1 bis 8 C-Atomen bedeuten.

9. Verbindungen gemäss Anspruch 1 der Formel I, wobei n = 2 ist und worin $R^4$ geradkettiges Alkylen mit 2 bis 4 C-Atomen ist oder $R^4$ hat die Bedeutung eines divalenten Heterocyclus mit 5 bis 6 Ring-Gliedern mit einem oder zwei Stickstoffatomen und einem weiteren Heteroatom aus der Reihe von O oder S.

10. Verbindungen gemäss Anspruch 1 der Formel I, worin n = 1 ist, $R^1$ und $R^2$ gleich sind und $C_1$-$C_{12}$-Alkyl sind oder $R^1$ und $R^2$ zusammen

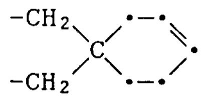

bedeuten, $R^3$ die Bedeutung von $C_1$-$C_4$-Alkyl oder Phenyl hat und $R^4$ die Bedeutung von $R^{4'}$ hat, wobei $R^{4'}$ $C_1$-$C_4$-Alkyl, einen Heterocylus mit 5 Ring-Gliedern und einem oder zwei Stickstoffatomen, einen Heterocyclus mit 5 Ring-Gliedern und einem Stickstoffatom und mit einem oder zwei zusätzlichen Heteroatomen aus der Reihe von S oder O, einem der vorstehenden Heterocyclen mit anelliertem Benzoring oder $C_3$-$C_{12}$-Alkyl, substituiert mit einem -OH und unterbrochen mit 1 oder 2 O oder S, darstellt.

**11.** Zusammensetzungen enthaltend a) einsynthetisches Polymer oder eine funktionelle Flüssigkeit und b) wenigstens eine Verbindung der allgemeinen Formel I

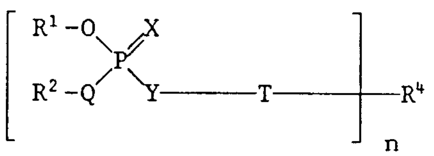

(I) ,

wobei n = 1, 2 oder 3 ist und worin
X Sauerstoff oder Schwefel darstellt, T die Bedeutung von -S-, -S-S-, -S-S-S-, -S-S-S-S-, -S-S-S-S-S-,

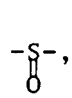, 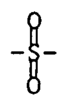 oder 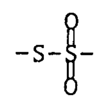

hat und
Y die Bedeutung von

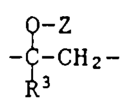

hat,
wobei
Z die Bedeutung von -H, $-COR^{13}$, $-COOR^{13}$ oder $-CONHR^{13}$ hat, und
Q die Bedeutung von Sauerstoff oder $-NR^o$- hat, und
$R^1$, $R^2$, $R^o$ und $R^{13}$ gleich oder verschieden sind und eine Alkylgruppe mit 1 bis 18 C-Atomen, eine Alkenylgruppe mit 2 bis 18 C-Atomen, eine Phenyl- oder Naphthylgruppe, eine mit wenigstens einer $C_1$-$C_9$-Alkylgruppe substituierte Phenyl- oder Naphthylgruppe, eine Phenylalkylgruppe mit 7 bis 9 C-Atomen, eine Cycloalkylgruppe mit 5 bis 12 Ring-C-Atomen oder eine Cycloalkylgruppe mit 5 bis 12 Ring-C-Atomen, die mit wenigstens einer Alkylgruppe mit 1 bis 4 C-Atomen substituiert ist, darstellen, oder $R^o$ -H ist, oder
$R^1$ und $R^2$ zusammen eine geradkettige Alkylengruppe mit 2 bis 10 C-Atomen, eine geradkettige Alkylengruppe mit 2 bis 10 C-Atomen, die durch wenigstens eine Alkylgruppe mit 1 bis 8 C-Atomen oder durch wenigstens eine Gruppe $-CH_2$-O-$C_1$-$C_{12}$-Alkyl oder $-CH_2$-S-$C_1$-$C_{12}$-Alkyl substituiert ist, oder
$R^1$ und $R^2$ zusammen eine Gruppe der Formel

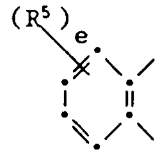

,

wobei $R^5$ eine Alkylgruppe mit 1 bis 4 C-Atomen und e eine Zahl von O, 1 oder 2 darstellt, oder $R^1$ und $R^2$ zusammen eine Gruppe der Formel

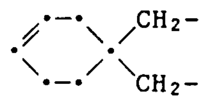

darstellen,

$R^3$ die Bedeutung von -H, von Alkyl mit 1 bis 4 C-Atomen, von Phenyl, von $-CH_2-S-R^{4'}$, wobei $R^{4'}$ nachstehende Bedeutung hat, von Phenyl oder Phenyl, substituiert mit mindestens einer Alkylgruppe mit 1 bis 4 C-Atomen, hat,

und,

wenn n = 1 ist,

$R^4$ die Bedeutung von $R^{4'}$ hat, wobei

$R^{4'}$ -H, eine Alkylgruppe mit 1 bis 18 C-Atomen, eine Alkenylgruppe mit 2 bis 18 C-Atomen, eine Phenyl- oder Naphthylgruppe, eine mit wenigstens einer $C_1$-$C_9$-Alkylgruppe substituierte Phenyl- oder Naphthylgruppe, eine Phenylalkylgruppe mit 7 bis 9 C-Atomen, Pinan-10-yl, eine Alkylgruppe mit 1 bis 18 C-Atomen, die mit wenigstens einer OH-Gruppe substituiert ist, eine Alkylgruppe mit 2 bis 18 C-Atomen, die von wenigstens einem -S- oder -O- unterbrochen ist, eine Alkylgruppe mit 3 bis 18 C-Atomen, die mit wenigstens einer OH-Gruppe substituiert und von wenigstens einem -S- oder -O- unterbrochen ist, eine Gruppe der Formel $-R^6-COOR^7$, wobei $R^6$ eine Alkylengruppe mit 1 bis 6 C-Atomen und $R^7$ eine Alkylgruppe mit 1 bis 12 C-Atomen darstellt, eine Cycloalkylgruppe mit 5 bis 12 Ring-C-Atomen, eine Cycloalkylgruppe mit 5 bis 12 Ring-C-Atomen, die mit wenigstens einer Alkylgruppe mit 1 bis 4 C-Atomen substituiert ist oder eine Cycloalkylgruppe mit 5 bis 12 Ring-C-Atomen, die durch mindestens ein -O- oder -S- unterbrochen ist oder eine Cycloalkylgruppe mit 5 bis 12 Ring-C-Atomen, die mit wenigstens einer Alkylgruppe mit 1 bis 4 C-Atomen substituiert ist und die durch mindestens ein -O- oder -S- unterbrochen ist, oder

$R^{4'}$ eine Gruppe der Formel

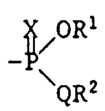 , 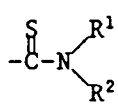 , 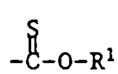 oder 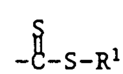 ,

X Sauerstoff oder Schwefel bedeutet und Q, $R^1$ und $R^2$ genannte Bedeutung haben, darstellt, oder

$R^{4'}$ bedeutet einen Heterocyclus mit 5 bis 6 Ring-Gliedern mit 1 bis 3 Gliedern aus der Reihe von -NH-, -N=,

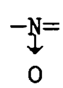

oder $-N(C_1-C_4\text{-Alkyl})-$ oder eines Heterocyclus mit 5 bis 6 Ring-Gliedern mit einem oder zwei Gliedern aus der Reihe von -NH-, -N=,

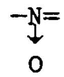

oder -N($C_1$-$C_4$-Alkyl)- und einem weiteren Heteroatom aus der Reihe von O oder S oder der genannten Heterocyclen, die mit einem Benzorest anelliert sind, oder der genannten Heterocyclen, die an einem oder zwei der C-Atome mit =S und/oder $C_1$-$C_4$-Alkyl substituiert sind, oder $R^{4'}$ hat die Bedeutung von

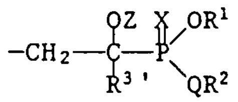

oder von

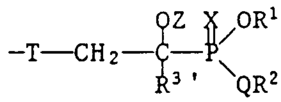

wobei T und Z die angegebenen Bedeutungen haben, X Sauerstoff oder Schwefel bedeutet, $R^{3'}$ -H, Alkyl mit 1 bis 4 C-Atomen, Phenyl oder Phenyl substituiert mit mindestens einer Alkylgruppe mit 1 bis 9 C-Atomen ist, und Q, $R^1$ und $R^2$ die genannte Bedeutung haben, oder,
$R^4$ die Bedeutung von

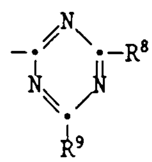

hat, wobei
$R^8$ und $R^9$ , unabhängig voneinander, $C_1$-$C_{18}$-Alkyl, Phenyl, mono-, di- oder tri-$C_1$-$C_4$-alkylsubstituiertes Phenyl, eine Gruppe -$OR^{10}$ , -$SR^{10}$ oder

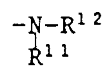

bedeuten, wobei $R^{10}$ $C_1$-$C_{18}$-Alkyl, $C_5$-$C_{12}$-Cycloalkyl, mono-, di- oder tri-$C_1$-$C_4$-alkylsubstituiertes $C_5$-$C_{12}$-Cycloalkyl, $C_3$-$C_6$-Alkenyl, Phenyl, mono- di- oder tri-$C_1$-$C_4$-alkylsubstituiertes Phenyl, $C_7$-$C_9$-Phenylalkyl oder am Phenyl mono-, di- oder tri-$C_1$-$C_4$-alkylsubstituiertes $C_7$-$C_9$-Phenylalkyl bedeutet, und $R^{11}$ und $R^{12}$, die gleich oder verschieden sind, bedeuten -H, $C_1$-$C_{18}$-Alkyl, $C_5$-$C_{12}$-Cycloalkyl, mono-, di- oder tri-$C_1$-$C_4$-alkylsubstituiertes $C_5$-$C_{12}$-Cycloalkyl, $C_3$-$C_6$-Alkenyl, $C_7$-$C_9$-Phenylalkyl, am Phenyl mono-, di- oder tri-$C_1$-$C_4$-alkylsubstituiertes $C_7$-$C_9$-Phenylalkyl, $C_2$-$C_4$-Alkyl, das durch -OH, durch $C_1$-$C_8$-Alkoxy oder durch Di-($C_1$-$C_4$-alkyl)amino substituiert ist oder $R^{11}$ und $R^{12}$ bedeuten, zusammen mit dem sie verknüpfenden Stickstoffatom, einen 5- bis 7-gliedrigen Heterocyclus, oder,
wenn n = 2 ist, bedeutet
$R^4$ geradkettiges Alkylen mit 1 bis 12 C-Atomen oder Alkenylen mit 2 bis 10 C-Atomen oder geradkettiges Alkylen mit 1 bis 10 C-Atomen, das mit wenigstens einer Alkylgruppe mit 1 bis 4 C-Atomen substituiert ist, oder geradkettiges Alkylen, mit 2 bis 10 C-Atomen, das durch -S- oder -O- unterbrochen ist oder Alkylen mit 2 bis 10 C-Atomen, das mit wenigstens einer Alkylgruppe mit 1 bis 4 C-Atomen substituiert und durch -S- oder -O- unterbrochen ist, oder
$R^4$ hat die Bedeutung eines bivalenten Heterocyclus mit 5 bis 6 Ring-Gliedern mit 1 bis 3 Stickstoffatomen oder eines bivalenten Heterocyclus mit 5 bis 6 Ring-Gliedern mit einem Stickstoffatom und einem weiteren Heteroatom aus der Reihe von O oder S, oder der genannten bivalenten Heterocyclen, die mit einem Benzorest anelliert sind, oder der genannten bivalenten Heterocyclen, die an einem oder zwei der C-Atome mit =S und/oder $C_1$-$C_4$-Alkyl substituiert sind, oder,
$R^4$ hat die Bedeutung von

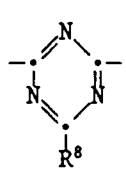

,

wobei $R^8$ die genannte Bedeutung aufweist, oder,
wenn n = 3 ist, bedeutet
$R^4$ eine Gruppe der Formel

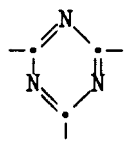 .

**12.** Zusammensetzungen nach Anspruch 11 enthaltend a) eine funktionelle Flüssigkeit und b) wenigstens eine Verbindung der Formel I.

**13.** Zusammensetzung nach Anspruch 12, enthaltend
a) einen Schmierstoff und
b) wenigstens eine Verbindung der Formel I.

**14.** Verwendung von Verbindungen der Formel I nach Anspruch 11 als Additive in organischen Materialien.

**15.** Verfahren zur Herstellung von Verbindungen der allgemeinen Formel I nach Anspruch 1, worin Z = -H ist, dadurch gekennzeichnet, dass eine Verbindung der allgemeinen Formel II

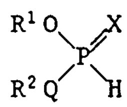 (II),

worin
X, Q, $R^1$ und $R^2$ die in Anspruch 1 angegebenen Bedeutungen haben, mit einer Verbindung der allgemeinen Formel III

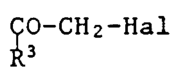 (III) ,

wobei $R^3$ die in Anspruch 1 angegebene Bedeutung und Hal die Bedeutung I, Br oder Cl hat, in einer ersten Umsetzungsstufe zu einer Verbindung der allgemeinen Formel IV

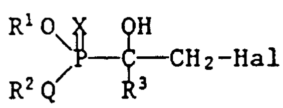 (IV),

wobei X, Q, $R^1$, $R^2$ und $R^3$ in Anspruch 1 angegebenen Bedeutungen haben und Hal die oben angegebene Bedeutung hat, umgesetzt wird, und, in einer zweiten Umsetzungsstufe, die Verbindung der allgemeinen Formel IV mit einer Verbindung der allgemeinen Formel V

$$[MS]_n R^4 \quad (V)$$

oder einer Verbindung der allgemeinen Formel Va

M-S-M (Va)

oder einer Verbindung der allgemeinen Formel Vb

$$M-[S]_q-M \quad (Vb),$$

worin q eine Zahl von 2, 3, 4 oder 5 ist, umgesetzt wird, wobei $R^4$ und n die in Anspruch 1 angegebenen Bedeutungen haben und M ein Alkalimetall oder -H bedeutet.

**16.** Verfahren nach Anspruch 15, dadurch gekennzeichnet, dass die erste Umsetzungsstufe in Gegenwart eines basischen Katalysators ausgeführt wird.

## Claims

**1.** A compound of the general formula I

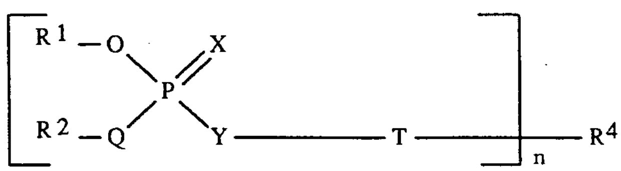

(I) ,

in which n is 1, 2 or 3 and in which X is oxygen or sulfur, T has the meaning of -S-, -S-S-, -S-S-S-, -S-S-S-S-, -S-S-S-S-S-,

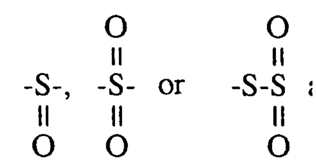

or ;

and Y has the meaning of

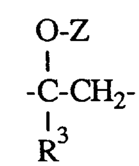

in which Z has the meaning of -H, $-COR^{13}$, - $COOR^{13}$ or $-CONHR^{13}$, and Q has the meaning of oxygen or $-NR^o-$, and $R^1$, $R^2$, $R^o$ and $R^{13}$ are identical or different and are an alkyl group having 1 to 18 C atoms, an alkenyl group having 2 to 18 C atoms, a phenyl or naphthyl group, a phenyl or naphthyl group each of which is substituted by at least one $C_1$-$C_4$alkyl group, or are a phenylalkyl group having 7 to 9 C atoms, a cycloalkyl group having 5 to 12 ring C atoms or a cycloalkyl group having 5 to 12 ring C atoms which is substituted by at least one alkyl group having 1 to 4 C atoms, or $R^o$ is -H, or $R^1$ and $R^2$ together are a straight-chain alkylene group having 2 to 5 C atoms, a straight-chain alkylene group having 2 to 5 C atoms which is substituted by at least one alkyl group having 1 to 8 C atoms or by at least one group $-CH_2-O-C_1-C_{12}$alkyl or $-CH_2-S-C_1-C_{12}$alkyl, or $R^1$ and $R^2$ together are a group of the formula

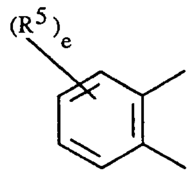

in which $R^5$ is an alkyl group having 1 to 4 C atoms and e is a number 0, 1 or 2, or $R^1$ and $R^2$ together are a group of the formula

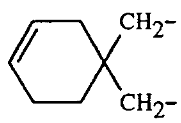

$R^3$ has the meaning of -H, alkyl having 1 to 4 C atoms, phenyl, $-CH_2-S-R^{4'}$, in which $R^{4'}$ is as defined below, or is phenyl or phenyl substituted by at least one alkyl group having 1 to 4 C atoms, and, if n is 1, $R^4$ has the meaning of $R^{4'}$ in which $R^{4'}$ is -H, an alkyl group having 1 to 18 C atoms, an alkenyl group having 2 to 18 C atoms, a phenyl or naphthyl group, a phenyl or naphthyl group which is substituted by at least one $C_1$-$C_9$alkyl group, or is a phenylalkyl group having 7 to 9 C atoms, pinan-10-yl, an alkyl group having 1 to 18 C atoms which is substituted by at least one OH group, an alkyl group having 2 to 18 C atoms which is interrupted by at least one -S- or -O-, an alkyl group having 3 to 18 C atoms which is substituted by at least one OH group and interrupted by at least one -S- or -O-, a group of the formula $-R^6-COOR^7$ in which $R^6$ is an alkylene group having 1 to 6 C atoms and $R^7$ is an alkyl group having 1 to 12 C atoms; a cycloalkyl group having 5 to 12 ring C atoms, a cycloalkyl group having 5 to 12 ring C atoms which is substituted by at least one alkyl group having 1 to 4 C atoms, or is a cycloalkyl group having 5 to 12 ring C atoms which is interrupted by at least one -O- or -S-, or is a cycloalkyl group having 5 to 12 ring C atoms which is substituted by at least one alkyl group having 1 to 4 C atoms and interrupted by at least one -O- or -S-, or $R^{4'}$ is a group of the formula

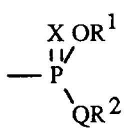 , 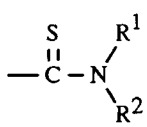 , 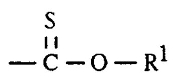 or 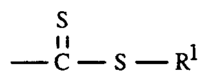 ,

in which X is oxygen or sulfur and Q, $R^1$ and $R^2$ are as defined above, or $R^{4'}$ is a heterocycle having 5 to 6 ring members with 1 to 4 members from the series comprising -NH-, -N=,

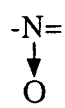

or -N($C_1$-$C_4$alkyl)-, or a heterocycle having 5 to 6 ring members with one or two members from the series comprising -NH-, -N=,

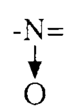

or -N($C_1$-$C_4$alkyl)- and one further hetero atom from the series comprising O or S, or the abovementioned heterocycles which are fused to a benzene radical, or the abovementioned heterocycles which are substituted on one or two of the C atoms by =S and/or $C_1$-$C_4$alkyl, or $R^{4'}$ has the meaning of

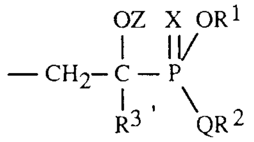 or of 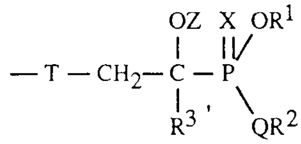

in which T and Z are as defined above, X is oxygen or sulfur, $R^{3'}$ is -H, alkyl having 1 to 4 C atoms, phenyl or phenyl which is substituted by at least one alkyl group having 1 to 4 C atoms, and Q, $R^1$ and $R^2$ are as defined above, or $R^4$ has the meaning of

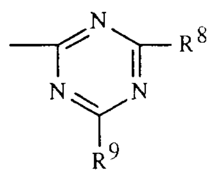

in which
$R^8$ and $R^9$, independently of one another, are $C_1$-$C_{18}$alkyl phenyl, phenyl which is mono-, di- or tri-$C_1$-$C_4$alkyl-substituted, or are a group $-OR^{10}$, $-SR^{10}$ or

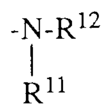

in which $R^{10}$ is $C_1$-$C_{18}$alkyl, $C_5$-$C_{12}$cycloalkyl, $C_5$-$C_{12}$cycloalkyl which is mono-, di- or tri-$C_1$-$C_4$alkyl-substituted, or is $C_3$-$C_6$alkenyl, phenyl, phenyl which is mono-, di- or tri-$C_1$-$C_9$alkyl-substituted, or is $C_7$-$C_9$phenylalkyl or $C_7$-$C_9$phenylalkyl which is mono-, di- or tri-$C_1$-$C_4$alkyl-substituted on the phenyl and $R^{11}$ and $R^{12}$ which are identical or different are -H, $C_1$-$C_{18}$alkyl, $C_5$-$C_{12}$cycloalkyl, $C_5$-$C_{12}$cycloalkyl which is mono-, di- or tri-$C_1$-$C_4$alkyl-substituted, or are $C_3$-$C_6$alkenyl, $C_7$-$C_9$phenylalkyl, $C_7$-$C_9$phenylalkyl which is mono-, di- or tri-$C_1$-$C_4$alkyl-substituted on the phenyl, or are $C_2$-$C_4$alkyl which is substituted by -OH, by $C_1$-$C_8$alkoxy or by di($C_1$-$C_4$alkyl)amino, or $R^{11}$ and $R^{12}$ together with the nitrogen atom linking them are a 5- to 7-membered heterocycle, or,
if n is 2,
$R^4$ is straight-chain alkylene having 1 to 12 C atoms or alkenylene having 2 to 10 C atoms or straight-chain alkylene having 1 to 10 C atoms which is substituted by at least one alkyl group having 1 to 4 C atoms, or straight-chain alkylene having 2 to 10 C atoms which is interrupted by at least one -S- or -O-, or straight-chain alkylene having 2 to 10 C atoms which is substituted by at least one alkyl group having 1 to 4 C atoms and interrupted by at least one -S- or -O-, or $R^4$ has the meaning of a bivalent heterocycle having 5 to 6 ring members with 1 to 4 nitrogen atoms, or of a bivalent heterocycle having 5 to 6 ring members with one or two nitrogen atoms and one further hetero atom from the series comprising O or S, or of the abovementioned bivalent heterocycles which are fused to a benzo radical, or of the abovementioned bivalent heterocycles which are substituted by =S and/or $C_1$-$C_4$alkyl on one or two of the C atoms, or,
$R^4$ has the meaning of

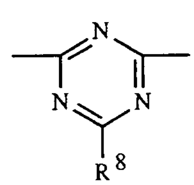 .

in which $R^8$ is as defined above, or,

if n is 3,
$R^4$ is a group of the formula

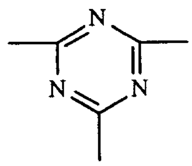

,

with the proviso that the compounds of the formulae $C_2H_5$-S-$CH_2CH(OH)$-$PO(OC_2H_5)_2$ and Ph-C-($CH_2SCH_3$)(OH)-$PO(OC_2H_5)_2$ [Ph = phenyl] are excepted.

**2.** A compound of the general formula I according to claim 1, in which n is 1, 2 or 3, and in which $R^1$ and $R^2$ are identical or different and are an alkyl group having 1 to 18 C atoms, an alkenyl group having 2 to 18 C atoms, a phenyl group, a phenyl group which is substituted by one or two $C_1$-$C_9$alkyl groups, or are a phenylalkyl group having 7 to 9 C atoms, a cycloalkyl group having 5 to 12 ring C atoms or a cycloalkyl group having 5 to 12 ring C atoms which is substituted by an alkyl group having 1 to 4 C atoms, or in which $R^1$ and $R^2$ together are a straight-chain alkylene group having 2 to 5 C atoms, a straight-chain alkylene group having 2 to 5 C atoms which is substituted by one or two alkyl groups having 1 to 4 C atoms or by a group -$CH_2$-O-$C_1$-$C_9$alkyl or -$CH_2$-S-$C_1$-$C_9$alkyl, or
$R^1$ and $R^2$ together are a group of the formula

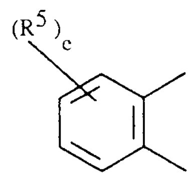

,

in which $R^5$ is an alkyl group having 1 to 4 C atoms and e is a number 0, 1 or 2, or
$R^1$ and $R^2$ together are a group of the formula

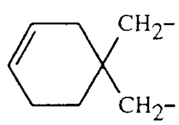

$R^3$ has the meaning of -H, alkyl having 1 to 4 C atoms, -$CH_2$-S-$R^{4'}$ in which $R^{4'}$ is as defined below, phenyl or phenyl which is substituted by an alkyl group having 1 to 9 C atoms, and,
if n is 1,
$R^4$ has the meaning of $R^{4'}$ in which
$R^{4'}$ is -H, an alkyl group having 1 to 18 C atoms, an alkenyl group having 2 to 18 C atoms, a phenyl group, a phenyl group which is substituted by at least one $C_1$-$C_9$alkyl group, or is a phenylalkyl group having 7 to 9 C atoms, an alkyl group having 1 to 18 C atoms which is substituted by 1 to 5 OH groups, an alkyl group having 2 to 18 C atoms which is interrupted by 1 to 5 -S- or -O-, an alkyl group having 3 to 18 C atoms which is substituted by 1 to 5 OH groups and interrupted by 1 to 5 -S- or -O-, a cycloalkyl group having 5 to 12 ring C atoms, a cycloalkyl group having 5 to 12 ring C atoms which is substituted by an alkyl group having 1 to 4 C atoms, or
$R^{4'}$ is a group of the formula

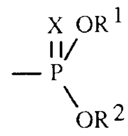 ,

in which
X is oxygen or sulfur and $R^1$ and $R^2$ are as defined above, or
$R^{4'}$ has the meaning of a heterocycle having 5 to 6 ring members with 1 to 3 members from the series comprising -NH-, -N=,

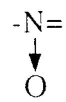

or $-N(CH_3)-$ or of a heterocycle having 5 to 6 ring members with one member from the series comprising -NH-, -N=,

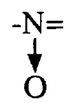

or $-N(CH_3)-$ and one further hetero atom from the series comprising O or S, or of the abovementioned heterocycles which are fused to a benzo radical, or of the abovementioned heterocycles which are substituted on one or two of the C atoms by =S and/or $C_1$-$C_4$alkyl, or,
if n is 2,
$R^4$ is straight-chain alkylene having 1 to 10 C atoms or straight-chain alkylene having 1 to 10 C atoms which is substituted by one or two alkyl groups having 1 to 4 C atoms, or straight-chain alkylene having 2 to 10 C atoms which is interrupted by 1 to 5 -S- or -O-, or alkylene having 2 to 10 C atoms which is substituted by one or two alkyl groups having 1 to 4 C atoms and interrupted by 1 to 5 -S- or -O-, or $R^4$ has the meaning of a bivalent heterocycle having 5 to 6 ring members with 1 to 3 nitrogen atoms, or of a bivalent heterocycle having 5 to 6 ring members with one or two nitrogen atoms and one further hetero atom from the series comprising O or S, or of the abovementioned bivalent heterocycles which are fused to a benzo radical, or of the abovementioned bivalent heterocycles which are substituted on one or two of the C atoms by =S and/or $C_1$-$C_4$alkyl, or,
if n is 3,
$R^4$ is a group of the formula

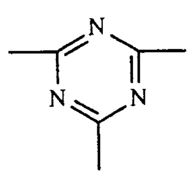 .

**3.** A compound according to claim 1, of the formula I in which $R^1$ and $R^2$ are identical or different and are a straight-chain or branched-chain alkyl group having 2 to 12 C atoms, phenyl, phenyl which is substituted by one $C_1$-$C_9$alkyl group, benzyl, or a cycloalkyl group having 5 to 10 ring C atoms, or in which $R^1$ and $R^2$ together are a straight-chain alkylene group having 2 to 4 C atoms or a straight-chain alkylene group having 2 to 4 C atoms which is substituted by one or two alkyl groups each of which has 1 to 4 C atoms, or which is substituted by a group of the formula $-CH_2-S-C_4H_9$, or are a group of the formula

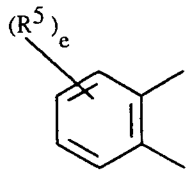

,

in which e is 0 or 1 and, if e is 1, $R^5$ is tert-butyl.

**4.** A compound according to claim 1, of the formula I in which $R^1$ and $R^2$ are identical or different and are an alkyl group having 2 to 12 C atoms, phenyl or cyclohexyl, or $R^1$ and $R^2$ together are a straight-chain $C_2$- or $C_3$-alkylene group, or are a dimethylene or trimethylene group which is substituted by a $C_1$-$C_4$alkyl group, or are a di-$C_1$-$C_4$alkyl-substituted dimethylene or trimethylene group or a $-CH_2$-S-t-$C_4H_9$-substituted dimethylene or trimethylene group, or a group of the formula

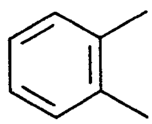

or

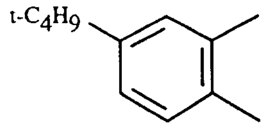

**5.** A compound according to claim 1, of the formula I in which $R^1$ and $R^2$ are identical or different and are $C_2$-$C_8$alkyl, or $R^1$ and $R^2$ together are dimethylene, 1-methyldimethylene, 1-ethyldimethylene, 2,2-dimethyltrimethylene or 2-ethyl-2-n-butyltrimethylene.

**6.** A compound according to claim 1, of the formula I in which $R^1$ and $R^2$ are identical.

**7.** A compound according to claim 1, of the formula I in which $R^3$ is methyl, phenyl or $-CH_2$-S-$R^{4''}$ in which $R^{4''}$ is an alkyl group having 2 to 12 C atoms or

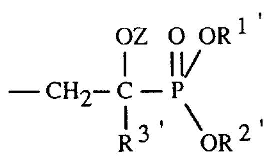

in which Z is as defined in claim 1 and $R^{3'}$ is -H, alkyl having 1 to 4 C atoms or phenyl, and $R^{1'}$ and $R^{2'}$ are identical and an alkyl group having 1 to 8 C atoms, phenyl or cyclohexyl, or $R^{1'}$ and $R^{2'}$ together are a straight-chain $C_2$- or $C_3$-alkylene group or a $C_1$-$C_4$alkyl-substituted dimethylene or trimethylene group, a di-$C_1$-$C_4$alkyl-substituted dimethylene or trimethylene group or a $-CH_2$-S-t-$C_4H_9$- or $-CH_2$-O-i$C_8H_{17}$-substituted dimethylene or trimethylene group.

**8.** A compound according to claim 1, of the formula I in which $R^{4'}$ is an alkyl group having 1 to 12 C atoms, a phenyl group, a benzyl group or an alkyl group having 2 to 8 C atoms which is substituted by an OH group or an alkyl group having 2 to 12 C atoms which is interrupted by an -O- or -S-, or an alkyl group having 2 to 18 C atoms which is interrupted by an -O- or -S- and substituted by an -OH group, or a group of the formula $-R^6-COOR^7$ in which $R^6$ is an alkylene group having 1 to 3 C atoms and $R^7$ is an alkyl group having 4 to 8 C atoms, or is a cyclohexyl group, or $R^{4'}$ is a group of the formula

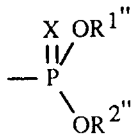

in which X is oxygen or sulfur and $R^{1''}$ and $R^{2''}$ are identical and are alkyl having 1 to 8 C atoms or $R^{1''}$ and $R^{2''}$ together are straight-chain alkylene having 2 or 3 C atoms or straight-chain alkylene having 2 or 3 C atoms which is substituted by one or two alkyl groups having 1 to 4 C atoms, or
$R^{4'}$ has the meaning of a heterocycle having 5 to 6 ring members with 1 to 3 nitrogen atoms, or of a heterocycle having 5 to 6 ring members with one nitrogen atom and one further hetero atom from the series comprising O or S, or of the abovementioned heterocycles which are fused to a benzo radical, or of the abovementioned heterocycles which are substituted on one or two of the C atoms by =S or by $C_1$-$C_4$alkyl, or $R^{4'}$ has the meaning of

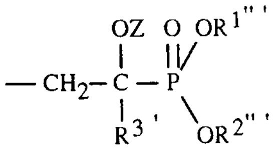 or of 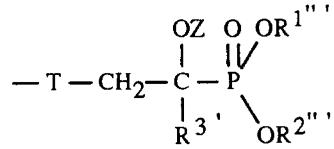

in which T and Z are as defined in claim 1, $R^{3'}$ is methyl and $R^{1'''}$ and $R^{2'''}$ are identical and are alkyl having 1 to 8 C atoms.

**9.** A compound according to claim 1, of the formula I in which n is 2 and in which $R^4$ is straight-chain alkylene having 2 to 4 C atoms or $R^4$ has the meaning of a divalent heterocycle having 5 to 6 ring members with one or two nitrogen atoms and one further hetero atom from the series comprising O or S.

**10.** A compound according to claim 1, of the formula I in which n is 1, $R^1$ and $R^2$ are identical and are $C_1$-$C_{12}$alkyl, or $R^1$ and $R^2$ together are

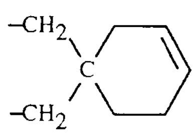 ,

$R^3$ has the meaning of $C_1$-$C_4$alkyl or phenyl, and $R^4$ has the meaning of $R^{4'}$ in which $R^{4'}$ is $C_1$-$C_4$alkyl, a heterocycle having 5 ring members and one or two nitrogen atoms, a heterocycle having 5 ring members and one nitrogen atom and with one or two additional hetero atoms from the series comprising S or O, one of the abovementioned heterocycles with fused benzo ring, or $C_3$-$C_{12}$alkyl which is substituted by one -OH and interrupted by 1 or 2 O or S.

**11.** A composition, containing a) a synthetic polymer or a functional liquid and
b) at least one compound of the general formula I

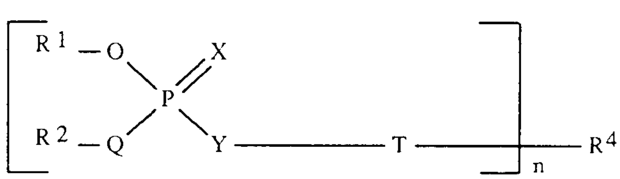 (I) ,

in which n is 1, 2 or 3 and in which X is oxygen or sulfur, T has the meaning of -S-, -S-S-, -S-S-S-, -S-S-S-S-, -S-S-S-S-S-,

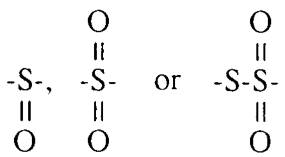

and Y has the meaning of

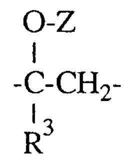

in which Z has the meaning of -H, $-COR^{13}$, $-COOR^{13}$ or $-CONHR^{13}$, and Q has the meaning of oxygen or $-NR^{o}-$, and $R^1$, $R^2$, $R^o$ and $R^{13}$ are identical or different and are an alkyl group having 1 to 18 C atoms, an alkenyl group having 2 to 18 C atoms, a phenyl or naphthyl group, a phenyl or naphthyl group each of which is substituted by at least one $C_1$-$C_9$alkyl group, or are a phenylalkyl group having 7 to 9 C atoms, a cycloalkyl group having 5 to 12 ring C atoms or a cycloalkyl group having 5 to 12 ring C atoms which is substituted by at least one alkyl group having 1 to 4 C atoms, or $R^o$ is -H, or $R^1$ and $R^2$ together are a straight-chain alkylene group having 2 to 10 C atoms, a straight-chain alkylene group having 2 to 10 C atoms which is substituted by at least one alkyl group having 1 to 8 C atoms or by at least one group $-CH_2$-O-$C_1$-$C_{12}$alkyl or $-CH_2$-S-$C_1$-$C_{12}$alkyl, or $R^1$ and $R^2$ together are a group of the formula

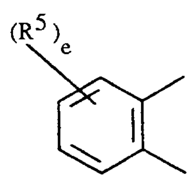

in which $R^5$ is an alkyl group having 1 to 4 C atoms and e is a number 0, 1 or 2, or $R^1$ and $R^2$ together are a group of the formula

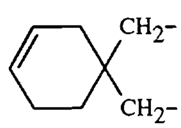

,

$R^3$ has the meaning of -H, alkyl having 1 to 4 C atoms, phenyl, $-CH_2$-S-$R^{4'}$, in which $R^{4'}$ is as defined below, or is phenyl or phenyl substituted by at least one alkyl group having 1 to 4 C atoms, and, if n is 1, $R^4$ has the meaning of $R^{4'}$ in which $R^{4'}$ is -H, an alkyl group having 1 to 18 C atoms, an alkenyl group having 2 to 18 C atoms, a phenyl or naphthyl group, a phenyl or naphthyl group which is substituted by at least one $C_1$-$C_9$alkyl group, or is a phenylalkyl group having 7 to 9 C atoms, pinan-10-yl, an alkyl group having 1 to 18 C atoms which is substituted by at least one OH group, an alkyl group having 2 to 18 C atoms which is interrupted by at least one -S- or -O-, an alkyl group having 3 to 18 C atoms which is substituted by at least one OH group and interrupted by at least one -S- or -O-, a group of the formula $-R^6-COOR^7$ in which $R^6$ is an alkylene group having 1 to 6 C atoms and $R^7$ is an alkyl group having 1 to 12 C atoms, a cycloalkyl group having 5 to 12 ring C atoms, a cycloalkyl group having 5 to 12 ring C atoms which is substituted by at least one alkyl group having 1 to 4 C atoms, or

is a cycloalkyl group having 5 to 12 ring C atoms which is interrupted by at least one -O- or -S-, or is a cycloalkyl group having 5 to 12 ring C atoms which is substituted by at least one alkyl group having 1 to 4 C atoms and interrupted by at least one -O- or -S-, or $R^{4}$' is a group of the formula

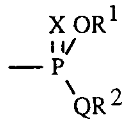 , 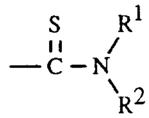 , 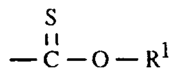 or 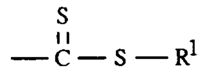 ,

X is oxygen or sulfur and Q, $R^1$ and $R^2$ are as defined above, or $R^{4}$' is a heterocycle having 5 to 6 ring members with 1 to 3 members from the series comprising -NH-, -N=,

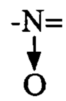

or -N($C_1$-$C_4$alkyl)-, or a heterocycle having 5 to 6 ring members with one or two members from the series comprising -NH-, -N=

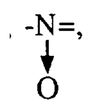

or -N($C_1$-$C_4$alkyl)- and one further hetero atom from the series comprising O or S, or the abovementioned heterocycles which are fused to a benzo radical, or the abovementioned heterocycles which are substituted on one or two of the C atoms by =S and/or $C_1$-$C_4$alkyl, or $R^{4}$' has the meaning of

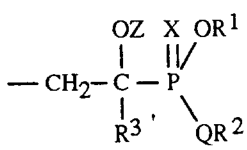 or of 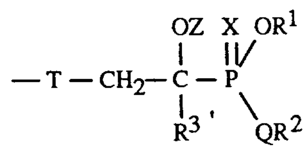

in which T and Z are as defined above, X is oxygen or sulfur, $R^{3'}$ is -H, alkyl having 1 to 4 C atoms, phenyl or phenyl which is substituted by at least one alkyl group having 1 to 9 C atoms, and Q, $R^1$ and $R^2$ are as defined above, or $R^4$ has the meaning of

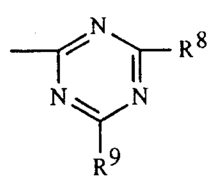

in which
$R^8$ and $R^9$, independently of one another, are $C_1$-$C_{18}$alkyl, phenyl, phenyl which is mono-, di- or tri-$C_1$-$C_4$alkyl-substituted, or are a group -$OR^{10}$, -$SR^{10}$ or

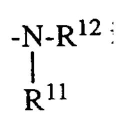

in which $R^{10}$ is $C_1$-$C_{18}$alkyl, $C_5$-$C_{12}$cycloalkyl, $C_5$-$C_{12}$cycloalkyl which is mono-, di- or tri-$C_1$-$C_4$alkyl-substituted, or is $C_3$-$C_6$alkenyl, phenyl, phenyl which is mono-, di- or tri-$C_1$-$C_4$alkyl-substituted, or is $C_7$-$C_9$phenylalkyl or $C_7$-$C_9$phenylalkyl which is mono-, di- or tri-$C_1$-$C_4$alkyl-substituted on the phenyl, and $R^{11}$ and $R^{12}$ which are identical or different are -H, $C_1$-$C_{18}$alkyl, $C_5$-$C_{12}$cycloalkyl, $C_5$-$C_{12}$cycloalkyl which is mono-, di- or tri-$C_1$-$C_4$alkyl-substituted, or are $C_3$-$C_6$alkenyl, $C_7$-$C_9$phenylalkyl, $C_7$-$C_9$phenylalkyl which is mono-, di- or tri-$C_1$-$C_4$alkyl-substituted on the phenyl, or are $C_2$-$C_4$alkyl which is substituted by -OH, by $C_1$-$C_8$alkoxy or by di($C_1$-$C_4$alkyl)amino, or $R^{11}$ and $R^{12}$ together with the nitrogen atom linking them are a 5- to 7-membered heterocycle, or,
if n is 2,
$R^4$ is straight-chain alkylene having 1 to 12 C atoms or alkenylene having 2 to 10 C atoms or straight-chain alkylene having 1 to 10 C atoms which is substituted by at least one alkyl group having 1 to 4 C atoms, or straight-chain alkylene having 2 to 10 C atoms which is interrupted by -S- or -O-, or alkylene having 2 to 10 C atoms which is substituted by at least one alkyl group having 1 to 4 C atoms and interrupted by -S- or -O-, or $R^4$ has the meaning of a bivalent heterocycle having 5 to 6 ring members with 1 to 3 nitrogen atoms, or of a bivalent heterocycle having 5 to 6 ring members with one nitrogen atom and one further hetero atom from the series comprising O or S, or of the abovementioned bivalent heterocycles which are fused to a benzo radical, or of the abovementioned bivalent heterocycles which are substituted by =S and/or $C_1$-$C_4$alkyl on one or two of the C atoms,
or,
$R^4$ has the meaning of

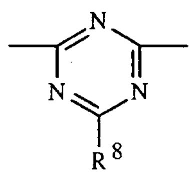

,

in which $R^8$ is as defined above, or,
if n is 3,
$R^4$ is a group of the formula

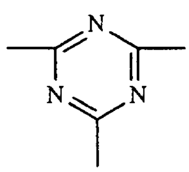

.

**12.** A composition according to claim 11, containing a) a functional liquid and b) at least one compound of the formula I.

**13.** A composition according to claim 12, containing
a) a lubricant and
b) at least one compound of the formula I.

**14.** The use of a compound of the formula I according to claim 11 as an additive in organic materials.

**15.** A process for the preparation of a compound of the general formula I according to claim 1, in which Z is -H, which comprises reacting a compound of the general formula II

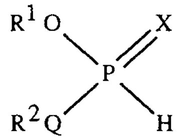

(II),

in which X, Q, $R^1$ and $R^2$ are as defined in claim 1, with a compound of the general formula III

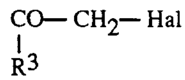

(III) ,

in which $R^3$ is as defined in claim 1 and Hal has the meaning of I, Br or Cl, in a first reaction step, to give a compound of the general formula IV

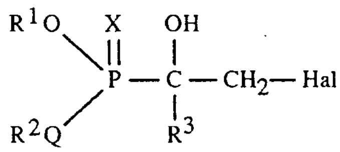

(IV) ,

in which X, Q, $R^1$, $R^2$ and $R^3$ are as defined in claim 1 and Hal is as defined above, and, in a second reaction step, reacting the compound of the general formula IV with a compound of the general formula V

$$[MS]_n-R^4 \qquad (V)$$

or with a compound of the general formula Va

M-S-M (Va)

or with a compound of the general formula Vb

$$M-[S]_q-M \qquad (Vb)$$

in which q is a number 2, 3, 4 or 5, $R^4$ and n being as defined in claim 1 and M being an alkali metal or -H.

**16.** A process according to claim 15, which comprises carrying out the first reaction step in the presence of a basic catalyst.

## Revendications

**1.** Composés de formule générale I

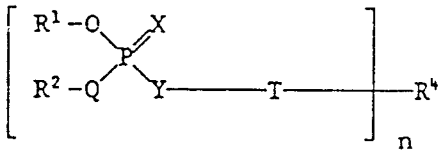 (I),

n valant 1, 2 ou 3 et dans laquelle
x représente un oxygène ou un soufre, T signifie -S-, -S-S-, -S-S-S-, -S-S-S-S-, -S-S-S-S-S-,

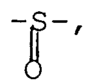, 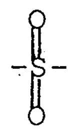 ou 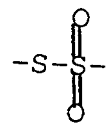

et Y signifie

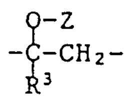 ,

Z signifiant -H, $-COR^{13}$, $-COOR^{13}$ ou $-CONHR^{13}$, et
Q signifiant un oxygène ou bien $-NR^0-$, et
$R^1$, $R^2$, $R^0$ et $R^{13}$ étant identiques ou différents et représentant un groupe alkyle ayant de 1 à 18 atomes de carbone, un groupe alcényle ayant de 2 à 18 atomes de carbone, un groupe phényle ou naphtyle, un groupe naphtyle ou phényle substitué par au moins un groupe alkyle en $C_1$-$C_4$, un phénylalkyle ayant de 7 à 9 atomes de carbone, un groupe cycloalkyle ayant de 5 à 12 atomes de carbone sur le cycle ou un groupe oycloalkyle ayant de 5 à 12 atomes de carbone sur le cycle, qui est substitué par au moins un groupe alkyle ayant de 1 à 4 atomes de carbone, ou bien $R^0$ étant -H, ou bien
$R^1$ et $R^2$ représentant ensemble un groupe alkylène à chaîne droite ayant de 2 à 5 atomes de carbone, un groupe alkylène à chaîne droite ayant de 2 à 5 atomes de carbone qui est substitué par au moins un groupe alkyle ayant de 1 à 8 atomes de carbone ou par au moins un groupe $-CH_2$-O-alkyle en $C_1$-$C_{12}$ ou $-CH_2$-S-alkyle en $C_1$-$C_{12}$,
ou bien
$R^1$ et $R^2$ représentant ensemble un groupe de formule

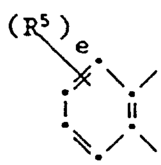 ,

$R^5$ représentant un groupe alkyle ayant de 1 à 4 atomes de carbone et e représentant le chiffre 0, 1 ou 2, ou bien
$R^1$ et $R^2$ représentant ensemble un groupe de formule

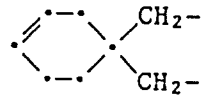

,

$R^3$ signifiant -H, un alkyle ayant de 1 à 4 atomes de carbone, un phényle, $-CH_2-S-R^{4'}$, $R^{4'}$ ayant la signification suivante d'un phényle ou d'un phényle substitué par au moins un groupe alkyle ayant de 1 à 4 atomes de carbone, et

lorsque n vaut 1,

$R^4$ a la signification de $R^{4'}$,

$R^{4'}$ représentant -H, un groupe alkyle ayant de 1 à 18 atomes de carbone, un groupe alcényle ayant de 2 à 18 atomes de carbone, un groupe phényle ou naphtyle, un groupe phényle ou naphtyle substitué par au moins un groupe alkyle en $C_1$-$C_9$, un groupe phénylalkyle ayant de 7 à 9 atomes de carbone, un pinane-10-yle, un groupe alkyle ayant de 1 à 18 atomes de carbone, qui est substitué par au moins un groupe OH, un groupe alkyle ayant de 2 à 18 atomes de carbone, qui est Interrompu par au moins un -S- ou -O-, un groupe alkyle ayant de 3 à 18 atomes de carbone, qui est substitué par au moins un groupe OH et qui est interrompu par au moins un -S- ou -O-, un groupe de formule $-R^6-COOR^7$, $R^6$ représentant un groupe alkylène ayant de 1 à 6 atomes de carbone et $R^7$ un groupe alkyle ayant de 1 à 12 atomes de carbone ; un groupe cycloalkyle ayant de 5 à 12 atomes de carbone dans le cycle, un groupe cycloalkyle ayant de 5 à 12 atomes de carbone dans le cycle, qui est substitué par au moins un groupe alkyle ayant de 1 à 4 atomes de carbone ou un groupe cycloalkyle ayant de 5 à 12 atomes de carbone, qui est interrompu par au moins un -O- ou -S-, ou un groupe cycloalkyle ayant de 5 à 12 atomes de carbone dans le cycle, qui est substitué par au moins un groupe alkyle ayant de 1 à 4 atomes de carbone et qui est interrompu par au moins un -O- ou -S-, ou bien

$R^{4'}$ représente un groupe de formules

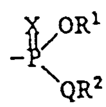 , 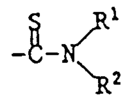 , 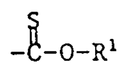 ou 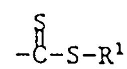 ,

dans lesquelles X signifie un oxygène ou un soufre et Q, $R^1$ et $R^2$ ont la signification mentionnée, ou bien

$R^{4'}$ signifie un hétérocycle ayant de 5 à 6 chaînons de cycle avec de 1 à 4 chaînons appartenant à la série des -NH-, -N=,

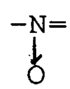

ou bien -N(alkyle en $C_1$-$C_4$)- ou bien un hétérocycle ayant de 5 à 6 chaînons de cycle avec un ou deux chaînons appartenant à la série des -NH-, -N=,

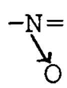

ou bien -N(alkyle en $C_1$-$C_4$)- et un autre hétéroatome appartenant à la série de O ou S, ou bien les hétérocycles mentionnés qui sont fusionnés avec un reste benzène, ou bien les hétérocycles mentionnés, qui sont substitués sur un ou deux des atomes de carbone par =S et/ou un alkyle en $C_1$-$C_4$, ou bien

$R^{4'}$ signifie

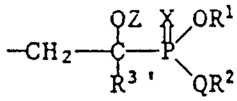 ou 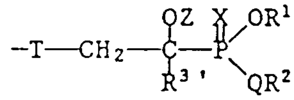

T et Z ayant les significations indiquées, X signifiant un oxygène ou un soufre, $R^{3'}$ étant -H, un alkyle ayant de 1 à 4 atomes de carbone, un phényle ou un phényle substitué par au moins un groupe alkyle ayant de 1 à 9 atomes de carbone, et Q, $R^1$ et $R^2$ ayant la signification mentionnée, ou $R^4$ ayant la signification de

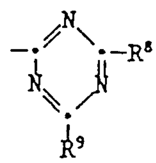 ,

$R^8$ et $R^9$, indépendamment l'un de l'autre, signifiant un alkyle en $C_1$-$C_{18}$, un phényle, un phényle mono-, di- ou tri-substitué par des alkyles en $C_1$-$C_4$, un groupe $-OR^{10}$, $-SR^{10}$ ou

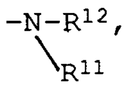

$R^{10}$ signifiant un alkyle en $C_1$-$C_{18}$, un cycloalkyle en $C_5$-$C_{12}$, un cycloalkyle en $C_5$-$C_{12}$ mono-, di- ou tri-substitué par des alkyles en $C_1$-$C_4$, un alcényle en $C_3$-$C_6$, un phényle, un phényle mono-, di- ou tri-substitué par des alkyles en $C_1$-$C_9$, un phénylalkyle en $C_7$-$C_9$ ou un phénylalkyle en $C_7$-$C_9$ mono-, di- ou tri-substitué par des alkyles en $C_1$-$C_4$ sur le phényle, et $R^{11}$ et $R^{12}$, qui sont identiques ou différents, signifiant - H, un alkyle en $C_1$-$C_{18}$, un cycloalkyle en $C_5$-$C_{12}$, un cycloalkyle en $C_5$-$C_{12}$ mono-, di- ou tri-substitué par des alkyles en $C_1$-$C_4$, un alcényle en $C_3$-$C_6$, un phénylalkyle en $C_7$-$C_9$, un phénylalkyle en $C_7$-$C_9$ mono-, di- ou tri-substitué par des alkyles en $C_1$-$C_4$ sur le phényle, un alkyle en $C_2$-$C_4$, qui est substitué par -OH, par des alcoxy en $C_1$-$C_8$ ou par des di-(alkyle en $C_1$-$C_4$)- amino ou bien $R^{11}$ et $R^{12}$ signifiant, ensemble avec l'atome d'azote sur lequel ils sont liés, un hétérocycle de 5 à 7 chaînons, ou bien,

lorsque n vaut 2,

$R^4$ signifie un alkylène à chaîne droite ayant de 1 à 12 atomes de carbone ou bien un alcényle ayant de 2 à 10 atomes de carbone ou bien un alkylène à chaîne droite ayant de 1 à 10 atomes de carbone, qui est substitué par au moins un groupe alkyle ayant de 1 à 4 atomes de carbone, ou bien un alkylène à chaîne droite ayant de 2 à 10 atomes de carbone, qui est interrompu par au moins un -S- ou -O- ou bien un alkylène à chaîne droite ayant de 2 à 10 atomes de carbone qui est substitué par au moins un groupe alkyle ayant de 1 à 4 atomes de carbone et qui est interrompu par au moins un -S- ou -O-, ou bien

$R^4$ a la signification d'un hétérocycle bivalent ayant de 5 à 6 chaînons dans le cycle avec de 1 à 4 atomes d'azote ou bien un hétérocycle bivalent ayant de 5 à 6 chaînons dans le cycle avec un ou deux atomes d'azote et un autre hétéroatome pris dans la série des O ou S, ou bien les hétérocycles bivalents mentionnés, qui sont fusionnés sur un reste benzène, ou bien les hétérocycles bivalents mentionnés, qui sont substitués sur un ou deux des atomes de carbone par =S et/ou des alkyles en $C_1$-$C_4$, ou bien

$R^4$ a la signification de

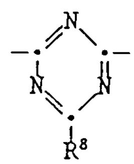

,

$R^8$ possédant la signification mentionnée, ou bien, lorsque n vaut 3,
$R^4$ signifie un groupe de formule

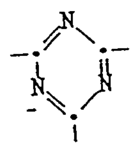

,

avec la condition que les composés de formules $C_2H_5$-S-$CH_2CH(OH)$-$PO(OC_2H_5)_2$ et Ph-$C(CH_2SCH_3)$-(OH)-$PO(OC_2H_5)_2$ [Ph = phényle] soient exclus.

**2.** Composés de formule générale I selon la revendication 1,
n valant 1, 2 ou 3, et dans laquelle
$R^1$ et $R^2$ sont identiques ou différents et représentant un groupe alkyle ayant de 1 à 18 atomes de carbone, un groupe alcényle ayant de 2 à 18 atomes de carbone, un groupe phényle, un groupe phényle substitué par un ou deux groupes alkyle en $C_1$-$C_9$, un groupe phénylalkyle ayant de 7 à 9 atomes de carbone, un groupe cycloalkyle ayant de 5 à 12 atomes de carbone dans le cycle ou un groupe cycloalkyle ayant de 5 à 12 atomes de carbone dans le cycle, qui est substitué par un groupe alkyle ayant de 1 à 4 atomes de carbone, ou dans laquelle
$R^1$ et $R^2$ représentent ensemble un groupe alkylène à chaîne droite ayant de 2 à 5 atomes de carbone, un groupe alkylène à chaîne droite ayant de 2 à 5 atomes de carbone qui est substitué par ou deux groupes alkyle ayant de 1 à 4 atomes de carbone ou par un groupe -$CH_2$-O-alkyle en $C_1$-$C_9$ ou -$CH_2$-S-alkyle en $C_1$-$C_9$, ou bien
$R^1$ et $R^2$ représentent ensemble un groupe de formule

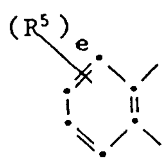

,

$R^5$ représentant un groupe alkyle ayant de 1 à 4 atomes de carbone et e représentant un chiffre 0, 1 ou 2, ou bien
$R^1$ et $R^2$ représentent ensemble un groupe de formule

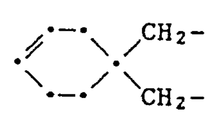

,

$R^3$ signifie -H, un alkyle ayant de 1 à 4 atomes de carbone, -$CH_2$-S-$R^{4'}$,
$R^{4'}$ ayant la signification suivante d'un phényle ou d'un phényle substitué par un groupe alkyle ayant de 1 à 9 atomes de carbone, et

lorsque n vaut 1,
$R^4$ a la signification de $R^{4\prime}$,
$R^{4\prime}$ représentant -H, un groupe alkyle ayant de 1 à 18 atomes de carbone, un groupe alcényle ayant de 2 à 18 atomes de carbone, un groupe phényle, un groupe phényle substitué par au moins un groupe alkyle en $C_1$-$C_9$, un groupe phénylalkyle ayant de 7 à 9 atomes de carbone, un groupe alkyle ayant de 1 à 18 atomes de carbone, qui est substitué par de 1 à 5 groupes OH, un groupe alkyle ayant de 2 à 18 atomes de carbone, qui est interrompu par de 1 à 5 -S- ou -O-, un groupe alkyle ayant de 3 à 18 atomes de carbone, qui est substitué par de 1 à 5 groupes OH et qui est interrompu par de 1 à 5 -S-ou -O-, un groupe cycloalkyle ayant de 5 à 12 atomes de carbone dans le cycle, un groupe cycloalkyle ayant de 5 à 12 atomes de carbone dans le cycle, qui est substitué par un groupe alkyle ayant de 1 à 4 atomes de carbone, ou
$R^{4\prime}$ représente un groupe de formule

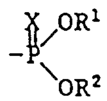
,

dans laquelle
X signifie un oxygène ou un soufre et $R^1$ et $R^2$ ont la signification mentionnée, ou bien
$R^{4\prime}$ signifie un hétérocycle ayant de 5 à 6 chaînons dans le cycle avec de 1 à 3 chaînons appartenant à la série des -NH-, -N=,

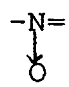

ou -N($CH_3$)- ou un hétérocycle ayant de 5 à 6 chaînons dans le cycle avec un chaînon appartenant à la série des -NH-, -N=,

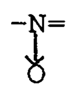

ou -N($CH_3$)- et un autre hétéroatome appartenant à la série des O ou S ou les hétérocycles mentionnés, qui sont fusionnés avec un reste benzène, ou bien les hétérocycles mentionnés qui sont substitués sur un ou deux des atomes de carbone par =S et/ou des alkyles en $C_1$-$C_4$, ou bien
lorsque n vaut 2,
$R^4$ signifie un alkylène à chaîne droite ayant de 1 à 10 atomes de carbone ou un alcényle à chaîne droite ayant de 1 à 10 atomes de carbone, qui est substitué par un ou deux groupes alkyle ayant de 1 à 4 atomes de carbone, ou bien un alkylène à chaîne droite ayant de 2 à 10 atomes de carbone, qui est interrompu par de 1 à 5 -S- ou -O- ou bien un alkylène ayant de 2 à 10 atomes de carbone, qui est substitué par un ou deux groupes alkyle ayant de 1 à 4 atomes de carbone et qui est interrompu par de 1 à 5 -S- ou -O-, ou $R^4$ signifie un hétérocycle bivalent ayant de 5 à 6 chaînons dans le cycle avec de 1 à 3 atomes d'azote ou bien un hétérocycle bivalent ayant de 5 à 6 chaînons dans le cycle avec un ou deux atomes d'azote et un autre hétéroatome appartenant à la série des O ou S, ou bien les hétérocycles bivalents mentionnés, qui sont fusionnés avec un reste benzène, ou bien les hétérocycles bivalents mentionnés, qui sont substitués sur un ou deux des atomes de carbone par =S et/ou des alkyles en $C_1$-$C_4$, ou bien
lorsque n vaut 3, $R^4$ signifie un groupe de formule

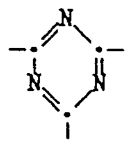

.

3. Composés selon la revendication 1 de formule I, dans laquelle $R^1$ et $R^2$ sont identiques ou différents et représentent un groupe alkyle à chaîne droite ou ramifiée ayant de 2 à 12 atomes de carbone, un phényle, un phényle substitué par un groupe alkyle en $C_1$-$C_9$, un benzyle ou un groupe cycloalkyle ayant de 5 à 10 atomes de carbone dans le cycle, ou bien dans laquelle $R^1$ et $R^2$ représentent ensemble un groupe alkylène à chaîne droite ayant de 2 à 4 atomes de carbone ou un groupe alkylène à chaîne droite ayant de 2 à 4 atomes de carbone, qui est substitué par un ou deux groupes alkyle ayant à chaque fois de 1 à 4 atomes de carbone ou qui est substitué avec un groupe de formule $-CH_2-S-C_4H_9$, ou bien un groupe de formule

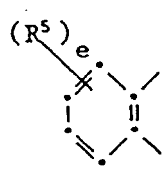

,

e valant 0 ou 1, et lorsque e vaut 1, $R^5$ est un tert.-butyle.

4. Composés selon la revendication 1 de formule I, dans laquelle $R^1$ et $R^2$ sont identiques ou différents et représentent un groupe alkyle ayant de 2 à 12 atomes de carbone, un phényle ou un cyclohexyle ou bien $R^1$ et $R^2$ représentent ensemble un groupe alkylène à chaîne droite en $C_2$ ou $C_3$ ou bien un groupe diméthylène ou triméthylène substitué par un groupe alkyle en $C_1$-$C_4$, un groupe diméthylène ou triméthylène di-(alkyle en $C_1$-$C_4$)- substitué ou bien un groupe diméthylène ou triméthylène substitué par $-CH_2-S-t-C_4H_9$ ou bien un groupe de formule

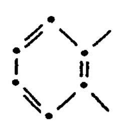

ou

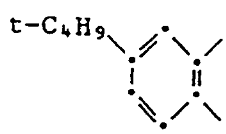

5. Composés selon la revendication 1 de formule I, dans laquelle $R^1$ et $R^2$ sont identiques ou différents et représentent un alkyle en $C_2$-$C_8$ ou bien $R^1$ et $R^2$ représentent ensemble les diméthylène, 1-méthyldiméthylène, 1-éthyldiméthylène, 2,2-diméthyltriméthylène ou bien 2-éthyl-2-n-butyltriméthylène.

6. Composés selon la revendication 1 de formule I, dans laquelle $R^1$ et $R^2$ sont identiques.

7. Composés selon la revendication 1 de formule I, dans laquelle $R^3$ représente les méthyle, phényle ou $-CH_2-S-R^{4''}$, $R^{4''}$ étant un groupe alkyle ayant de 2 à 12 atomes de carbone ou bien

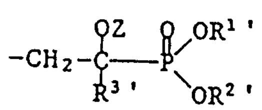

,

dans laquelle Z à la signification indiquée dans la revendication 1 et $R^{3'}$ est -H, un alkyle ayant de 1 à 4 atomes de carbone ou un phényle et $R^{1'}$ et $R^{2'}$ sont identiques et représentent un groupe alkyle ayant de 1 à 8 atomes de carbone, un phényle ou un cyclohexyle ou bien $R^{1'}$ et $R^{2'}$ représentent ensemble un groupe alkylène à chaîne droite en $C_2$ ou $C_3$ ou bien un groupe diméthylène ou triméthylène (alkyle en $C_1$-$C_4$)-substitué, un groupe diméthylène ou triméthylène di-(alkyle en $C_1$-$C_4$)-substitué ou bien un groupe diméthylène ou triméthylène substitué par $-CH_2-S-t-C_4H_9$ ou bien par $-CH_2-O-i-C_8-H_{17}$.

**8.** Composés selon la revendication 1 de formule I, dans laquelle $R^{4'}$ signifie un groupe alkyle ayant de 1 à 12 atomes de carbone, un groupe phényle, un groupe benzyle ou un groupe alkyle ayant de 2 à 8 atomes de carbone, qui est substitué par un groupe OH ou bien un groupe alkyle ayant de 2 à 12 atomes de carbone, qui est interrompu par -O- ou -S-, ou bien un groupe alkyle ayant de 2 à 18 atomes de carbone, qui est interrompu par un -O- ou -S- et qui est substitué par un groupe -OH ou bien un groupe de formule $-R^6-COOR^7$, $R^6$ représentant un groupe alkylène ayant de 1 à 3 atomes de carbone et $R^7$ un groupe alkyle ayant de 4 à 8 atomes de carbone, ou bien un groupe cyclohexyle, ou bien $R^{4'}$ représente un groupe de formule

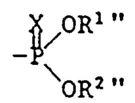 ;

dans laquelle X signifie un oxygène ou un soufre et $R^{1''}$ et $R^{2''}$ sont identiques et signifient un alkyle ayant de 1 à 8 atomes de carbone ou bien $R^{1''}$ et $R^{2''}$ représentent ensemble un alkylène à chaîne droite ayant 2 ou 3 atomes de carbone ou bien un alkylène à chaîne droite ayant 2 ou 3 atomes de carbone, qui est substitué par un ou deux groupes alkyle ayant de 1 à 4 atomes de carbone, ou bien $R^{4'}$ a la signification d'un hétérocycle ayant de 5 à 6 chaînons dans le cycle avec de 1 à 3 atomes d'azote ou bien un hétérocycle ayant de 5 à 6 chaînons dans le cycle avec un atome d'azote et un autre hétéroatome appartenant à la série des O ou S ou bien les hétérocycles mentionnés, qui sont fusionnés avec un reste benzène, ou bien les hétérocycles mentionnés, qui sont substitués sur un ou deux des atomes de carbone par =S ou par des alkyles en $C_1$-$C_4$, ou bien
$R^{4'}$ a la signification de

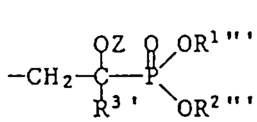 ou 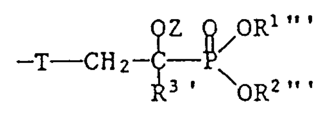

T et Z ayant les significations indiquées dans la revendication 1, $R^{3'}$ étant un méthyle et $R^{1'''}$ et $R^{2'''}$ étant identiques et signifiant un alkyle ayant de 1 à 8 atomes de carbone.

**9.** Composés selon la revendication 1 de formule I, n valant 2 et dans laquelle $R^4$ est un alkylène à chaîne droite ayant de 2 à 4 atomes de carbone ou bien $R^4$ a la signification d'un hétérocycle divalent ayant de 5 à 6 chaînons dans le cycle avec un ou deux atomes d'azote et un autre hétéroatome appartenant à la série des O ou S.

**10.** Composés selon la revendication 1 de formule I, dans laquelle n vaut 1, $R^1$ et $R^2$ sont identiques et sont des alkyles en $C_1$-$C_{12}$ ou bien $R^1$ et $R^2$ signifient ensemble

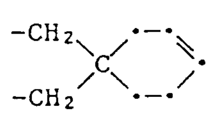 ,

$R^3$ a la signification d'un alkyle en $C_1$-$C_4$ ou d'un phényle et $R^4$ a la signification de $R^{4'}$, $R^{4'}$

représentant un alkyle en $C_1$-$C_4$, un hétérocycle ayant 5 chaînons dans le cycle et un ou deux atomes d'azote, un hétérocycle ayant 5 chaînons dans le cycle et un atome d'azote et avec un ou deux hétéroatomes supplémentaires appartenant à la série des S ou O, un des hétérocycles précédents avec un cycle benzène fusionné ou bien un alkyle en $C_3$-$C_{12}$, substitué par un -OH et interrompu par 1 ou 2 O ou S.

**11.** Compositions contenant a) un polymère synthétique ou un liquide fonctionnel et b) au moins un composé de formule générale I

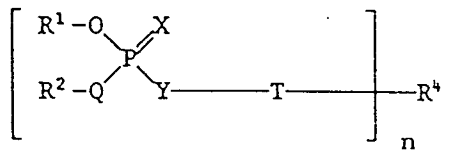

(I),

n valant 1, 2 ou 3 et dans laquelle
X représente un oxygène ou un soufre, T signifie -S-, -S-S-, -S-S-S-, -S-S-S-S-, -S-S-S-S-S-,

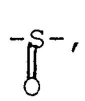 , 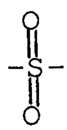 ou 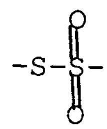

et
Y signifie

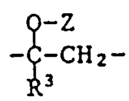 ,

Z signifiant -H, $-COR^{13}$, $-COOR^{13}$ ou $-CONHR^{13}$, et
Q signifiant un oxygène ou bien $-NR^0-$, et
$R^1$, $R^2$, $R^0$ et $R^{13}$ étant identiques ou différents et représentant un groupe alkyle ayant de 1 à 18 atomes de carbone, un groupe alcényle ayant de 2 à 18 atomes de carbone, un groupe phényle ou naphtyle, un groupe naphtyle ou phényle substitué par au moins un groupe alkyle en $C_1$-$C_9$, un groupe phénylalkyle ayant de 7 à 9 atomes de carbone, un groupe cycloalkyle ayant de 5 à 12 atomes de carbone dans le cycle ou un groupe cycloalkyle ayant de 5 à 12 atomes de carbone dans le cycle, qui est substitué par au moins un groupe alkyle ayant de 1 à 4 atomes de carbone, ou bien $R^0$ étant -H, ou bien
$R^1$ et $R^2$ représentant ensemble un groupe alkylène à chaîne droite ayant de 2 à 10 atomes de carbone, un groupe alkylène à chaîne droite ayant de 2 à 10 atomes de carbone qui est substitué par au moins un groupe alkyle ayant de 1 à 8 atomes de carbone ou par au moins un groupe $-CH_2$-O-alkyle en $C_1$-$C_{12}$ ou $-CH_2$-S-alkyle en $C_1$-$C_{12}$, ou bien
$R^1$ et $R^2$ représentant ensemble un groupe de formule

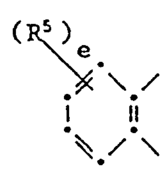

,

$R^5$ représentant un groupe alkyle ayant de 1 à 4 atomes de carbone et e représentant le chiffre 0, 1 ou

2, ou bien
$R^1$ et $R^2$ représentant ensemble un groupe de formule

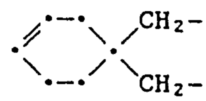

$R^3$ signifiant -H, un alkyle ayant de 1 à 4 atomes de carbone, un phényle, un $-CH_2-S-R^{4'}$, $R^{4'}$ ayant la signification précédente, un phényle ou un phényle substitué par au moins un groupe alkyle ayant de 1 à 4 atomes de carbone, et
lorsque n vaut 1,
$R^4$ a la signification de $R^{4'}$,
$R^{4'}$ représentant -H, un groupe alkyle ayant de 1 à 18 atomes de carbone, un groupe alcényle ayant de 2 à 18 atomes de carbone, un groupe phényle ou naphtyle, un groupe phényle ou naphtyle substitué par au moins un groupe alkyle en $C_1$-$C_9$, un groupe phénylalkyle ayant de 7 à 9 atomes de carbone, un pinane-10-yle, un groupe alkyle ayant de 1 à 18 atomes de carbone, qui est substitué par au moins un groupe OH, un groupe alkyle ayant de 2 à 18 atomes de carbone, qui est interrompu par au moins un -S- ou -O-, un groupe alkyle ayant de 3 à 18 atomes de carbone, qui est substitué par au moins un groupe OH et qui est interrompu par au moins un -S- ou -O-, un groupe de formule $-R^6-COOR^7$, $R^6$ représentant un groupe alkylène ayant de 1 à 6 atomes de carbone et $R^7$ un groupe alkyle ayant de 1 à 12 atomes de carbone, un groupe cycloalkyle ayant de 5 à 12 atomes de carbone dans le cycle, un groupe cycloalkyle ayant de 5 à 12 atomes de carbone dans le cycle, qui est substitué par au moins un groupe alkyle ayant de 1 à 4 atomes de carbone ou un groupe cycloalkyle ayant de 5 à 12 atomes de carbone dans le cycle, qui est interrompu par au moins un -O- ou -S- ou bien un groupe cycloalkyle ayant de 5 à 12 atomes de carbone dans le cycle, qui est substitué par au moins un groupe alkyle ayant de 1 à 4 atomes de carbone et qui est interrompu par au moins un -O- ou -S-, ou
$R^{4'}$ représente un groupe de formule

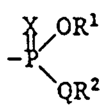 , 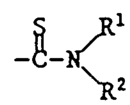 , 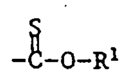 ou 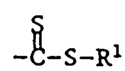 ,

dans laquelle X signifie un oxygène ou un soufre et Q, $R^1$ et $R^2$ ont la signification mentionnée, ou
$R^{4'}$ signifie un hétérocycle ayant de 5 à 6 chaînons dans le cycle avec de 1 à 3 chaînons appartenant à la série des -NH-, -N=,

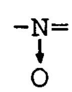

ou bien -N-(alkyle en $C_1$-$C_4$)- ou bien un hétérocycle ayant de 5 à 6 chaînons dans le cycle avec un ou deux chaînons appartenant à la série des -NH-, -N=,

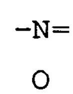

ou bien -N-(alkyle en $C_1$-$C_4$)- et un autre hétéroatome appartenant à la série de O ou S, ou bien les hétérocycles mentionnés, qui sont fusionnés avec un reste benzène, ou bien des hétérocycles mentionnés, qui sont substitués sur un ou deux des atomes de carbone par =S et/ou des alkyles en $C_1$-$C_4$, ou bien $R^{4'}$ a la signification des

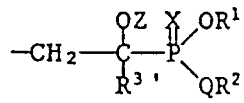

ou

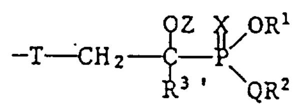

T et Z ayant les significations indiquées, X signifiant un oxygène ou un soufre, $R^{3'}$ étant -H, des alkyles ayant de 1 à 4 atomes de carbone, un phényle ou un phényle substitué par au moins un groupe alkyle ayant de 1 à 9 atomes de carbone, et Q, $R^1$ et $R^2$ ont la signification mentionnée, ou bien
$R^4$ signifie

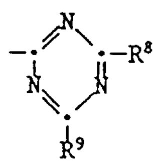

,

$R^8$ et $R^9$, indépendamment l'un de l'autre, signifiant un alkyle en $C_1$-$C_{18}$, un phényle, un phényle mono-, di- ou tri-substitué par des alkyles en $C_1$-$C_4$, un groupe -$OR^{10}$, -$SR^{10}$ ou

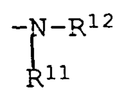

,

$R^{10}$ signifiant un alkyle en $C_1$-$C_{18}$, un cycloalkyle en $C_5$-$C_{12}$, un cycloalkyle en $C_5$-$C_{12}$ mono-, di- ou tri-substitué par des alkyles en $C_1$-$C_4$, un alcényle en $C_3$-$C_6$, un phényle, un phényle mono-, di- ou tri-substitué par des alkyles en $C_1$-$C_4$, un phénylalkyle en $C_7$-$C_9$ ou un phénylalkyle en $C_7$-$C_9$ mono-, di- ou tri-substitué par des alkyles en $C_1$-$C_4$ sur le phényle, et $R^{11}$ et $R^{12}$, qui sont identiques ou différents, signifiant - H, un alkyle en $C_1$-$C_{18}$, un cycloalkyle en $C_5$-$C_{12}$, un cycloalkyle en $C_5$-$C_{12}$ mono-, di- ou tri-substitué par des alkyles en $C_1$-$C_4$, un alcényle en $C_3$-$C_6$, un phénylalkyle en $C_7$-$C_9$, un phénylalkyle en $C_7$-$C_9$ mono-, di- ou tri-substitué par des alkyles en $C_1$-$C_4$ sur le phényle, un alkyle en $C_2$-$C_4$, qui est substitué par -OH, par des alcoxy en $C_1$-$C_8$ ou par des di-(alkyle en $C_1$-$C_4$)-amino ou bien $R^{11}$ et $R^{12}$ signifiant, ensemble avec l'atome d'azote auquel ils sont liés, un hétérocycle de 5 à 7 chaînons, ou bien,
lorsque n vaut 2,
$R^4$ signifie un alkylène à chaîne droite ayant de 1 à 12 atomes de carbone ou bien un alcényle ayant de 2 à 10 atomes de carbone ou bien un alkylène à chaîne droite ayant de 1 à 10 atomes de carbone, qui est substitué par au moins un groupe alkyle ayant de 1 à 4 atomes de carbone, ou bien un alkylène à chaîne droite ayant de 2 à 10 atomes de carbone, qui est interrompu par -S- ou -O-ou bien un alkylène ayant de 2 à 10 atomes de carbone, qui est substitué par au moins un groupe alkyle ayant de 1 à 4 atomes de carbone et qui est interrompu par -S- ou -O-, ou bien
$R^4$ a la signification d'un hétérocycle bivalent ayant de 5 à 6 chaînons dans le cycle avec de 1 à 3 atomes d'azote ou bien un hétérocycle bivalent ayant de 5 à 6 chaînons dans le cycle avec un atome d'azote et un autre hétéroacome appartenant à la série des O ou S, ou bien les hétérocycles bivalents mentionnés, qui sont fusionnés avec un reste benzène, ou bien les hétérocycles bivalents mentionnés, qui sont substitués sur un ou deux des atomes de carbone par =S et/ou des alkyles en $C_1$-$C_4$, ou bien
$R^4$ signifie

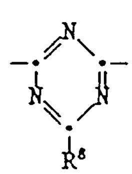

,

$R^8$ possédant la signification mentionnée, ou bien
lorsque n vaut 3,
$R^4$ signifie un groupe de formule

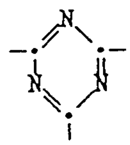

.

**12.** Compositions selon la revendication 11 contenant
a) un liquide utilitaire et
b) au moins un composé de formule I.

**13.** Compositions selon la revendication 12 contenant
a) un lubrifiant et
b) au moins un composé de formule I.

**14.** Utilisation des composés de formule I selon la revendication 11 en tant qu'additifs dans des matières organiques.

**15.** Procédé pour la préparation de composé de formule générale I selon la revendication 1, dans laquelle Z est -H, caractérisé en ce qu'on fait réagir un composé de formule générale II

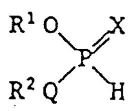

(II),

dans laquelle
X, Q, $R^1$ et $R^2$ ont les significations indiquées dans la revendication 1, avec un composé de formule générale III

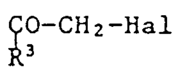

(III),

$R^3$ ayant la signification indiquée également dans la revendication 1 et Hal signifiant I, Br ou Cl, dans une première étape de réaction pour donner un composé de formule générale IV

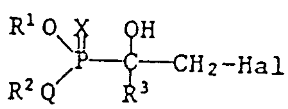

(IV),

X, Q, $R^1$, $R^2$, $R^3$ ayant les significations indiquées dans la revendication 1 et Hal ayant la signification indiquée ci-dessus, et, dans une deuxième étape de réaction, on fait réagir le composé de formule générale IV avec un composé de formule générale V

$[MS]_n$-$R^4$ (V)

ou un composé de formule générale Va

M-S-M (Va)

ou un composé de formule généraleVb

$M-[S]_q-M$ (Vb),

dans laquelle q est un chiffre 2, 3, 4 ou 5,
$R^4$ et n ayant la signification indiquée dans la revendication 1 et M ayant la signification d'un métal alcalin ou bien de -H.

**16.** Procédé selon la revendication 15, caractérisé en ce que la première étape de réaction est réalisée en présence d'un catalyseur basique.